(19) Europäisches Patentamt
European Patent Office
Office européen des brevets

(11) **EP 2 087 323 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(51) Int Cl.:
***G01F 1/58*** *(2006.01)* ***G01N 27/22*** *(2006.01)*
***H01Q 15/00*** *(2006.01)*

(21) Anmeldenummer: **07846291.8**

(22) Anmeldetag: **07.11.2007**

(86) Internationale Anmeldenummer:
**PCT/DE2007/002001**

(87) Internationale Veröffentlichungsnummer:
**WO 2008/055485 (15.05.2008 Gazette 2008/20)**

(54) **VORRICHTUNG UND VERFAHREN ZUR BESTIMMUNG ZUMINDEST EINES PARAMETERS EINES MEDIUMS**

DEVICE AND METHOD FOR DETERMINING AT LEAST ONE PARAMETER OF A MEDIUM

DISPOSITIF ET PROCÉDÉ POUR DÉTERMINER AU MOINS UN PARAMÈTRE D'UN MILIEU

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.11.2006 DE 102006052637**

(43) Veröffentlichungstag der Anmeldung:
**12.08.2009 Patentblatt 2009/33**

(73) Patentinhaber: **Technische Universität Darmstadt 64289 Darmstadt (DE)**

(72) Erfinder:
• **JAKOBY, Rolf**
**61191 Rosbach (DE)**
• **SCHÜSSLER, Martin**
**63768 Hösbach (DE)**
• **PENIRSCHKE, Andreas**
**35745 Herborn (DE)**
• **MAUNE, Holger**
**61476 Kronberg am Taunus (DE)**

(74) Vertreter: **Holzwarth-Rochford, Andreas Boehmert & Boehmert Pettenkoferstrasse 20-22 80336 München (DE)**

(56) Entgegenhaltungen:
**GB-A- 2 214 640**

• ANTHONY LAI ET AL: "Applications of Infinite Wavelength Phenomenon" MICROWAVE CONFERENCE, 2006. 36TH EUROPEAN, IEEE, PI, September 2006 (2006-09), Seiten 937-939, XP031005725 ISBN: 2-9600551-6-0
• GOTO R ET AL: "COMPOSITE RIGHT/LEFT-HANDED TRANSMISSION LINES BASED ON CONDUCTOR-BACKED COPLANAR STRIPS" IEICE TRANSACTIONS ON ELECTRONICS, ELECTRONICS SOCIETY, TOKYO, JP, Bd. E89C, Nr. 9, September 2006 (2006-09), Seiten 1306-1311, XP001542402 ISSN: 0916-8524
• ANDREAS PENIRSCHKE ET AL: "Microwave Sensor for Accurate Material Density Measurements of Gas/Solid flows in Pipelines" MICROWAVE CONFERENCE, 2006. 36TH EUROPEAN, IEEE, PI, September 2006 (2006-09), Seiten 443-446, XP031005596 ISBN: 2-9600551-6-0
• PENIRSCHKE A ET AL: "Novel integrated coaxial line to cylindrical waveguide directive couplers in pipelines for process monitoring applications" MICROWAVE SYMPOSIUM DIGEST, 2005 IEEE MTT-S INTERNATIONAL LONG BEACH, CA, USA 12-17 JUNE 2005, PISCATAWAY, NJ, USA,IEEE, 12. Juni 2005 (2005-06-12), Seiten 1203-1206, XP010844841 ISBN: 0-7803-8846-1
• A. PENIRSCHKE, M. SCHÜSSLER, R. JAKOBY: "New Microwave Flow Sensor based on Left-Handed Transmission Line Resonator" IEEEMICROWAVE SYMPOSIUM 2007, 2. Juli 2007 (2007-07-02), Seiten 393-396, XP002471130

EP 2 087 323 B1

## Beschreibung

Die vorliegende Erfindung betrifft eine Vorrichtung umfassend eine Meßstrecke , die eine Leitungsanordnung mit zumindest zwei entlang der Meßstrecke angeordneten Elementarzellen, die jeweils eine elektrische .Strecke von zumindest einem Eingang zu zumindest einem Ausgang umfassen, aufweist, wobei die Elementarzellen jeweils zumindest ein kapazitives Element umfassen und die Vorrichtung einen Generator zur Erzeugung eines elektrischen und/oder elektromagnetischen Signals umfaßt, wobei das elektrische und/oder elektromagnetische Signal an den Eingang einer ersten Elementarzelle angelegt ist und der Ausgang der ersten Elementarzelle mit dem Eingang einer zweiten Elementarzelle verbunden ist, und das kapazitive Element der jeweiligen Elementarzelle in der elektrischen Strecke der ersten und zweiten Elementarzelle angeordnet ist und jeweils zumindest ein induktives Element die elektrische Strecke der ersten Elementarzelle und der zweiten Elementarzelle mit einer elektrischen Masse verbindet sowie ein Verfahren zur Bestimmung eines Parameters eines Mediums bzw. Materials insbesondere unter Verwendung der erfindungsgemäßen Vorrichtung.

Mikrowellen werden unter anderem dazu eingesetzt, ruhende oder bewegte fluide, liquide oder feste Medien hinsichtlich verschiedener Eigenschaften zu untersuchen. Dazu kann beispielsweise ein Mikrowellensignal durch das Medium hindurchgestrahlt werden. Eine Möglichkeit dazu besteht bei bewegten Medien darin, Mikrowellensignale in einem definierten Abschnitt einer Förderstrecke in das Medium einzukoppeln und am Ende der Meßstrecke wieder aus dem Medium herauszuführen. In diesem Bereich kann dann eine Meßanordnung angeordnet werden. Der Anteil des Mikrowellensignals, der nicht in die gewünschte Richtung abgegeben wird, also insbesondere nicht in gewünschter Weise von der Meßanordnung erfaßt wird, wird als Störsignal bezeichnet. Störsignale entstehen z.B. durch Verluste bei der Koppelung, unerwünschte Reflexionen und dem Signalanteil, der entgegen der gewünschten Ausbreitungsrichtung abstrahlt.

Werden Förderrohre zum Transport eines bewegten Mediums bzw. Fördergutes eingesetzt, sollte die Durchdringung des Fördergutes mit Mikrowellen prinzipiell in Förderrichtung und orthogonal zur Förderrichtung erfolgen. Soll das Mikrowellensignal in Förderrichtung in die Meßstrecke eingebracht und dabei der Materialfluß nicht gestört werden, ergeben sich jedoch Schwierigkeiten bei der Ein- und Auskoppelung des Mikrowellensignals.

Die Bestimmung von Eigenschaften des Mediums mit Hilfe von Mikrowellenstrahlung basiert grundsätzlich auf folgendem Prinzip. Eine Änderung der Materialdichte ruft eine Änderung der effektiven Pennittivität in dem Förderrohr und damit eine Änderung der Amplituden- und Phasenlage des ausgekoppelten Signals hervor. Mit Hilfe der im folgenden später beschriebenen Zusammenhänge zwischen der effektiven Permittivität des Mediums in dem Förderrohr und der Permittivität des konzentrierten Mediums kann durch die Amplitude und die Phasenlage des ausgekoppelten Mikrowellensignals auf Materialeigenschaften des Mediums, beispielsweise die Dichte des Mediums in dem Förderrohr, geschlossen werden.

Eine Vorrichtung zur berührungsfreien Messung der Massenverteilung mit Hilfe von Mikrowellen ist z.B. aus der DE 44 44 248 A1 bekannt. Dabei wird im wesentlichen die Absorption einer Mikrowelle gemessen, die durch Schlitze in einer Rohrwandung das Rohrinnere durchdringt. Die Mikrowellen werden dabei aus einem Hohlraumresonator eingekoppelt und mit Hilfe von Antennen der transmittierte Teil der Mikrowelle gemessen. Da ein Teil der eingespeisten Mikrowelle von einem Material, daß über ein Rohr durch den Meßaufbau geschleust wird, absorbiert wird, läßt sich mit Hilfe der Antennen auf die Art des Materials im Inneren des Rohres zurückschließen.

Ein Verfahren und eine Vorrichtung, die die Ausbreitung von elektromagnetischen Wellen in elektrisch berandeten Strukturen (Hohlleitern) zur Bestimmung der Materialdichten ausnutzt, sind aus der EP 0 717 269 A2 bekannt. Dort wird ein Mikrowellensignal mit Hilfe von Koppellöchern in ein Förderrohr eingebracht und nach einer definierten Wegstrecke wieder aus dem Förderrohr ausgekoppelt. Der Nachteil dieses Verfahrens ist die ungerichtete Ein- und Auskoppelung des Signals. Bedingt durch die Koppelöffnung ist der Wirkungsgrad, das heißt der Anteil des Nutzsignals gegenüber der notwendigen Mikrowellenleistung, nur sehr gering. Des weiteren müssen gepulste Signale zum Einsatz kommen, um außerhalb der Meßstrecke reflektierte Signalanteile in Zeitbereiche zu legen, während denen nicht gemessen wird.

Die US 2006/0066422 A1 offenbart einen Resonator zur drahtlosen Übertragung eines elektromagnetischen Signals, wobei der Resonator zur Signalsendung und zum Signalempfang vorzugsweise in einer Resonanzmode nullter Ordnung betrieben wird.

Eine weitere Meßvorrichtung ist aus der GB 2 214 640 A bekannt. Dieses Dokument offenbart ein System zur tomographischen Abbildung der Verteilung von fließenden Materialien. Dabei sind Metallplatten auf einem elektrisch nicht leitenden Rohrstück verteilt aufgebracht. Mit Hilfe einer aufwendigen Meßwertaufnahme und Auswerteschaltung werden die Kapazitätswerte zwischen allen möglichen Paaren der Metallplatten gemessen bzw. bestimmt. Bedingt durch die relativ geringen Änderungen der Konzentration des Mediums zwischen den jeweiligen Metallplattenpaaren und damit der zu messenden relativen Permittivität, müssen bei diesem Verfahren Kapazitätswerte im Bereich von wenigen femto-Farat gemessen werden. Die Auflösung solch geringer Kapazitäten ist nur durch hochsensible, temperaturstabilisierte Auswerteschaltungen möglich, die zum einen sehr kostenintensiv sind und gleichzeitig an der Auflösungsgrenze zur Zeit möglicher differenzieller Kapazitätsmeßgeräte liegt. Ein weiterer Nachteil dieses Stands der Technik ist, daß eine Erhöhung der Kapazität und damit der Sensibilität dieses Verfahrens nur durch die Verringerung des Rohrdurchmessers oder durch die Vergrößerung der Fläche der Metallplatten möglich ist.

Die aus dem Stand der Technik bekannten Vorrichtungen erlauben ferner nicht die Bestimmung einer Geschwindigkeit eines Mediums in einer Meßstrecke oder die quantitative Bestimmung eines Massendurchflusses des Mediums durch die Meßstrecke. Hierzu werden zusätzliche mechanische, akustische bzw. elektrostatische Sensoren eingesetzt, um einen Maßenfluß von Schüttgut oder einer Flüssigkeit durch eine Leitung zu bestimmen.

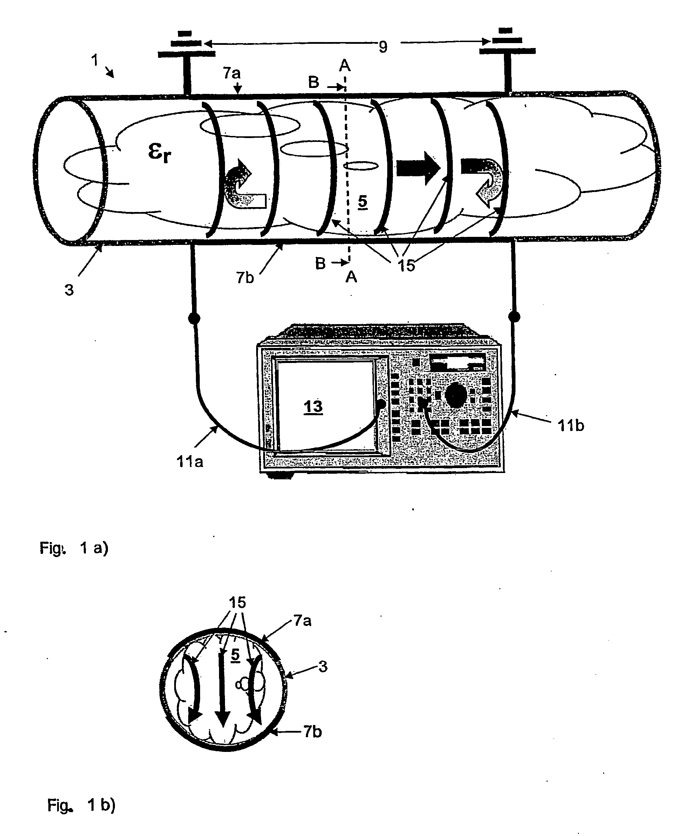

Im folgenden wird nun anhand der Figuren 1a) bis 8 das Meßprinzip von aus dem Stand der Technik bekannten Meßsystemen erläutert.

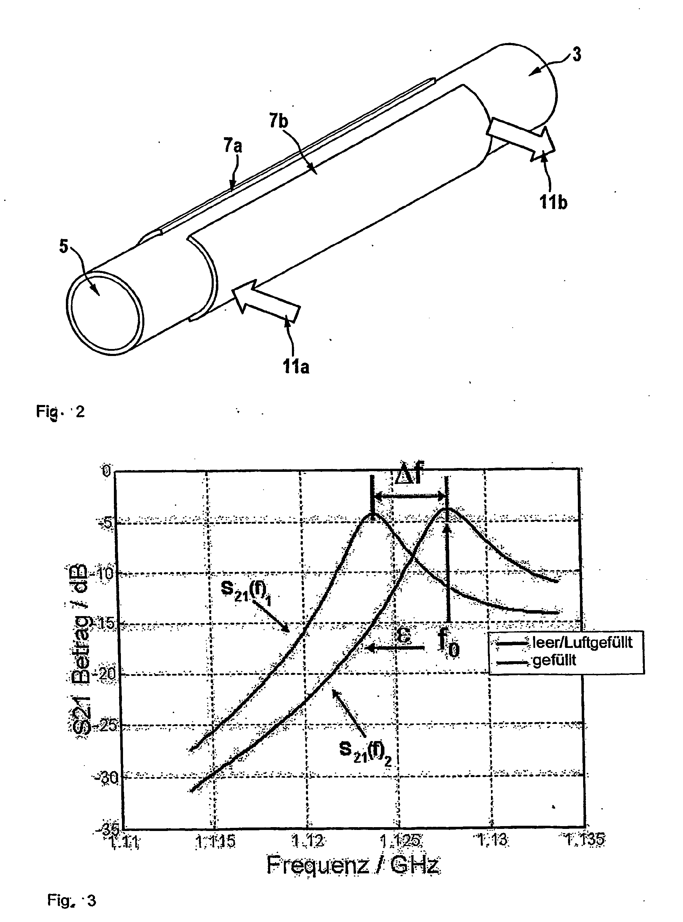

In den Figuren 1a), 1b) und 2 ist der prinzipielle Aufbau einer aus dem Stand der Technik, wie der GB 2 214 640 A, bekannten Vorrichtung zur Bestimmung eines Parameters eines Mediums in Form eines Meßaufbaus bzw. Meßsystems 1, welches als Leitungsresonator zur Messung der Dielektrizität $\varepsilon_r$ eines unbekannten Materials, beziehungsweise zur Bestimmung der Materialdichte eines bekannten Materials realisiert ist, dargestellt. Dabei zeigt Figur 1a) eine Längsschnittsansicht, Figur 1a) eine Schnittansicht entlang der Achse A-A aus Richtung B in Figur 1b) und Figur 2 eine perspektivische Ansicht eines Teils des Meßsystems 1. Das Meßsystem 1 umfaßt, wie insbesondere Figur 1a) zu entnehmen ist, eine Förderleitung bzw. Leitungseinrichtung in Form eines Rohres 3. In dem Rohr 3 befindet sich ein zu untersuchendes Material bzw. Medium 5 z.B. in Form eines Fluids oder eines Schüttguts, welches insbesondere durch das Rohr 3 strömt. Das Medium 5 weist eine (relative) Dielektrizitätskonstante $\varepsilon_r$ auf. Im Bereich gegenüberliegender Wandungen des Rohres 3 sind Metallplatten, die als Kondensatorplatten 7a, 7b dienen, angeordnet, insbesondere auf die Wandungen aufgebracht. Die Kondensatorplatte 7a ist mit einer Masse 9 verbunden, während die Kondensatorplatte 7b mit zwei Leitungen 11a, 11b, insbesondere in Form von Koaxialkabeln verbunden ist. Mit Hilfe einer Meßschaltung in Form eines Netzwerkanalysators 13 wird durch die Leitung 11 a durch Zuführung einer Wechselspannung mit einer Frequenz f ein elektromagnetisches Signal in die Kondensatoranordnung 7a, 7b eingespeist. Nachdem dieses Signal die Anordnung entlang des Rohres 3 passiert hat, wird ein Ausgangssignal über die Leitung 11b wieder dem Netzwerkanalysator 13 zugeführt. In der Resonatorstruktur, die durch die beiden Kondensatorplatten 7a, 7b und den Zwischenraum (das Innere des Rohrs 3) gebildet wird, kann so eine elektromagnetische Schwingung erzeugt werden, deren Resonanzfrequenz von der geometrischen Abmessung des Resonators und der Dielektrizität $\varepsilon$ und Permeabilität $\mu$ des Mediums 5 im Rohr 3 abhängt. Das durch die Kondensatorplatten 7a, 7b erzeugte elektrische Feld 15 wird nämlich von den Eigenschaften des eingebrachten Mediums 5 beeinflußt.

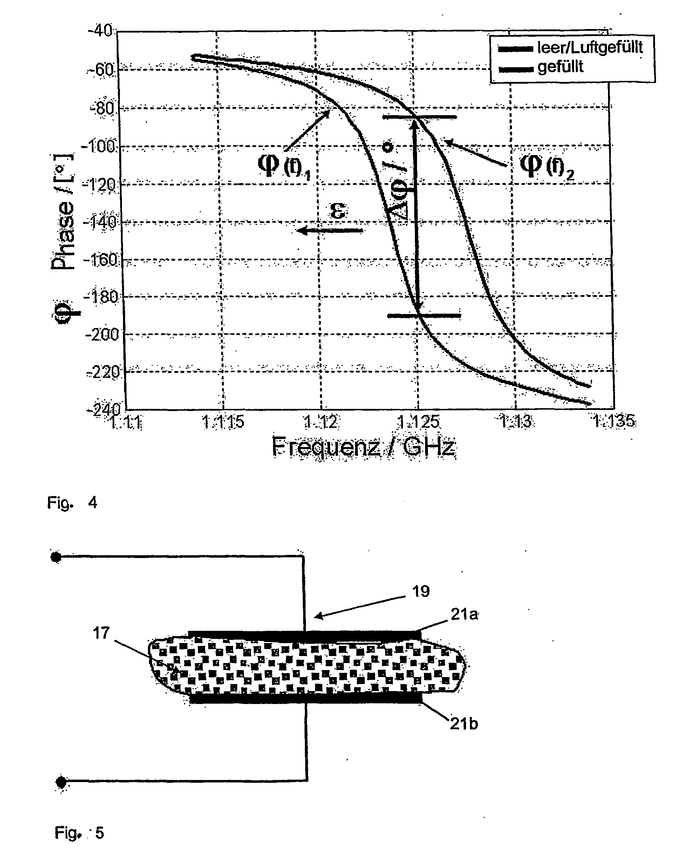

Figur 3 zeigt in einem Diagramm den Betrag eines Signals $S_{21}$ eines gefüllten und eines leeren bzw. luftgefüllten Leitungsresonators gemäß den Figuren 1a) bis 2. Dabei zeigt die Funktion $S_{21}(f)_1$ den Signalverlauf für einen mit dem Medium 5 gefüllten Leitungsresonator und $S_{21}(f)_2$ den Signalverlauf für einen leeren bzw. luftgefüllten Leitungsresonator nach den Figuren 1a), 1b) und 2. Wird das Messrohr 3 von einem Medium 5 mit einer Dielektrizitätskonstante $\varepsilon_r > 1$ durchflossen bzw. mit diesem Medium 5 gefüllt, so verringert sich die Resonanzfrequenz $f_0$ antiproportional. Die ebenfalls mit $\varepsilon_r$ korrelierende Phasenverschiebung des transmittierten Signals $S_{21}$ ist in Figur 4 dargestellt. Bei einer geeigneten festen Frequenz (in Figur 4 bei 1,125 GHz) ist dabei ein besonders starker Unterschied in der Phasendifferenz $\Delta\varphi$ zu erkennen. Aus der gemessenen Phasendifferenz $\Delta\varphi$ zwischen der Funktion $\varphi(f)_1$ des mit dem Medium 5 gefüllten Leitungsresonators und der Funktion $\varphi(f)_2$ des leeren bzw, luftgefüllten Leitungsresonators läßt sich demzufolge auf $\varepsilon_r$ des Mediums 5 zurückschließen. Ist die Dielektrizitätskonstante $\varepsilon_r$ des Mediums 5 bekannt, kann statt dessen auf die Materialverteilung, bzw. die Verteilung des Mediums 5 im Innern des Rohrs 3 zurückgeschlossen werden.

Im folgenden werden die theoretischen Grundlagen der verwendeten Meßmethode kurz erläutert.

Grundsätzlich kann die relative Permittivität bzw. Dielektrizität $\varepsilon_r$ von Materialien am einfachsten durch das Einbringen einer Materialprobe 17 in einen Kondensatoraufbau 19, der, wie in Figur 5 dargestellt ist, grundsätzlich zwei sich gegenüberliegende Kondensatorplatten 21a, 21b aufweist zwischen denen die Materialprobe 17 angeordnet wird, bestimmt werden. Aus der relativen Kapazitätsänderung ($\Delta C/C$) läßt sich nach Formel (1) die Permittivität $\varepsilon_r$ der eingebrachten Materialprobe 17 direkt bestimmen, wenn eine Referenzkapazität $C_R$ zuvor für einen leeren bzw. luftgefüllten Kondensatoraufbau 19 mit einer Permittivität von $\varepsilon_r=1$ gemessen wurde. Durch die Messung der Kapazität C des mit der zu untersuchenden Materialprobe 17 gefüllten Kondensatoraufbaus 19 kann dann die Kapazitätsänderung ($\Delta C/C = (C-CR)/C$) bestimmt werden.

$$\varepsilon_r = \frac{1}{\varepsilon_0} \cdot \frac{\Delta C}{C} \qquad\qquad (1)$$

Für sehr kleine relative Kapazitätsänderungen ($\Delta C/C$), können aufgrund von Rauschen oder anderen Effekten Probleme bei der Auswertung der Signale auftreten. Zudem kann der Kondensatoraufbau 19 mit der Materialprobe 17 nicht mehr als ein diskretes Bauelement betrachtet werden, wenn die Frequenz, bei der die Kapazitätsmessung durchgeführt wird, zu groß ist. Deswegen müssen Hochfrequenztechniken angewendet werden, um eine sinnvolle Auswertung zu ermöglichen.

Neben den kapazitiven Anteilen eines Leitungsresonators beeinflußt auch die Induktivität L dessen Eigenschaften. Die Induktivität wird wesentlich von der (relativen) Permeabilität $\mu_r$ eines in den Leitungsresonator eingebrachten Materials beeinflußt.

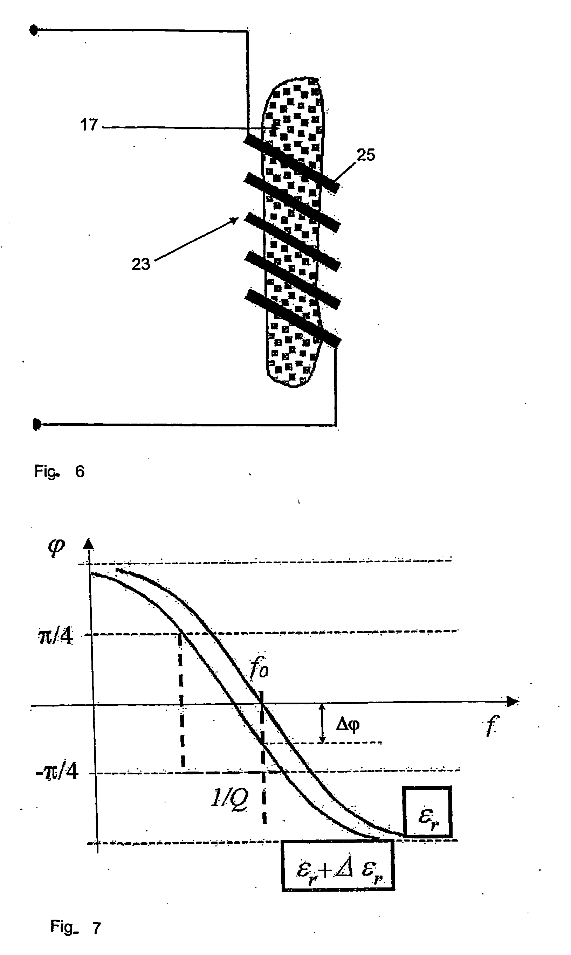

Die Permeabilität $\mu_r$ des Materials kann, wie in Figur 6 dargestellt, durch Einbringen der Materialprobe 17 in einen Spulenaufbau 23 umfassend Windungen 25, also mit Hilfe der Induktivität L bestimmt werden. Analog zum Kondensatoraufbau 19 wird die Permeabilität $\mu_r$ durch die relative Induktivitätsänderung ($\Delta L/L$) nach Formel (2) bestimmt.

$$\mu_r = \frac{1}{\mu_0} \cdot \frac{\Delta L}{L} \qquad\qquad (2)$$

Um sehr kleine Permittivitätsänderungen $\Delta\varepsilon_r$ messen zu können, kann mit dem Kondensatoraufbau 19 aus Figur 5 durch Hinzufügen eines externen Spulenaufbaus 23 der Figur 6 ein Resonanzkreis aufgebaut werden. Die Änderungen der Permittivität bewirken eine Änderung der Kapazität C nach Formel (1) und führen so zu einer Verschiebung der Resonanzfrequenz f. Wird bei konstanter Frequenz $f_0$ gemessen, ist die auswertbare Information, die durch die Verstimmung der Resonanzfrequenz entsteht, der veränderte Phasenwinkel $\varphi$ des transmittierten Signals.

Näherungsweise gilt für die Phasen(winkel)änderung $\Delta\varphi$, wie sie in Figur 7 grafisch dargestellt ist, in einem so aufgebauten Resonator :

$$\Delta\varphi = \frac{\pi/2}{1/Q} \cdot \frac{\Delta f}{f_0} = 180° \cdot Q \cdot \frac{\Delta\varepsilon_r}{2} \qquad\qquad (3)$$

wobei Q die Güte des Resonators ist und $\Delta\varepsilon_r/\varepsilon_r \ll 1$ angenommen wird. Der leere bzw. luftgefüllte Meßkondensatoraufbau 19 sei dabei mit einer Materialprobe 17 mit der Permittivität $\varepsilon_r$ gefüllt. Im Fall von Luft ist $\varepsilon_r$ näherungsweise gleich 1. Die Steigung von $\varphi(f)$ bei $f_0$ beträgt

$$\frac{\pi/2}{1/Q} \qquad\qquad (4)$$

Die Güte Q eines L-C-Schwingkreises, der an eine Auswerteelektronik bzw. Meßschaltung, wie zum Beispiel ein Netzwerkanalysator 13 (siehe Figur 1b)) mit dem Innenwiderstand $R_0$ angeschlossen ist, ergibt sich aus Formel (5) zu:

$$Q = \frac{\sqrt{L/C}}{R_0} \qquad\qquad (5)$$

Hierbei wird davon ausgegangen, daß der externe pulenaufbau 23 keine Verluste aufweist. Sind die Verluste in dem Spulenaufbau 23 zu hoch, wird die Resorianzkreisgüte und damit auch die Meßgröße $\Delta\varphi$ reduziert.

analog kann der L-C-Schwingkreis ebenso durch Variation der Induktivität verstimmt werden. Der Kondensatoraufbau 19 wird hierbei durch einen Kondensator mit festere Kapazität und die Spule durch einen Meßspulenaufbau 23 ersetzt, das heißt, daß der Spulenaufbau 23 dazu geeignet ist eine Materialprobe 1 7 zumindest vorübergehend aufzunehmen.

Für die Phasenänderung gilt dann näherungsweise, wie sich auch aus der grafischen Darstellung in Figur 7 ergibt:

$$\Delta\varphi = 180° \cdot Q \cdot \frac{1}{2 \cdot \Delta\mu_r} \qquad\qquad (6)$$

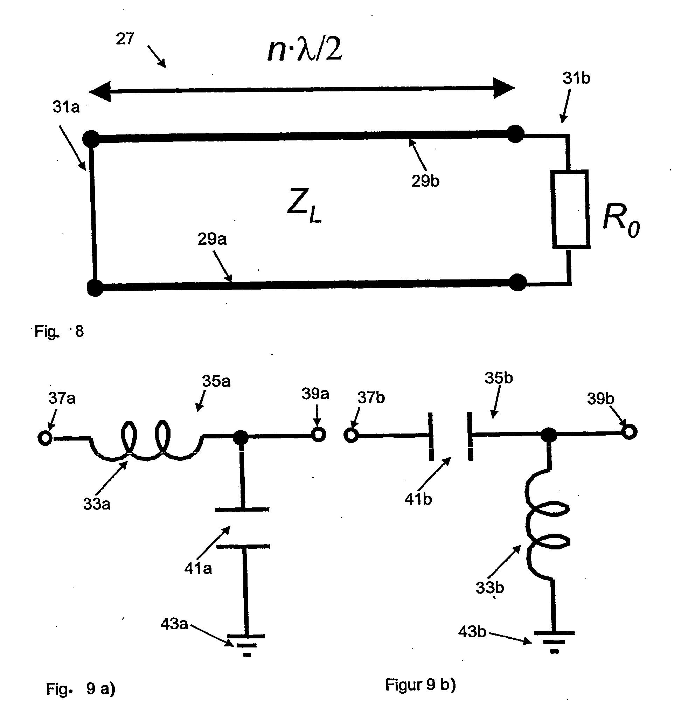

Zur Messung der Permitivität können neben diskreten Kondensatoraufbauten 19, die gegebenenfalls mit einem externen Spulenaufbau 23 in Resonanz betrieben werden, auch Leitungsresonatoren verwendet werden. Ein solcher Leitungsresonator 27 ist schematisch in Figur 8 skizziert. Der Leitungsresonator 27 umfaßt im wesentlichen zwei im wesentlichen parallel zueinander angeordnete Leitungen 29a, 29b. Diese können beispielsweise als Koaxialleitungen aufgebaut sein, wobei beispielsweise die Leitung 29a ein Innenleiter und die Leitung 29b eine die Innenleitung koaxial umgebende Außenleitung sein kann. Die Leitungen 29a, 29b sind an einem ersten Ende 31 a kurzgeschlossen, während sie an einem zweiten Ende 3 1 b an eine Meßschaltung mit einem Innenwiderstand $R_0$ angeschlossen sind. Innerhalb des Leitungsresonators 27 können sich harmonische elektromagnetische Schwingungen ausbilden. Der Leitungsresonator 27 hat in guter Näherung die Güte

$$Q \approx \frac{1}{\sqrt{2}} \cdot \left( \frac{R_0}{Z_L} + \frac{Z_L}{R_0} \right) \cdot n. \qquad\qquad (7)$$

Dabei ist $Z_L$ die Leitungswellenimpedanz des Leitungsresonators 27 und n die Ordnung der in dem Leitungsresonator 27 ausgebildeten Schwingungen. Somit weist der Leitungsresonator 27 eine Länge n*λ/2 mit λ der Wellenlänge der in dem Leitungsresonator ausgebildeten Schwingung auf. Wie sich aus Formel (3) ergibt, kann ein maximales Ausgangssignal $\Delta\varphi$ durch folgende Maßnahmen erreicht werden:

1. Der Resonator wird bei einer Oberschwingung mit möglichst hoher Ordnung n betrieben, wodurch sich die Resonanzfrequenz bei konventionellen Resonatoren erhöht.

2. Die Belastung des Resonators wird verringert und damit eine Vergrößerung der Güte Q bewirkt. Bei Hochfrequenzsystemen ist die Bezugsimpedanz in der Regel 50 Ω. Die Belastung des Resonators kann zum Beispiel durch eine schwache kapazitive oder induktive Ankopplung reduziert werden.

3. Die Leitungswellenimpedanz $Z_L$ wird optimiert.

Wird ein Leitungsresonator in der in den Figuren 1a), 1b) und 2 dargestellten Weise aufgebaut, entsteht mit der Forderung nach Minimierung von Raumbedarf bei gleichzeitiger Maximierung der Güte Q ein Zielkonflikt. So würde man zum Beispiel gerne eine Leitung bei möglichst niedriger Frequenz mit einer Resonanz hoher Ordnung n betreiben, um die Güte Q des Resonators zu erhöhen. Eine Verringerung der Frequenz kann aber nur durch eine Vergrößerung der Abmessungen des Resonators erreicht werden, was dem Wunsch nach möglichst geringer Größe der Vorrichtung widerspricht.

Ferner ist bei den aus dem Stand der Technik bekannten Resonatormeßanordnungen ein hoher Justageaufwand vor Durchführung einer Messung notwendig. So müssen bei der Verwendung von Richtkopplern zu Einkopplung des Mikrowellensignals diese auf einen vorhandenen Rohrdurchmesser eines Hohlleiters abgestimmt werden. Weiterhin wird bei solchen Meßanordnungen die Messgüte durch Reflexionen außerhalb der Meßstrecke degradiert. Schließlich führen die an sich gewünschten hohen Arbeitsfrequenzen, insbesondere in hohen GHz-Bereichen, zu erhöhten Kosten für die Mikrowellenquelle sowie die notwendige Auswerteelektronik, die mit der Erhöhung der Arbeitsfrequenz steigen.

Weiterhin ist aus den Artikeln "Applictaions of Infinite Wavelenghts Phenomenon", Proceedings of the 36th European Conference, September 2006, XP 31005725 A und "Composite Right/Left-Handed Transmission Lines Based on Conductor-Baded Coplanar Strips", IEICE Trans. Electron., Vol E89-C, No. 9, September 2006, XP 1542402 A, die Verwendung von gattungsgemäßen Vorrichtungen in Form sogenannter LHRH-Leitungen als Antennen-Elemente bekannt.

Der vorliegenden Erfindung liegt die Aufgabe zugrunde, die gattungsgemäße Vorrichtung derart weiterzuentwickeln, daß die Nachteile des Stands der Technik überwunden werden, insbesondere eine Vorrichtung geliefert wird, die die Bestimmung eines Parameters eines Mediums mit einer vergleichsweise hohen Sensibilität und Auflösungsgrenze ermöglicht und gleichzeitig eine geringe Komplexität sowie hohe Kompaktheit aufweist, die Bestimmung einer Geschwindigkeit und/oder eines Massenflusses eines Mediums durch eine Meßstrecke ermöglicht, und bei vergleichsweise geringen Signalfrequenzen betrieben werden kann und somit kostengünstig ist. Ferner soll ein gegenüber dem Stand der Technik verbessertes Verfahren zur Bestimmung zumindest eines Parameters eines Mediums bereitgestellt werden.

Die die Vorrichtung betreffende Aufgabe wird dadurch gelöst, daß die Vorrichtung zur Bestimmung zumindest eines Parameters eines Mediums eingerichtet ist und gekennzeichnet ist durch Mittel zum Einbringen des Mediums in die Meßstrecke derart, dass die elektrischen Eigenschaften des kapazitiven Elements durch das Medium veränderbar sind und mittels der Meßstrecke durch Einleitung des elektrischen und/oder elektromagnetischen Signals in die Meßstrecke bereichsweise ein elektromagnetisches Feld in das Medium eingekoppelt und/oder ausgekoppelt wird, und die Vorrichtung zur Bestimmung des Parameters des Mediums eine Auswerteeinrichtung zur Analyse eines Ausgangssignals der Meßstrecke aufweist.

Dabei kann insbesondere vorgesehen sein, daß eine Abmessung, insbesondere eine Abmessung entlang der Meßstrecke, zumindest einer Elementarzelle, vorzugsweise aller Elementarzellen, zumindest bereichsweise kleiner als eine Wellenlänge des elektrischen und/oder elektromagnetischen Signals und/oder des elektromagnetischen Felds ist.

Dabei kann vorgesehen sein, daß die Auswerteeinrichtung derart eingerichtet ist, daß als Parameter des Mediums zumindest eine relative Dielektrizitätskonstante, eine relative Permeabilitätskonstante, eine Art des Mediums, eine Dichteverteilung und/oder die Dichte des Mediums, eine Verteilung des Mediums in der Meßstrecke, eine Geschwindigkeit des Mediums in der Meßstrecke, ein Mengendurchfluß und/oder Massendurchfluß des Mediums durch die Meßstrecke und/oder ein Phasenzustand des Mediums, wie flüssig, fest und/oder gasförmig, bestimmbar ist bzw. sind.

Weiterhin wird mit der Erfindung vorgeschlagen, daß die Vorrichtung derart ausgebildet ist, daß als Medium ein fluides, insbesondere flüssiges und/oder gasförmiges, und/oder festes, insbesondere pulverförmiges und/oder körniges, Medium und/oder ein Medium umfassend zwei Phasen, wie flüssig-gasförmig, flüssig-fest, flüssig-flüssig, gasförmig-fest, fest-fest, gasförmig-gasförmig und/oder flüssig-gasförmig-fest in die Meßstrecke einbringbar ist.

Bei den vorgenannten Ausführungsformen wird mit der Erfindung ferner vorgeschlagen, daß das Medium relativ zu der Leitungsanordnung bewegbar ist.

Besonders bevorzugt ist, daß die Meßstrecke zumindest eine Leitungseinrichtung zur Leitung des Mediums, wie ein Rohr, eine Rinne und/oder ein Förderband umfaßt, wobei die Leitungsanordnung zumindest bereichsweise derartig im Bereich der Leitungseinrichtung, insbesondere zumindest einer Oberfläche derselben, anordbar ist, daß in das Medium zumindest bereichsweise das elektromagnetische Feld einkoppelbar ist.

Bei der vorgenannten Alternative wird mit der Erfindung bevorzugt, daß die Leitungseinrichtung zumindest bereiehsweise einen runden, ovalen, elliptischen, dreieckigen, quadratischen, rechteckigen und/oder mehreckigen Querschnitt und/oder Abschnitte dieser Querschnitte, wie ein Kreissegment und/oder Ellipsensegment, aufweist.

Die beiden vorgenannten Ausführungsformen können dadurch gekennzeichnet sein, daß die Leitungseinrichtung zumindest bereichsweise ein dielektrisches und diamagnetisches Material, insbesondere Glas, einen Kunststoff, wie Plastik, Keramik und/oder ein elastisches und/oder plastisch verformbares Material umfaßt.

Weiterhin wird dabei mit der Erfindung eine Vorrichtung geliefert bei der die Vorrichtung derart ausgebildet ist, daß das Medium in der Leitungseinrichtung anordbar ist und/oder durch die Leitungseinrichtung leitbar ist.

Bei dieser Ausführungsform sieht die Erfindung vor, eine Fördereinrichtung, wie eine hydraulische, pneumatische, magnetische und/oder die Gravitation ausnutzende Pumpeinrichtung, mittels der das Medium durch die Leitungseinrichtung leitbar ist.

Die erfindungsgemäße Vorrichtung, kann ferner dadurch ausgezeichnet sein, daß die Leitungseinrichtung relativ zu der Leitungsanordnung bewegbar ist.

Ferner sieht eine vorteilhafte Ausführungsform der Erfindung vor, daß die Vorrichtung derart ausgebildet ist, daß als elektrisches und/oder elektromagnetisches Signal zumindest ein Hochfrequenzsignal, insbesondere ein Mikrowellensignal und/oder Millimeterwellensignal in die Meßstrecke einleitbar ist und/oder in das Medium hochfrequente elektromagnetische Strahlung, insbesondere Mikrowellenstrahlung und/oder Millimeterwellenstrahlung, einkoppelbar ist.

Bei dieser Ausführungsform wird mit der Erfindung ferner vorgeschlagen, daß zumindest ein Ausgang des Generators mit zumindest einem Eingang der elektrischen Strecke der ersten Elementarzelle verbunden ist, vorzugsweise mittels zumindest eines Koaxialkabels, wobei vorzugsweise zumindest ein Leiter des Koaxialkabels, insbesondere zumindest ein Außenleiter, mit der elektrischen Masse, zumindest indirekt, verbunden ist.

Bevorzugte Ausführungsformen der Erfindung sehen vor, daß die Leitungsanordnung zumindest ein kapazitives Element umfassend zumindest ein erstes Ladungselement und zumindest ein zweites Ladungselement, wie in Form zumindest eines Kondensatorplattenpaares, umfaßt, wobei vorzugsweise das erste und/oder das zweite Ladungselement, insbesondere zumindest eine der Kondensatorplatten, zumindest bereichsweise auf zumindest einer dem Medium abgewandten Seite, insbesondere auf einer, vorzugsweise zumindest bereichsweise gekrümmten und/oder nicht planaren, Oberfläche der Leitungseinrichtung anordbar ist bzw. sind und/oder zumindest bereichsweise ein elektrisch leitendes Material, wie Kupfer, Metall, Stahl, Silber, zumindest ein Halbleitermaterial und/oder zumindest ein Polymermaterial, umfaßt bzw. umfassen.

Weiterhin sieht die Erfindung dabei vor, daß die Vorrichtung derart ausgebildet ist, daß das elektromagnetische Feld zwischen dem ersten und dem zweiten Ladungselement erzeugt wird, wobei insbesondere das elektromagnetische Feld zwischen Ladungselementen unterschiedlicher Elementarzellen erzeugt wird.

Insbesondere bei den vorgenannten beiden Ausführungsformen wird mit der Erfindung eine Vorrichtung geliefert, die dadurch gekennzeichnet ist, daß die Vorrichtung derart ausgebildet ist, daß das Medium zwischen dem ersten und zweiten Ladungselement angeordnet wird, vorzugsweise das erste und das zweite Ladungselement auf sich gegenüberliegenden Seiten der Leitungseinrichtung angeordnet sind.

Dabei ist besonders bevorzugt, daß das erste und das zweite Ladungselement zumindest bereichsweise sich gegenüberliegend, insbesondere parallel und/oder planparallel, zueinander angeordnet sind.

Bevorzugte Ausführungsformen der Erfindung sehen vor, daß das erste und zweite Ladungselement, insbesondere entlang zumindest einer Längsachse der Leitungseinrichtung, versetzt zueinander angeordnet sind.

Weiterhin liefert die Erfindung eine Vorrichtung, die so ausgeführt ist, daß die Leitungsanordnung zumindest eine dritte Elementarzelle umfaßt, wobei das kapazitive Element der dritten Elementarzelle in der elektrischen Strecke der dritten Elementarzelle angeordnet ist, zumindest ein induktives Element die elektrische Strecke der dritten Elementarzelle mit der elektrischen Masse verbindet und/oder zumindest ein Eingang der elektrischen Strecke der dritten Elementarzelle mit zumindest einem Ausgang der elektrischen Strecke der ersten Elementarzelle verbunden ist und/oder zumindest ein Ausgang der elektrischen Strecke der dritten Elementarzelle mit zumindest einem Eingang der elektrischen Strecke der zweiten Elementarzelle verbunden ist.

Bei dieser Vorrichtung kann vorgesehen sein, daß die Vorrichtung eine Vielzahl von dritten Elementarzellen umfaßt, wobei insbesondere ein Ausgang der elektrischen Strecke einer ersten dritten Elementarzelle mit einem Eingang der elektrischen Strecke zumindest einer zweiten dritten Elementarzelle verbunden ist.

Dabei ist besonders bevorzugt, daß zumindest zwei erste, zweite und/oder dritte Elementarzellen und/oder Kombinationen dieser Elementarzellen periodisch zueinander angeordnet sind.

Bei dieser Ausführungsform ist ferner bevorzugt, daß zumindest ein Eingang der Auswerte-einrichtung mit zumindest einem Ausgang der elektrischen Strecke der zweiten Elementarzelle und/oder zumindest einem Ausgang des Generators verbunden ist, insbesondere mittels zumindest eines Koaxialkabels, wobei vorzugsweise zumindest ein Leiter des Koaxialkabels, insbesondere zumindest ein. Außenleiter, mit der elektrischen Masse, zumindest indirekt, verbunden ist.

Weiterhin wird mit der Erfindung eine Vorrichtung geliefert, die dadurch gekennzeichnet ist, daß zumindest ein Eingang der Auswerteeinrichtung mit dem Eingang der elektrischen Strecke der ersten Elementarzelle verbunden ist, insbesondere mittels zumindest eines Koaxialkabels, wobei vorzugsweise zumindest ein Leiter des Koaxialkabels, insbesondere zumindest ein Außenleiter, mit der elektrischen Masse, zumindest indirekt, verbunden ist, und/oder der Ausgang der elektrischen Strecke der zweiten Elementarzelle mit der elektrischen Masse verbunden ist.

Ferner bevorzugt ist, daß die Auswerteeinrichtung ein an zumindest einem Ausgang des Generators und/oder an einem Eingang und/oder einem Ausgang der elektrischen Strecke einer. Elementarzelle, insbesondere dem Eingang der elektrischen Strecke der ersten Elementarzelle, anliegendes elektrisches und/oder elektromagnetisches Eingangssignal mit einem nach einem zumindest teilweise Durchlaufen der Leitungsanordnung an einem Ausgang und/oder an einem Eingang zumindest einer Elementarzelle, insbesondere dem Ausgang der elektrischen Strecke der zweiten Elementarzelle und/oder dem Eingang der elektrischen Strecke der ersten Elementarzelle, anliegenden elektrischen und/oder elektromagnetischen Ausgangssignal vergleicht.

Bei dieser Vorrichtung wird ferner mit der Erfindung geliefert, daß die Auswerteeinrichtung derart eingerichtet ist, daß zumindest eine Amplitude, insbesondere ein Betrag, zumindest eine Phase und/oder zumindest ein Phasenwinkel, des zumindest einen elektrischen und/oder elektromagnetischen Eingangssignals und/oder des zumindest einen elektrischen und/oder elektromagnetischen Ausgangssignals erfaßbar ist bzw. sind.

Die Erfindung sieht für die Vorrichtung auch vor, daß die Auswerteeinrichtung derart eingerichtet ist, daß zumindest eine Phasenänderung, insbesondere Phasenwinkeländerung, vorzugsweise zwischen Spannung und Strom, zwischen dem zumindest einen elektrischen und/oder elektromagnetischen Eingangssignal und/oder dem zumindest einen elektrischen und/oder elektromagnetischen Ausgangssignal erfaßbar ist bzw. sind.

Eine weitere alternative Ausführungsform der Erfindung ist zeichnet sich dadurch aus, daß die Auswerteinrichtung zumindest eine Prozessoreinrichtung, wie einen Mikroprozessor, und/oder zumindest eine visuelle und/oder akustische Ausgabeeinrichtung, insbesondere zur Ausgabe des bestimmten Parameters des Mediums umfaßt.

Hierbei kann insbesondere vorgesehen sein, daß die Auswerteeinrichtung zumindest eine erste Auswerteeinheit zur Bestimmung eines ersten Parameters des Mediums, wie der Dichte des Mediums, und zumindest eine zweite Auswerteeinheit zur Bestimmung eines zweiten Parameters des Mediums, wie einer Geschwindigkeit des Mediums, umfaßt.

Mit der Erfindung wird für diese Ausführungsform vorgeschlagen, daß die Vorrichtung gekennzeichnet ist durch zumindest eine von der Auswerteeinrichtung umfaßte dritte Auswerteeinheit zur Bestimmung eines dritten Parameters des Mediums, wie dem Mengendurchfluß und/oder Massendurchfluß des Mediums durch die Meßstrecke, insbesondere basierend auf dem ersten und dem zweiten Parameter des Mediums.

Bei den beiden zuvor genannten Ausführungsformen wird ferner vorgeschlagen zumindest eine von der Auswerteeinrichtung umfaßte Transformationseinheit, wobei mittels der Transformationseinheit das elektrische und/oder elektromagnetische Ausgangssignal der Meßstrecke und/oder zumindest ein durch einen Vergleich des, insbesondere angepaßten, wie phasenverschobenen, elektrischen und/oder elektromagnetischen Eingangssignals der Meßstrecke mit dem elektrischen und/oder elektromagnetischen Ausgangssignal der Meßstrecke bestimmtes Vergleichssignal transformierbar, insbesondere fouriertransformierbar, ist, wobei insbesondere die erste Auswerteeinheit und/oder die zweite Auswerteeinheit mit der Transformationseinheit in Wirkverbindung steht bzw. stehen, vorzugsweise die erste Auswerteeinheit und/oder die zweite Auswerteeinheit über die Transformationseinheit mit der Meßstrecke verbindbar ist bzw. sind.

Die Erfindung sieht ferner vor, daß zumindest ein Eingang einer Elementarzelle und zumindest ein Ausgang zumindest einer weiteren Elementarzelle direkt miteinander verbunden sind.

Ferner ist bevorzugt, daß das Eingangssignal mittels zumindest einem Eingang und/oder zumindest einem Ausgang zumindest einer Elementarzelle einkoppelbar ist und das Ausgangs-signal an dem gleichen Eingang und/oder Ausgang auskoppelbar ist.

Weiterhin ist bevorzugt, daß zumindest ein induktives Element zumindest einer ersten, zumindest einer zweiten und/oder zumindest einer dritten Elementarzelle zumindest einen Lei ter, wie einen Draht und/oder zumindest eine Spule, umfaßt.

Schließlich schlägt die Erfindung für die Vorrichtung vor, daß die Elementarzellen entlang zumindest einer Längsrichtung und/oder zumindest entlang einer radialen Richtung der Leitungseinrichtung angeordnet sind.

Die das Verfahren betreffende Aufgabe wird gelöst durch ein Verfahren zur Bestimmung zumindest eines Parameters eines Mediums, insbesondere unter Verwendung einer erfindungsgemäßen Vorrichtung, wobei der Parameter basierend auf zumindest einer Veränderung zumindest einer elektrischen Eigenschaft eines mit dem Medium wechselwirkenden kapazitiven Elementes zumindest einer Meßstrecke bestimmt wird, wobei innerhalb der Meßstrecke zumindest eine harmonische elektromagnetische Schwingung nullter Ordnung und/oder mit negativer Ordnung selektiert bzw. erzeugt wird indem der Meßstrecke ein hochfrequentes Eingangssignal zugeführt wird und zumindest eine Amplitude, zumindest eine Phasenwinkeländerung, und/oder zumindest ein Phasenwinkel, der Schwingung nach Durchlaufen der Meßstrecke bestimmt wird, wobei basierend auf der Amplitude und/oder dem Phasenwinkel der Parameter des Mediums bestimmt wird.

Ein erfindungsgemäßes Verfahren kann ferner dadurch verbessert werden, daß das Eingangssignal einer Leitungsanordnung umfassend zumindest eine Reihenschaltung von zumindest zwei Elementarzellen jeweils umfassend zumindest ein kapazitives Element und zumindest ein induktives Element, wobei die kapazitiven Elemente in Reihe geschaltet sind und die induktiven Elemente die kapazitiven Elemente mit einer elektrischen Masse verbinden, zugeführt wird.

Auch schlägt die Erfindung für das Verfahren vor, daß ein Betrag einer Amplitude und/oder ein Phasenwinkel zwischen Strom und Spannung der Schwingung bestimmt wird und/oder der Parameter des Mediums durch Vergleich, insbesondere zeitabhängigen Vergleich, eines, insbesondere angepaßten, wie phasenverschobenen, Ein- und Ausgangssignals der Meßstrecke und/oder durch einen Vergleich, insbesondere zeitabhängigen Vergleich, zumindest einer elektromagnetischen Schwingung ohne Einfluß des Mediums auf die Meßstrecke und zumindest einer elektromagnetischen Schwingung mit dem Einfluß des Mediums auf die Meßstrecke, bestimmt wird.

Auch wird mit der Erfindung vorgeschlagen als Medium zumindest ein Staub, insbesondere pneumatisch gefördert, vorzugsweise umfassend zumindest ein organisches Material, wie Kohlenstoff, zumindest ein anorganisches Material, wie Glas, Kunststoff und/oder Keramik, zumindest eine Flüssigkeit, wie Öl, Wasser, zumindest eine Körperflüssigkeit, wie Blut und/oder Speichel, und/oder zumindest ein Schüttgut eingesetzt wird.

Dabei wird mit der Erfindung insbesondere vorgeschlagen, daß das Ausgangssignal der Meßstrecke und/oder ein durch den Vergleich des Eingangssignals und des Ausgangssignals der Meßstrecke gewonnenes Vergleichssignal, insbesondere ein eine Phasendifferenz repräsentierendes Signal, in zumindest ein transformiertes Signal transformiert, insbesondere fouriertransformiert, wird.

Weiterhin ist bevorzugt, daß basierend auf dem Ausgangssignal der Meßstrecke, dem Eingangssignal der Meßstrecke, dem Vergleichssignal und/oder dem transformierten Signal mittels zumindest einer ersten Auswerteeinheit zumindest ein erster Parameter des Mediums bestimmt wird.

Alternativ oder ergänzend kann vorgesehen sein, daß basierend auf dem Ausgangssignal der Meßstrecke, dem Eingangssignal der Meßstrecke, dem Vergleichssignal und/oder dem tränsformierten Signal mittels zumindest einer zweiten Auswerteeinheit zumindest ein zweiter Parameter des Mediums bestimmt wird.

Bei den beiden vorgenannten Ausführungsformen ist insbesondere bevorzugt, daß mittels der ersten Auswerteeinheit und/oder der zweiten Auswerteeinheit das Ausgangssignal der Meßstrecke, das Eingangssignal der Meßstrecke, das Vergleichssignal und/oder das transformierte Signal, vorzugsweise mittels zumindest einer von der ersten Auswerteeinheit umfaßten ersten Filtereinheit, wie einer Tiefpaßfiltereinheit, und/oder mittels zumindest einer von der zweiten Auswerteeinheit umfaßten Filtereinheit, wie einer Hochpaßfiltereinheit, gefiltert wird.

Dabei kann das erfindungsgemäße Verfahren dadurch gekennzeichnet sein, daß der erste Parameter durch Bestimmung zumindest eines Durchschnittswertes des Ausgangssignals der Meßstrecke, des Eingangssignals der Meßstrecke, des Vergleichssignals, des transformierten Signals, des gefilterten Ausgangssignals der Meßstrecke, des gefilterten Eingangssignals der Meßstrecke, des gefilterten Vergleichssignals und/oder des gefilterten transformierten Signals bestimmt wird und/oder der zweite Parameter durch Bestimmung zumindest eines Maximalwerts, insbesondere einer Maximalstelle einer Funktion und/oder einer Höhe eines Maximalwerts, und/oder einer Anzahl von Maximalwerte, insbesondere durch zumindest eine zeitliche Ableitung und/oder eine Ableitung nach einer Frequenz, des Ausgangssignals der Meßstrecke, des Eingangssignals der Meßstrecke, des Vergleichssignals, des transformierten Signals, des gefilterten Ausgangssignals der Meßstrecke, des gefilterten Eingangssignals der Meßstrecke, des gefilterten Vergleichssignals und/oder des gefilterten transformierten Signals bestimmt wird.

Weiterhin schlägt die Erfindung vor, daß basierend auf dem ersten Parameter und dem zweiten Parameter mittels zumindest einer dritten Auswerteeinheit zumindest ein dritter Parameter des Mediums bestimmt wird, wobei der dritte Parameter vorzugsweise durch Multiplikation und/oder Summation des ersten und des zweiten Parameters bestimmt wird.

Schließlich wird mit der Erfindung vorgeschlagen, daß als Parameter des Mediums, insbesondere als erster Parameter, als zweiter Parameter und/oder als dritter Parameter, eine relative Dielektrizitätskonstante, eine relative Permeabilitätskonstante, eine Art des Mediums, eine Dichteverteilung und/oder die Dichte des Mediums, eine Verteilung des Mediums in der Meßstrecke, eine Geschwindigkeit des Mediums in der Meßstrecke, ein Mengendurchfluß und/oder Massendurchfluß des Mediums durch die Meßstrecke, und/oder ein Phasenzustand des Mediums, wie flüssig, fest und/oder gasförmig, bestimmt wird.

Der Erfindung liegt die überraschende Erkenntnis zugrunde, daß die Bestimmung eines Parameters eines Mediums, beispielsweise eine Materialdichtebestimmung eines sich durch ein Rohr hindurchbewegenden Mediums, mit Hilfe sogenannter linker Handstrukturen möglich ist, die als elektrisch leitfähige Strukturen im Bereich einer Meßstrecke, insbesondere um ein nicht elektrisch leitfähiges Förderrohrstück, zur Bildung einer Leitungsanordnung angebracht sind. Mit dieser Anordnung kann ein Hochfrequenzsignal, insbesondere ein Mikrowellensignal, orthogonal zu dem Medium, insbesondere orthogonal zur Ausbreitungsrichtung des Mediums, in die Meßstrecke, wie das Förderrohr, eingebracht werden. Werden mehrere dieser leitfähigen Strukturen in Ausbreitungsrichtung verteilt auf dem Förderrohr angebracht, so kann durch eine geeignete Beschaltung der so entstandenen Kapazitäten ein Sensor basierend auf einem Leitungsresonator aufgebaut werden, der im Vergleich zu konventionellen Materialdichtesensoren eine sehr hohe Sensitivität der Materialdichte aufweist. Weiterhin ermöglicht es die erfindungsgemäße Vorrichtung und das erfindungsgemäße Verfahren mit einem einzigen Sensor darüber hinaus auch gleichzeitig die Geschwindigkeit des Mediums durch die Meßstrecke zu bestimmen, was die quantitative Bestimmung eines Massendurchflusses des Mediums durch die Meßstrecke ermöglicht.

Ferner wird der aus dem Stand der Technik bekannte Zielkonflikt zwischen der Maximierung der Güte und der Minimierung des Raumbedarfs oder mit anderen Worten einer Reduzierung der geometrischen Abmessungen bei gleichzeitiger Erhöhung der Güte einer konventionellen Vorrichtung bzw. eines konventionellen Resonators beseitigt, indem solche inverse Leitungen bzw. LH-Strukturen verwendet werden. Inverse Leitungen haben die folgenden günstigen Eigenschaften:

1. Die Resonanzfrequenz von Harmonischen, d.h. von Schwingungen bei Resonanzbedingung, ist unterhalb der Frequenz der Grundschwingung. Dadurch werden die Abmessungen eines Resonators, der bei einer Harmonischen betrieben wird, nicht vergrößert und es können Signale mit geringerer Frequenz verwendet werden, was zu einer Kostenreduktion führt, ohne daß Einbußen bei einer Genauigkeit der Messung hinzunehmen sind.

2. Der Wellenwiderstand $Z_L$ kann in weiten Bereichen durch die Verwendung von diskreten Bauelementen synthetisch eingestellt werden.

3. Wie bei allen Resonatoren kann durch eine Verringerung der externen Belastung die Resonatorgüte weiter erhöht werden.

Die erfindungsgemäße Vorrichtung und das erfindungsgemäße Verfahren nutzen die Änderung mehrer in Längsrichtung verteilt angeordneter Kapazitäten zur Verstimmung eines Leitungsresonators und basieren auf der Idee vom sogenannten Metamaterial, das heißt ein Material mit negativer Ausbreitungskonstante. Durch die Ausnutzung der Eigenschaften des Metamaterials, das eine Erhöhung der Ordnung der Resonanz eines Leitungsresonators durch die Verringerung der Frequenz ermöglicht, kann ein Leitungsresonator mit derartig hohen Empfindlichkeiten bei geringen Frequenzen und geringen Sensorabmessungen erreicht werden.

Bedingt durch den Aufbau der erfindungsgemäßen Vorrichtung bzw. des erfindungsgemäßen Leitungsresonators umfassend inverse bzw. LH Elementarzellen kann durch eine geschickte Wahl der Resonanzfrequenz eine sehr hohe Sensitivität in Bezug auf Änderungen der Dichte eines bewegten Mediums erzielt werden. Eine Anordnung von mehreren Leitungsresonatoren verteilt über den Umfang des Förderelementes, wie einem Förderrrohr mit einer damit verbundenen erhöhten Sensitivität und der Auflösung von Dichtunterschieden, insbesondere im Rohrquerschnitt, ist dabei möglich.

Die Empfindlichkeit eines Sensors aus dem Stand der Technik steigt durch Erhöhung der Ordnung des Resonanzmodes, da für konventionelle Leitungsresonatoren mit festen Abmessungen die Empfindlichkeit mit Zunahme des Resonatormodes und somit der Frequenz ansteigt. Im Gegensatz dazu erreicht man bei inversen Leitungsresonatoren, wie sie bei der erfindungsgemäßen Vorrichtung zum Einsatz kommen, eine Erhöhung des Resonanzmodes durch Verringerung der Frequenz. Das führt dazu, daß bei gleicher Frequenz und gleicher Empfindlichkeit die notwendigen Abmessungen des inversen Leitungsresonators im Vergleich zu einem konventionellen Leitungsresonator deutlich kleiner sind. Zudem wird durch den erfindungsgemäßen Aufbau bei gleicher Abmessung und gleicher Frequenz die Sensitivität des Sensors um ein Vielfaches erhöht.

Bei der nachfolgenden Beschreibung ist zu beachten, daß das zu untersuchende Material/Medium sowohl fluid, insbesondere gasförmig oder flüssig, fest, wie pulverförmig, sein, oder aus zumindest zwei Phasen, wie gas/fest, gas/flüssig, fest/flüssig bestehen kann. Beispielsweise können feste Materialien bzw. Medien pneumatisch befördert werden.

Ausführungsbeispiele der Erfindung werden im folgenden anhand der bereits zuvor erwähnten als auch weiterer Figuren erläutert. Dabei ergeben sich weitere Merkmale und Vorteile der Erfindung aus der nachstehenden Beschreibung, in der Ausführungsformen einer erfindungs-gemäßen Vorrichtung beispielhaft anhand mehrerer schematischer Zeichnungen erläutert werden. Dabei zeigt

Fig. 1: den Aufbau eines gattungsgemäßen konventionellen RH-Resonators zur Bestimmung der Materialdichte einem Rohr, a) als Längsschnittansicht des gesamten Aufbaus von der Seite und b) als dazu senkrechter Schnitt A-A durch das Rohr in Richtung B,

Fig. 2: eine perspektivische Ansicht eines konventionellen RH-Resonators zur Bestimmung der Materialverteilung in einem Rohr,

Fig. 3: das absolute Signal eines konventionellen RH-Resonators aus Figur 1 abhängig von dessen Füllung mit einem Material,

Fig. 4: die Veränderung der Phase eines schwingenden konventionellen RH-Resonators aus Figur 1 in Abhängig von dessen Füllung mit einem Material,

Fig. 5: einen mit einem dielektrischen Material gefüllten Kondensator,

Fig. 6: eine mit einem diamagnetischen Material gefüllte Spule,

Fig. 7: ein Diagramm zur Abschätzung der Phasenänderung $\Delta\varphi$ in Abhängigkeit von der Resonatorfrequenz f,

Fig. 8: eine Skizze eines Leitungsresonators,

Fig. 9: Elementarzellen für (a) eine konventionelle (RH)-Leitung und (b) eine inverse (LH)-Leitung,

Fig. 10a: ein Ersatzschaltbild für eine verlustarme Verbunds-Rechtshändige/Linkshändige Übertragungsleitung (CRLH-TL)

Fig. 10b: Dispersionsdiagramme für CRLH-TL Einheitszellen mit unterschiedlichen RH- und LH-Impedanzen

Fig. 11: eine weitere Elementarzelle für eine RHLH-Leitung,

Fig. 12: das Realisierungsschema für eine inverse Leitung,

Fig. 13a und Fig. 13b: mögliche Konfigurationen zur Realisierung eines inversen Leitungsresonators zur Messung der Permittivität von Materialien,

Fig. 14: eine Variation in der geometrischen Anordnung zur Realisierung eines Leitungsresonators mit periodisch angeordneten Reaktanzen; (Zylinder-) konforme Struktur, an einem Ende kurzgeschlossen (Eintormessung), .

**Fig.15a und Fig. 15b:** weitere Variationen in der geometrischen Anordnung zur Realisierung eines Leitungsresonators mit periodisch angeordneten Reaktanzen, hier (a) planare und (b) kompakte planare Struktur (jeweils Zweitormessung),

**Fig. 16:** eine mögliche Konfiguration zur Bestimmung der Permeabilität von festen oder bewegten Medien,

**Fig. 17:** das Übertragungsverhalten einer balancierten RHLH-Leitung,

**Fig. 18a und Fig. 18b:** die mögliche Anordnung von vier Leitungsresonatoren auf einem dieelektrischen Rohr: a) in der Schnittebene quer zur Ausbreitungsrichtung des Mediums und b) längs zur Ausbreitungsrichtung, wobei der Zylindermantel als Fläche dargestellt ist,

**Fig. 19:** den Aufbau eines erfindungsgemäßen inversen LH-Resonators zur Bestimmung der Materialverteilung einem Rohr als Längsschnittansicht des gesamten Aufbaus von der Seite,

**Fig. 20:** eine perspektivische Ansicht eines erfindungsgemäßen inversen LH-Resonators zur Bestimmung der Materialverteilung einem Rohr,

**Fig. 21:** die unterschiedlichen absoluten Signale eines konventionellen RH-Resonators aus Figur 1 und eines erfindungsgemäßen inversen RHLH-Resonators aus Figur 18,

**Fig. 22:** die Signale eines ungefüllten und mit Styropor ($\varepsilon_r$ = 1,024) gefüllten erfindungsgemäßen inversen LH-Resonators,

**Fig. 23:** das Signal eines erfindungsgemäßen inversen LH-Resonators beim zeitabhängigen,

schubweise Durchströmen des Sensors mit Hirse,

**Fig. 24:** die Einzelteile eines zerlegten erfindungsgemäßen inversen LH-Resonators,

**Fig. 25:** eine perspektivische Ansicht des Aufbaus eines zusammengesetzten erfindungsgemäßen inversen LH-Resonators mit einem ovalen Schnitt zur Ansicht der Vorgänge im Inneren der Meßstrecke,

**Fig. 26a und Fig. 26b:** schematische Querschnittsansichten verschiedener Ausschnitte des Mikrostreifenresonators der Figur 25,

**Fig. 27:** eine grafische Gegenüberstellung von mit dem Resonator der Figuren 25 und 26a/26b gemessenen Werten und Simulationsdaten,

**Fig. 28:** ein Blockschaltbild einer erfindungsgemäßen Vorrichtung in Form eines Sensors zur Bestimmung einer Materialdichte, einer Geschwindigkeit und eines Massendurchflusses eines Mediums,

**Fig. 29a und Fig. 29b:** grafische Darstellungen eines Ausgangssignals eines Raumfilters bei Durchtritt eines Partikels mit rechteckförmiger (a) und sinusförmiger (b) Transmittanz,

**Fig. 30a und 30b:** grafische Darstellungen einer Feldverteilung in einer Meßstrecke in einer Seitenansicht (a) und einer Aufsicht (b) und

**Fig. 31:** eine Autokorrelation eines hochpaßgefilterten Phasensignals, wenn ein einzelnes Objekt durch den erfindungsgemäßen Resonator tritt.

Inverse Leitungen werden durch die periodische Anordnung von reaktiven Elementen realisiert. Die kleinste Einheit einer solchen Anordnung wird als Elementarzelle bezeichnet. Figur 9 zeigt einen Vergleich des elektrischen Ersatzschaltbilds der Elementarzelle einer konventionellen bzw. RH-Leitung (Figur 9 a)) mit einer inversen bzw. LH-Leitung (Figur 9 b)). Wie Figur 9a) zu entnehmen ist, umfaßt die RH-Leitungs-Elementarzelle eine induktives Bauelement, beispielsweise in Form einer Spule 33a, in einer Strecke 35a zwischen Anschlüssen 37a und 39a, die einen Eingang und einen Ausgang der Elementarzelle darstellen, wobei die Strecke 35a über ein kapazitives Bauelement, beispielsweise in Form eines Kondensators 41a, mit einer Masse 43a verbunden ist. Hingegen umfaßt die LH-Leitungs-Elementarzelle gemäß Figur 9b) ein kapazitives Bauelement, beispielsweise in Form eines Kondensators 41b, in einer Strecke 35b zwischen Anschlüssen 37b und 39b, die einen Eingang bzw. Ausgang der Elementarzelle darstellen, wobei die Strecke 35b über eine induktives Bauelement, beispielsweise in Form einer Spule 33b, mit einer Masse 43b verbunden ist.

Die in den Figuren 9a und 9b dargestellten Ersatzschaltbilder stellen jedoch ein Idealbild dar. Der Aufbau insbesondere einer inversen Leitung mit konzentrierten Bauelementen führt jedoch unweigerlich dazu, daß aufgrund der Zuleitungen, dem Aufbau der konzentrierten Bauelemente (das sogenannte Package) und der physikalischen Anordnung der Bauelemente sogenannte Streukapazitäten und Streuinduktivitäten zusätzlich zu den in Figur 9 b) gezeigten Bauelementen mit berücksichtigt werden müssen.

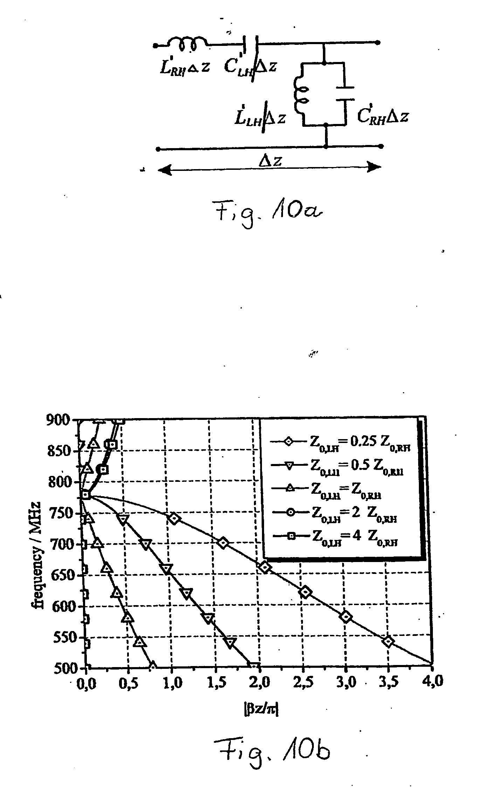

Ein Ersatzschaltbild einer Einheitszelle, welches auch diese Effekte mit einbezieht ist in Figur 10a dargestellt. $L'_{RH}\Delta z$, $L'_{LH}/\Delta z$, $C'_{LH}/\Delta z$, $C'_{RH}\Delta z$ stellen die rechts-, bzw. linkshändigen Induktivitäten und Kapazitäten pro Längeneinheit $\Delta z$ dar. Diese Schaltung wird auch als verlustlose kombinierte bzw. Verbunds-rechtshändige/linkshändige Übertragungsleitung (CRLH-TL) bzw. CRLH-Leitung bezeichnet. Die Übertragungskonstante ist gegeben durch

$$\gamma = \alpha + j\beta = \sqrt{Z'Y'}, \qquad (8)$$

wobei Z' und Y' die Impedanz und die Admittanz der Übertragungsleitung pro Längeneinheit ist. Diese sind definiert durch die Gleichungen

$$Y'(j\omega) = j\left(\omega L'_{RH} - \frac{1}{\omega C'_{LH}}\right),$$
$$Z'(j\omega) = j\left(\omega C'_{RH} - \frac{1}{\omega L'_{LH}}\right). \qquad (9)$$

Für die Phasenkonstanz- oder Dispersionsrelation $\beta$ (j$\omega$) gilt

$$\beta(j\omega) = \\ \pm \sqrt{\omega^2 L'_{RH} C'_{RH} + \frac{1}{\omega^2 L'_{LH} C'_{LH}} - \left(\frac{L'_{RH}}{L'_{LH}} + \frac{C'_{RH}}{C'_{LH}}\right)}, \qquad (10)$$

wobei $\beta$(j$\omega$) ein realer Wert für den RH-Durchlaßbereich ($\beta>0$) und den LH-Durchlaßbereich ($\beta < 0$) ist. $\beta$ wird imaginär außerhalb der beiden Durchlaßbereiche und daher tritt ein Sperrbereich auf.

Ein Übertragungsleitungsresonator, wie er in der erfindungsgemäßen Vorrichtung durch die Leitungsanordnung realisiert ist, wird erreicht, wenn die Übertragungsleitung nicht perfekt an beiden Enden abgestimmt ist. Die RH-und LH-Impedanz ist definiert als

$$Z_{0,RH/LH} = \sqrt{L'_{RH/LH} C'_{RH/LH}}. \qquad (11)$$

In Figur 10b sind Dispersionsdiagramme einer Verbunds-rechtshändigen/linkshändigen Übertragungsleitung im unbalancierten Zustand, d.h. $Z_{0,LH} \neq Z_{0,RH}$, und im balancierten Zustand $Z_{0,LH}$ $Z_{0,RH}$ dargestellt. Der Anstieg von $\beta$ ist umgekehrt proportional zu der Güte oder dem Q-Faktor der Resonanzmode des CRLH-TL Resonators bzw. der Leitungsanordnung im leeren bzw. luftgefüllten Zustand. Eine flache Dispersionskurve, wie sie für $Z_{0,LH} > Z_{0,RH}$ vorliegt, führt zu einem hohen Q-Faktor bzw. einer hohen Güte und zu einem verringerten Modenabstand zwischen den Resonanzmoden. Der Q-Faktor bzw. die Güte des Resonators im leeren bzw. luftgefüllten Zustand nimmt mit der Ordnung der Resonanzmode zu.

Ein unbalancierter CRLH-TL Resonator, in dem höherrangige Moden betrachtet werden und in dem $Z_{0,LH} > Z_{0,RH}$ ist, erlaubt den Aufbau von empfindlichen Permittivitätssensoren wenn die absoluten Permittivitätsänderungen klein sind.

Für eine konstante Meßfrequenz kann die Phasenverschiebung, wie bereits zuvor durch Gleichung (3) beschrieben, als eine Funktion der Permittivitätsänderung abgeschätzt werden durch

$$\Delta\varphi = \frac{\pi}{2} \cdot Q \cdot \frac{\Delta\varepsilon_r}{2} \quad \text{for} \quad \Delta\varepsilon_r / \varepsilon_{r,ref} \ll 1, \tag{12}$$

wobei Q der Q-Faktor bzw. die Güte im gefüllten Zustand des Resonanzkreises ist und $\Delta\varepsilon_r$ die Differenz $\varepsilon_{r,\,meas} - \varepsilon_{r,\,ref}$, also die Differenz zwischen den mit dem Medium gemessenen Dielektrizitätskonstante bzw. Permittivität und einer Referenzdielektrizitätskonstante bzw.Referenzpermittivität, beispielsweise im leeren oder luftgefüllten Zustand des Resonators ist. Eine Systemempfindlichkeit S kann definiert werden als

$$s = \frac{\Delta\varphi}{\Delta\varepsilon_r} = Q \cdot \frac{\pi}{4}. \tag{13}$$

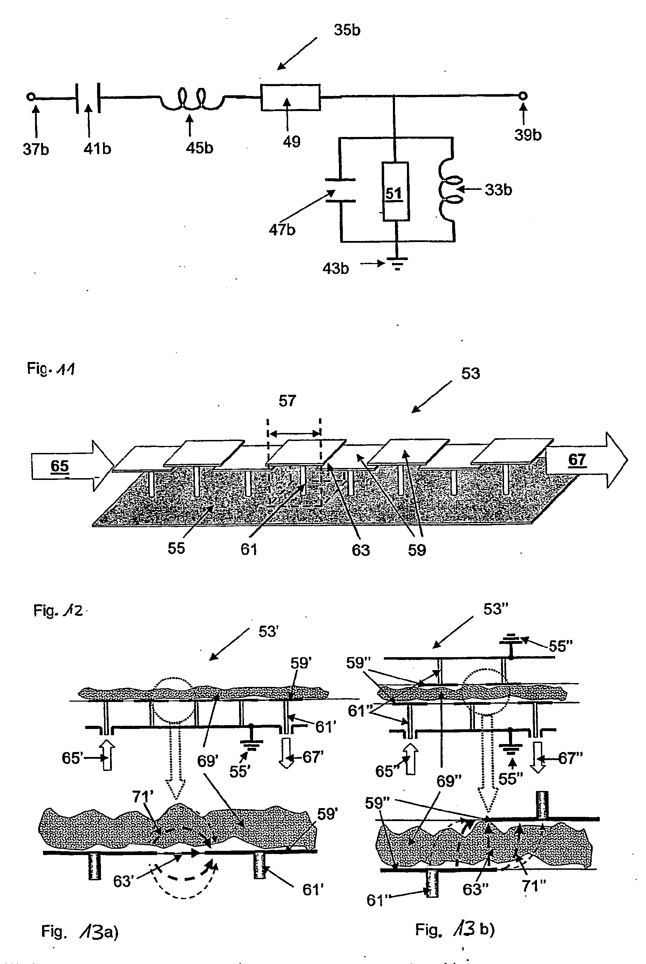

Ein weiteres, im Vergleich zur in Figur 10a dargestellten Ersatzschaltbild ergänztes Ersatzschaltbild einer Elementarzelle, die auch diese Effekte mit einbezieht, ist in Figur 11 dargestellt. Diese Elementarzelle wird als RHLH-Leitung bezeichnet, da sie eine Kombination der in den Figuren 9a) und 9b) dargestellten Elementarzellen darstellt. Darin sind neben den induktiven 33b und kapazitiven 41b Anteilen der LH-Elementarzelle der Figur 9b) auch in der Strecke 35b eine Streuinduktivität in Form einer Spule 45b und in der Verbindung der Strecke 35b mit der Masse 43b eine Streukapazität in Form eines Kondensators 47b eingezeichnet. Zusätzlich sind zwei, insbesondere ohmsche, Ersatzwiderstände 49 und 51 eingezeichnet, die die, insbesondere ohmschen, Verluste des hauptsächlich induktiven und des hauptsächlich kapazitiven Bereichs darstellen.

Je nach eingestellter Frequenz, verhält sich die Struktur als rechtshändige (RH) oder als linkshändige (LH) Leitungsstruktur. Die Erfindung betrifft jedoch insbesondere den Frequenzbereich, in dem sich die Struktur als inverse LH-Leitungsstruktur verhält, sowie den Übergangsbereich von RH- auf LH-Leitung insbesondere solche Bereiche, in denen die RH-Anteile im wesentlichen vernachlässigt werden können.

Die praktische Realisierung einer Meßstrecke umfassend eine LH-Leitungsanordnung 53 zur Bestimmung einer Permittivität eines Mediums ist in Figur 12 prinzipiell skizziert. Hierbei handelt es sich im wesentlichen um die Struktur einer Mikrostreifenleitung, wobei das Substrat nicht dargestellt wurde. Die Leitungsanordnung 53 umfaßt eine Erdung 55 auf der eine Mehrzahl von Elementarzellen 57, genauer acht, angeordnet ist. Jede der Elementarzellen 57 umfaßt jeweilige, mit der Erdung 55 und oberen Metallisierungen bzw. Ladungselemente in Form von Kondensatorplatten 59 verbundene Induktivitäten in Form von Drähten 61. Die Kondensatorplatten 59 bilden Serienkondensatorplatten, die von einander durch Unterbrechungen getrennt sind. Dabei bilden sich zwischen den Kondensatorplatten 59 die Kapazitäten 63. Dadurch ergibt sich eine Reihenschaltung von kapazitiven Elementen in einer Leiterbahn, die von einem Signal-Eingang 65 einer ersten Elementarzelle zu einem Signal-Ausgang 67 einer zweiten Elementarzelle verläuft, wobei sechs dritte Elementarzellen zwischen der ersten und zweiten Elementarzelle angeordnet sind.

In den Figuren 13a und 13b sind zwei weitere alternative Konfigurationen inverser Leitungsresonatoren bzw. Meßstecken zur Messung der Permittivität von Materialien 69', 69" dargestellt, an Hand welcher die Ausbildung der induktiven und kapazitiven Elemente erläutert wird. Figur 13a) zeigt dabei eine Leitungsanordnung 53' mit einer planaren Anordnung bzw. Konfiguration der Elementarzellen, während Figur 13 b) eine Leitungsanordnung 53" mit einer räumlichen Anordnung der Elementarzellen in einem inversen Leitungsresonator darstellt. Die einzelnen Elemente der Leitungsanordnungen 53', 53", die denjenigen der Leitungsanordnung 53 der Figur 12 entsprechen, tragen die gleichen Bezugszeichen, allerdings einfach bzw. zweifach gestrichen. In jeder der Figuren 13a und 13b ist jeweils ein Ausschnitt der Leitungsanordnung 53' bzw. 53" vergrößert dargestellt. Diese Ausschnitte verdeutlichen durch die Darstellung der elektrischen Feldlinien 71' bzw. 71" die Bereiche, in denen kapazitive Elemente ausgebildet werden, so daß sich durch die Materialien 69' bzw. 69" Kapazitätsänderungen ergeben, die die Resonatoreigenschaften der Leitungsanordnungen 53' bzw. 53" und damit die an den Signal-Ausgängen 67'bzw. 67" anliegenden Signal beeinflussen.

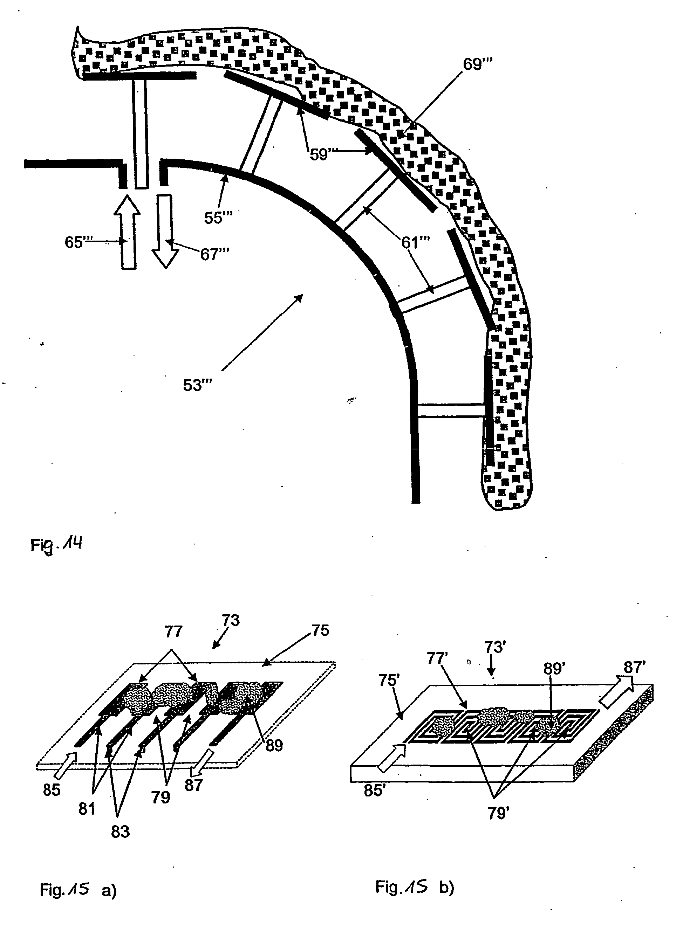

Weitere Varianten, welche die Flexibilität der mit der Erfindung gelieferten Leitungsanordnung aufzeigen, sind in den Figuren 14 und 15a bzw. 15 b) gezeigt.

In Figur 14 ist eine planare Struktur bzw. Leitungsanordnung 53''', die mit der in Figur 13a dargestellten vergleichbar ist, gezeigt. Die in Figur 14 dargestellten Elemente, die denjenigen der Leitungsanordnung 53 in Figur 13a) entsprechen tragen die gleichen Bezugszeichen, allerdings dreifach gestrichen. Wie aus Figur 14 ersichtlich, kann die Form der Leitungsanordnung 53''' an eine durch die Geometrie des zu messenden Materials 69''' bestimmte Form angepaßt werden. Im Vergleich zu der in Figur 13a) dargestellten Leitungsanordnung 53' sind der Signal-Eingang 65''' und der Signal-Ausgang 67''' nicht örtlich voneinander getrennt. Dies wird dadurch erreicht, daß die Leitungsanordnung 53''' an dem dem Signal-Eingang 65''' gegenüberliegenden Ende über eine nicht dargestellte Leitung kurzgeschlossen ist. Dies bedeutet, daß eine die Leitungsanordnung 53''' abschließende Kondensatorplatte 59''' über eine zusätzliche Leitung mit einem im wesentlichen zu vernachlässigenden ohmschen und induktiven Widerstand mit der Erdung 55''' verbunden ist. Dies ermöglicht es, daß an dem Signal-Eingang 65''' zurückreflektierte Signale auswertbar sind. Die Anpassung an die Form des zu untersuchenden Materials 699''' kann zum Beispiel dadurch erreicht werden, daß die Masse 55''' als ein elastisch verformbares Bauteil ausgebildet ist. Eine wichtige Eigenschaft ist also die Möglichkeit die durch die Elementarzellen gebildeten Resonatoren an geformte Oberflächen anzupassen.

Wie aus den Figuren 15a) und 15b) ersichtlich, können die erfindungsgemäßen Leitungsanordnungen auch in einer Technik planar hergestellt werden, wie sie für die Herstellung gewöhnlicher Leiterplatten verwendet wird. Bei der in Fig. 15a) dargestellten Leitungsanord-nung 73 sind auf einem Substrat 75 leitende Bereiche 77 durch entsprechende Maskierungs-und Ätz- bzw. Beschichtungsverfahren ausgebildet worden. Die Bereiche 77 wirken als Ladungselemente bzw. Kondensatorplatten, die durch Spalte 79 voneinander getrennt sind. Die Bereiche 77 sind ferner an Kontaktzungen 81, insbesondere in Form von Mikrostreifenleitungen, angeschlossen. Die mittleren drei Kontaktzungen 81 sind über Kontakte 83, die als induktive Elemente wirken, mit einer an der Rückseite des Substrats 75 angeordneten und in Figur 15a) nicht dargestellten Erdungsfläche angeschlossen, während die äußeren Kontaktzungen mit einem Signal-Eingang 85 bzw. Signal-Ausgang 87 der Leitungsanordnung 73 verbunden sind. Die Kontakte 83 wirken also als Durchkontaktierungen zu der nicht dargestellten Erdungsfläche. Wird ein Medium 89 auf dem Substrat 75 in den Bereichen 77 angeordnet oder über diese Bereiche geführt, so erlaubt die Leitungsanordnung 73 die Bestimmung der Eigenschaften bzw. Parameter des Mediums in der zuvor beschriebenen Weise. Bei der in Figur 15b) dargestellten Leitungsanordnung 73' sind auf einem Substrat 75' im wesentlichen spiralförmige Bereiche 77' angeordnet. Diese sind an geeigneten Stellen über nicht dargestellte, als induktive Elemente wirkende Kontaktierungen mit einer auf der Rückseite des Substrats 75' angeordneten Erdung verbunden. Die spiralförmigen Bereiche 77' stellen aufgrund einer jeweiligen Unterbrechung bzw. Spalt 79' mehrere kapazitive Elemente auf einer Leitungsstrecke von einem Signal-Eingang 85' zu einem Signal-Ausgang 87' dar. Auch mit dieser Leitungsanordnung 73' lassen sich die Eigenschaften eines in den Bereichen 77' aufgebrachten bzw. über die Bereiche 77' geführten Mediums 89' bestimmen.

Somit besteht die Möglichkeit konforme als auch planare Strukturen zur Realisierung der vorliegenden Erfindung herzustellen, was in Hinblick auf Flexibilität, mechanische Stabilität und Herstellungskosten wichtige Eigenschaften sind.

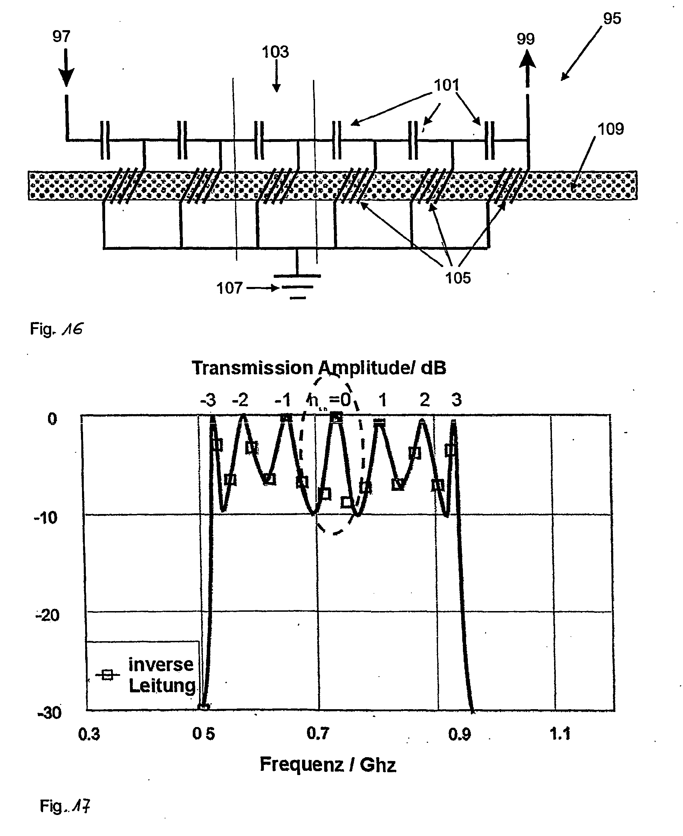

Eine weitere mögliche Konfiguration zur Realisierung einer erfindungsgemäßen Vorrichtung umfassend einen inversen Leitungsresonator zur Messung der Permeabilität ist in Figur 16 dargestellt. Mit der in Figur 16 dargestellten Konfiguration bzw. Leitungsanordnung 95 ist es möglich, die diamagnetischen Eigenschaften sowohl von Festkörpern in Form eines zylindrischen Stiftes zu messen als auch von pulverformigen Materialien. Dazu umfaßt die Leitungsanordnung 95 zwischen einem Signal-Eingang 97 und einem Signal-Ausgang 99 in Reihe geschaltete kapazitive Elemente 101, wobei jeweils ein kapazitives Element in einer Elementarzelle 103 angeordnet ist. Ferner sind die kapazitiven Elemente 101 in jeder Elementarzelle 103 über induktive Elemente in Form von Spulen 105 mit einer gemeinsamen Erdung 107 zum Aufbau eines LC-Schwingkreises bzw. einer LH-Leitung verbunden. Zur Messung der Eigenschaften bzw. Parameter eines Mediums 109 wird dieses, falls es ein Festkörper ist, insbesondere mit im wesentlichen zylindrischer Form, in die Spulen 105 eingebracht. Bei einem fluiden Medium 109 kann ein zylindrisches Rohr im Inneren der induktiven Elemente 105 eingeführt werden, durch welches das Medium 109 dann geführt wird.

Das Übertragungsverhalten einer balancierten RHLH-Leitung ist in Figur 17 dargestellt. Bei dem in Figur 17 dargestellten Graphen handelt es sich um Simulationsdaten. Dabei ist über die Frequenz des zugeführten Signals der Betrag des Ausgangssignals aufgetragen. Man erkennt sogenannte Transmissionsmaxima, die charakteristisch für die einzelnen Resonanzmoden n der Leitungsanordnung sind. Das Transmissionsverhalten der Resonanzmode nullter Ordnung (in Figur 17 umrandet) ist nicht vom Wert der Widerstände und somit von den Verlusten der zu untersuchenden Materialien abhängig. Das Übertragungsverhalten für Messungen mit stark verlustbehafteten Materialien erlaubt beispielsweise neben der Resonanzmode nullter Ordnung keine weitere Resonanzmode eindeutig zu detektieren. Mit einer solchen Anordnung ist es beispielsweise möglich, Materialien mit relativ hohen dielektrischen oder auch diamagnetischen Verlusten zu untersuchen.

Somit lassen sich gemischt Rechts- Linkshändige Leitungsanordnungen (RHLH-Leitungen) im sogenannten Resonanzmode nullter Ordnung betreiben (Zeroth-Order Resonator). Dieser Resonanzmode ist einzig bei den RHLH-Leitungen existent. Die wichtigsten Eigenschaften dieses Modes sind:

- Die Resonanzfrequenz der Leitungsanordnung ist unabhängig von den physikalischen und den elektrischen Abmessungen des Resonators,

- Die LH-Eigenschaften der RHLH-Leitung bewirken gegenläufige Phasen- und Gruppengeschwindigkeit

- Die Güte des Resonators ist in diesem Fall unabhängig von der Anzahl der Einheitszellen, so daß sehr kompakte Leitungsanordnungen verwendet werden können.

Prinzipiell können mit den zuvor erläuterten Leitungsanordnungen sowohl die dielektrischen Eigenschaften als auch die diamagnetischen Eigenschaften beliebiger Materialien im Mikrowellenbereich untersucht werden, sofern diese derart bearbeitet werden können, daß sie in die jeweilige Vorrichtung passen. Speziell durch Nutzung der Eigenschaften der Resonanz nullter Ordnung ist es möglich, auch Materialien mit hohen dielektrischen Verlusten oder diamagnetischen Verlusten zu untersuchen. Beschränkt werden die oben genannten Verfahren nur dadurch, daß sich ein Mikrowellenfeld in den zu untersuchenden Materialien ausbreiten kann. Die ist zum Beispiel bei elektrisch leitenden Materialien nicht gegeben.

Abhängig von der Form der zu untersuchenden Materialien bzw. Medien (fest, pulverförmig oder auch speziell geformt) kann ein Leitungsresonator bzw. eine Leitungsanordnung gemäß der Erfindung speziell auf das zugrundeliegende Problem angepasst werden. Als "Material" bzw. Medium kommen insbesondere prinzipiell auch fluide, daß heißt gasförmige oder flüssige, Medien in Betracht, solange diese zu Luft beziehungsweise Vakuum abweichende dieelektrische oder diamagnetische Eigenschaften besitzen.

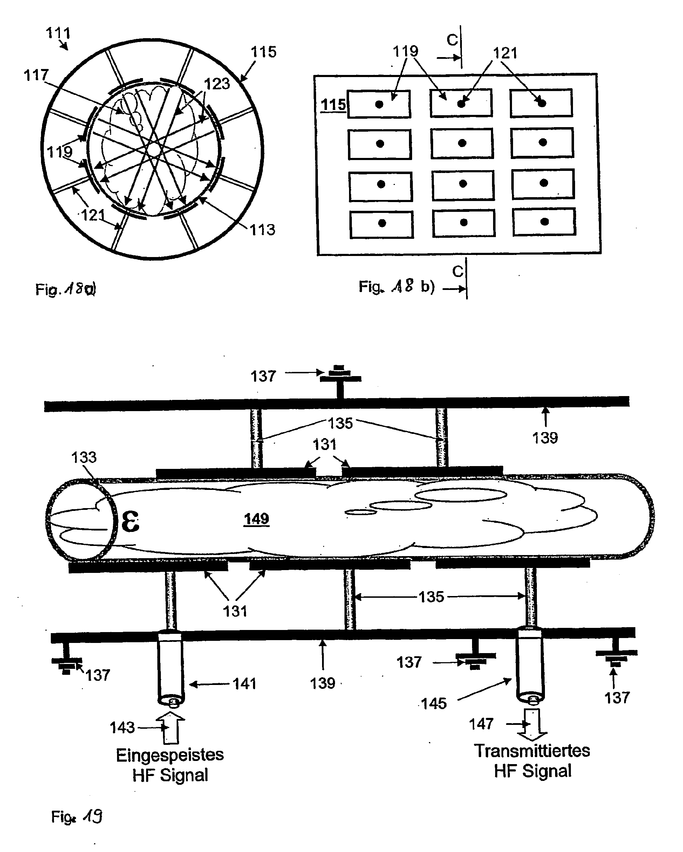

Figuren 18a) und 18b) zeigen eine weitere mit den erfindungsgemäßen Leitungsanordnungen bzw. Vorrichtungen mögliche Anwendung von mehreren linkshändigen Leitungsresonatoren. Dabei zeigt Figur 18a) eine Querschnittsansicht einer weiteren erfindungsgemäßen Leitungsanordnung 111, während die Figur 18b) die prinzipielle Verschaltung der Elemente der Leitungsanordnung 111 zeigt und der Zylindermantel als Fläche dargestellt ist" wobei die Querschnittsansicht der Figur 18a) entlang der Ebene C-C in Figur 18b) erfolgt. Die Leitungsanordnung 111 umfaßt eine im wesentlichen zylinderförmig um ein Rohr 113, in welchem ein zu untersuchendes Medium 117 angeordnet bzw. durch welches das Medium 117 geführt wird, angeordnete Resonatorstruktur. Die Resonatorstruktur umfaßt eine Erdungsfläche 115, die im wesentlichen koaxial das Rohr 113 umgibt, also insbesondere als Erdungsrohr ausgestaltet ist und Ladungselemente bzw. Kondensatorplatten 119, die im Bereich einer Außenwandung des Rohres 113 angeordnet sind und über als Induktivitäten fungierende Drähte 121 mit der Erdungsfläche 115 verbunden sind. Wie aus Figur 18b) ersichtlich, sind entlang des Rohres 113 in äquidistanten Abständen "Ringe" von Kondensatorplatten 119 angeordnet. Im Falle der in Figuren 18a) und 18b) dargestellten Leitungsanordnung sind vier Leitungsresonatoren auf einem dielektrischen Rohr dargestellt. Die Besonderheit dieser Anordnung ist die Tatsache, daß hier nicht nur jeweilig vier gegenüberliegende durch jeweilige Kondensätor-plattenpaare gebildete Leitungsstrukturen, für die die jeweiligen elektrischen Felder 123 in Figur 18a) gezeigt sind, in Resonanz sind, sondern alle Leitungsstrukturen untereinander Leitungsresonatoren bilden. Die Resonanzfrequenzen der "zusätzlichen" Resonatoren sind gegenüber den Resonanzfrequenzen der gegenüberliegenden Resonatoren verschoben.

Durch eine geschickte Dimensionierung und Auswertung der Ausgangssignale der gesamten Resonanzstruktur kann nicht nur die Permittivität des Mediums 117 in dem Rohr 113 bestimmt werden, sondern ebenfalls die Verteilung des Mediums 117 über den Querschnitt. Dies ist besonders dann von Vorteil, wenn das Medium 117, welches durch das Messrohr 113 strömt, Strähnen bildet, die mit konventionellen Materialdichtesensoren bisher nur sehr eingeschränkt detektierbar sind. Die Information der Materialdichte über den Querschnitt erhält man durch Korrelation der gemessenen Signale.

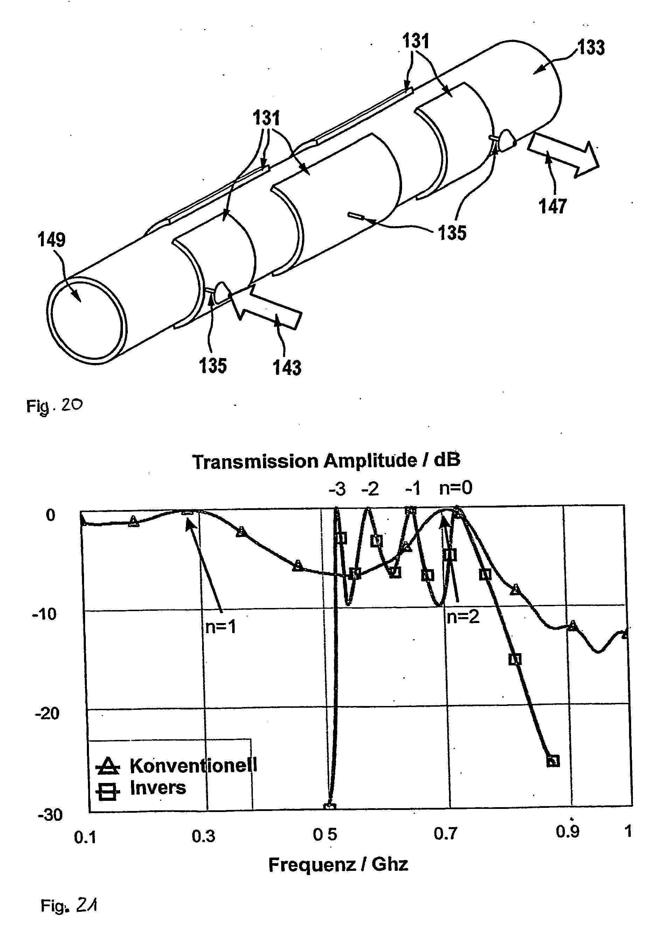

In den Figuren 19 und 20 ist eine weitere erfindungsgemäße Vorrichtung umfassend eine Leitungsanordnung dargestellt. Figur 19 zeigt in einer Querschnittsansicht den schematischen Aufbau der einen weiteren inversen LH-Resonator realisiert, während Figur 20 eine perspektivische Ansicht zeigt. Die in Figur 19 dargestellt Leitungsanordnung umfaßt Kondensatorplatten 131, die an gegenüberliegenden Seiten eines dielektrischen Rohres 133, das aus Kunststoff, Glas oder Keramik bestehen kann, angeordnet sind. Dabei sind die Kondensatorplatten geeignet geformt, insbesondere entsprechend der Oberfläche des Rohres 133. Ferner sind die Kondensatorplatten 131 so angeordnet, daß sich paarweise gegenüberliegende Kondensatorplatten 131, insbesondere entlang einer Längsrichtung des Rohres 133, versetzt zueinander angeordnet sind. Ferner sind die Kondensatorplatten 131 über kurze induktive Elemente 135 mit einem auf Masse 137 liegenden Außenrohr 139 verbunden sind. Über einen Anschluß 141 wird ein Hochfrequenzsignal 143 im Mikrowellenbereich, insbesondere über ein an den Anschluß 141 angeschlossenes Koaxialkabel, eingespeist. Dabei ist bei Verwendung eines Koaxialkabels der Innenleiter des Koaxialkabels mit einem der induktiven Elemente 135 verbunden. Das Mikrowellensignal wird, wie in den zuvor dargestellten Ausführungsformen beschrieben, durch die Resonator- bzw. Leitungsstruktur geleitet und an der anderen Seite über einen weiteren Anschluß 145, an den ebenfalls eine, insbesondere koaxiale, Leitung angeschlossen werden kann, als Signal 147 wieder ausgekoppelt. Anhand des transmittierten Hochfrequenzsignals 147 können dann die Frequenz- und Phasenverschiebung des Signals, die von der Dielektrizität und Permittivität eines in dem Rohr 133 befindlichen oder durch das Rohr 133 im Bereich der durch die Abmessungen der Leitungsanordnung festgelegten Meßstrecke geleiteten Materials bzw. Mediums 149 beeinflußt werden, gemessen werden. Insbesondere mit Hilfe eines geeignet programmierten Computers (nicht gezeigt) können aus diesen Signalen, wie oben beschrieben, die Materialdichte und die Materialverteilung im Material 149 berechnet werden. Figur 20 zeigt, wie bereits erläutert, eine perspektivische Ansicht einer Realisierung der in Figur 19 im Querschnitt dargestellten Leitungsanordnung, wobei jedoch auf die Darstellung des Außenrohres 139 verzichtet wurde.

Im folgenden wird nun anhand verschiedener Graphen die Auswertung eines durch eine erfindungsgemäße Leitungsanordnung aufgenommenen Signals erläutert.

Der Unterschied der Signalleitung zwischen einem konventionellen Resonator mit normaler bzw. RH-Leitung und einem erfindungsgemäßen Resonator bzw. Leitungsanordnung mit inverser bzw. LH-Leitung, wird nun anhand der Figur 21 erläutert. In dieser Figur ist die Transmission durch eine konventionelle RH- und eine erfindungsgemäße LH-Leitungsanordnung in Abhängigkeit von der Signalfrequenz grafisch dargestellt. Besonders gut ist in diesem Diagramm die wesentlich schmalere Ausprägung der Resonanzmaxima bei inverser bzw. LH-Leitung zu erkennen. Dies führt bei der Anwendung eines erfindungsgemäßen Aufbaus mit inversen Leitungen dazu, daß bereits eine geringe Verstimmung der Resonatorstruktur durch ein dielektrisches Material zu einer starken Änderung in der Transmission und damit zu einer starken Änderung des zu messenden Signals führt. Durch diesen Effekt ist die Empfindlichkeit eines erfindungsgemäßen Aufbaus deutlich gegenüber dem eines konventionellen Aufbaus erhöht. Typisch für die Verwendung von inversen Leitungen ist das Auftreten von harmonischen Resonanzen mit negativen Ordnungszahlen (in Figur 20 n=-3, -2 und - 1). Die Erfindung ermöglicht insbesondere eine Messung bei Resonanzen mit vergleichsweise großen negativen Ordnungszahlen.

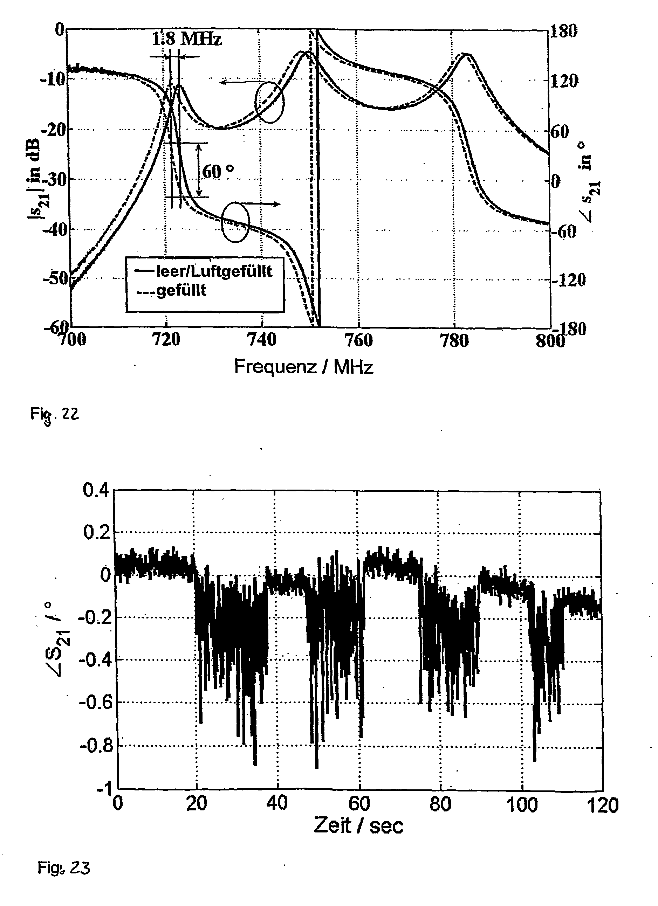

Figur 22 zeigt für eine erfindungsgemäße LH-Leitungsanordnung den Betrag des Ausgangssignals ($|S_{21}|$, linke Ordinate) in Abhängigkeit von der Signalfrequenz und der Phasenwinkel ($s_{21}$, rechte Ordinate) zwischen dem Signalstrom und der Signalspannung für den Fall, daß eine erfindungsgemäße Leitungsanordnung leer bzw. luftgefüllt ist und für den Fall, daß ein Medium mit $\varepsilon_r \neq 1$ mit der Leitungsanordnung wechselwirkt. Figur 22 verdeutlicht insbesondere den Unterschied des Absolutwertes des Signals einer leeren und einer gefüllten erfindungsgemäßen inversen Resonatorstruktur. Beim gefüllten Resonator bzw. bei der gefüllten erfindungsgemäßen Leitungsanordnung (gestrichelte Linie) verschiebt sich die Resonanzfrequenzen gegenüber dem leeren erfindungsgemäßen inversen Resonator zu niedrigeren Frequenzen hin. Dies ist in Figur 22 anhand des Beispiels des Resonanzmaximums der -3. Ordnung (siehe auch Figur 21) dargestellt. Während sich das Maximum der 3. Ordnung nur um 1,8 MHz verschiebt, was einer relativen Verschiebung des Maximums um ungefähr 0,2 % entspricht, führt das Einbringen des Materials in den erfindungsgemäßen Resonator bei der festen Resonanzfrequenz der -3. Harmonischen des ungefüllten Resonators, zu einer Phasenverschiebung des Signals um 60°. Die sich auf die rechte Ordinate beziehenden Kurven sind durch einen Sprung von -180° auf 180° im Bereich von 750 MHz charakterisiert. Die Analyse des durch eine erfmdungsgemäße Leitungsanordnung gelieferten Signals läßt sich demzufolge am leichtesten durch eine Analyse des Phasenwinkels des Signals bei bestimmten Resonanzordnungen durchführen. An diesen Stellen erlaubt die Analyse der Phasenverschiebung in dem Ausgangssignal eine sehr genaue Bestimmung der Eigenschaften des zu untersuchenden Materials.

Figur 23 zeigt ein Diagramm in dem grafisch der gemessene Phasenwinkel ($S_{21}$) in Abhängigkeit von der Zeit, gemessen mit einem erfindungsgemäßen Aufbau nach Figur 19 und Figur 20 dargestellt ist. Bei dieser Messung wurde schubweise Hirse durch das Rohr 133 geleitet. Die deutlich zu erkennende Veränderung des Phasenwinkels zu negativen Werten hin, wobei der Phasenwinkel an einer Resonanz dritter Ordnung gemessen wurde. Diese Veränderung des Phasenwinkels wird am besten bei der dritten Mode der Leitungsanordnung gemessen und die Eigenschaften der Hirse führen zu der Phasenverschiebung, wobei aus dem Betrag der Phasenverschiebung die relative Dielektrizität der Hirse, bzw. wenn diese bekannt ist, die Dichteverteilung bestimmt werden kann.

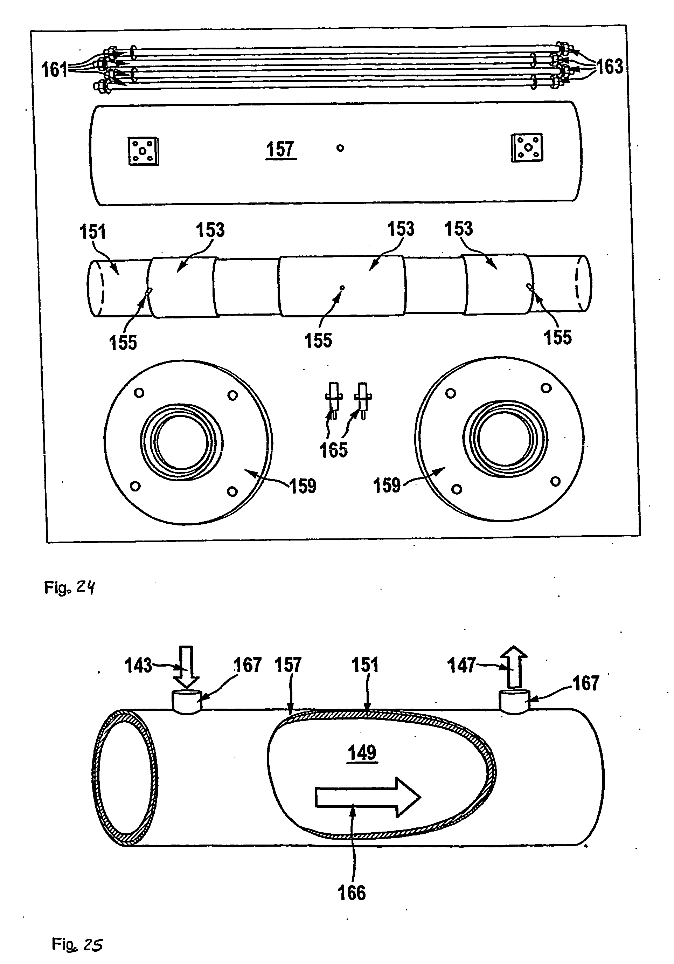

Der Aufbau, der zur Aufnahme des in Figur 23 dargestellten Signals geführt hat, ist in Figur 24 im zerlegten Zustand zu erkennen. Als Rohr 133 kommt hier ein Glasrohr 151, beispielsweise umfassend ein verlustarmes Material wie Borosilicatglas, wie es beispielsweise von der Firma Schott unter der Bezeichnung Duran® vertrieben wird, zum Einsatz. Auf diesem sind die Ladungselemente bzw. Kondensatorplatten 131, die in Form von Kupferplatten 153 ausgebildet sind, aufgebracht. Auf den Kupferplatten 153 sind induktive Elemente 135 in Form von an die Kupferplatten 153 angelöteten Metallstiften 155 ausgebildet. Die Metallstifte 155 können beispielsweise Silberdrähte umfassen. Als eine gemeinsame Masse bildendes Außenrohr 139 dient hier ein Metallrohr 157, in das der Aufbau aus Glasrohr 151, Kupferplatten 153 und Metallstifte 155 eingebaut wird. Der Aufbau wird mit Hilfe zweier Flansche 159 stabilsiert, die durch vier Gewindestangen 161 mit Hilfe von Schraubmuttern 163 am eigentlichen Versuchsaufbau befestigt werden. Das Signal wird mit Hilfe zweier Koaxialanschlüsse 165, die als Anschlüsse 141, 145 dienen in die Leitungsanordnung ein- bzw. aus der Leitungsanordnung ausgekoppelt. Insbesondere ermöglicht die Verbindung jeweiliger nicht dargestellter Koaxialleitungen mittels Koaxialstecker an die Koaxialanschlüsse, daß deren Innenleiter mit den äußeren Metallstiften 155 zum Ein- und Auskoppeln des Signals verbunden ist, während der Außenleiter des Koaxialkabels mit dem Außenrohr und damit der gemeinsamen Erdung verbindbar ist. Dies führt zu einer weiteren Reduktion von Stör- bzw. Rauschsignalen. Durch die Öffnungen des Glasrohres 151 kann das zu messende Material 149 durch die Leitungsanordnung hindurchgeleitet oder in diese eingebracht werden. Im zusammengebauten Zustand hat der in Fig. 24 gezeigte Aufbau beispielsweise eine Länge von ungefähr 300mm, wobei die Meßstrecke beispielsweise eine Länge von ungefähr 230mm aufweisen kann. Das Glasrohr 151 kann dabei beispielsweise einen Durchmesser von ungefähr 32mm zur Aufnahme bzw. zur Durchleitung eines zu untersuchenden Materials bzw. Mediums ausweisen. Dabei kann das Medium bzw. Material mit einem Massendurchsatz von beispielsweise 0.5 bis 1.5 kg/h durch den Aufbau geleitet werden.

Figur 25 zeigt perspektivisch den schematischen Aufbau einer weiteren, weitestgehend aus den in Figur 24 dargestellten Elementen zusammengesetzten erfindungsgemäße Vorrichtung. Durch einen Ausschnitt ist in das Innere des Rohrs 151 zu blicken. Dort ist mit Hilfe eines Pfeils 166 die Bewegungsrichtung des Mediums 149 angedeutet. Die Außenhülle des Rohrs ist ein Metallrohr 157, das als Masse fungiert. Das Metallrohr 157 weist beispielsweise einen Durchmesser von 60 mm auf. Durch die zwei koaxialen Leitungen 167 wird das Signal 143 eingekoppelt und nach Durchgang durch das Material 149 wird das Signal 147 wieder ausgekoppelt. Aus den beiden Signalen kann dann die Messgröße bestimmt werden. Dies kann zum Beispiel durch eine Differenzbildung der beiden Signale geschehen. Durch eine geeignete Programmierung kann eine Auswertung auch von einer integrierten Schaltung automatisch durchgeführt werden. Eine solcher Prozessor ist idealerweise an eine Anzeigeeinrichtung, wie zum Beispiel ein Bildschirm oder auch eine Sprachausgabeeinrichtung, gekoppelt, die einem Benutzer der erfindungsgemäßen Vorrichtung die Materialverteilung oder die Art des Materials 149 angibt.

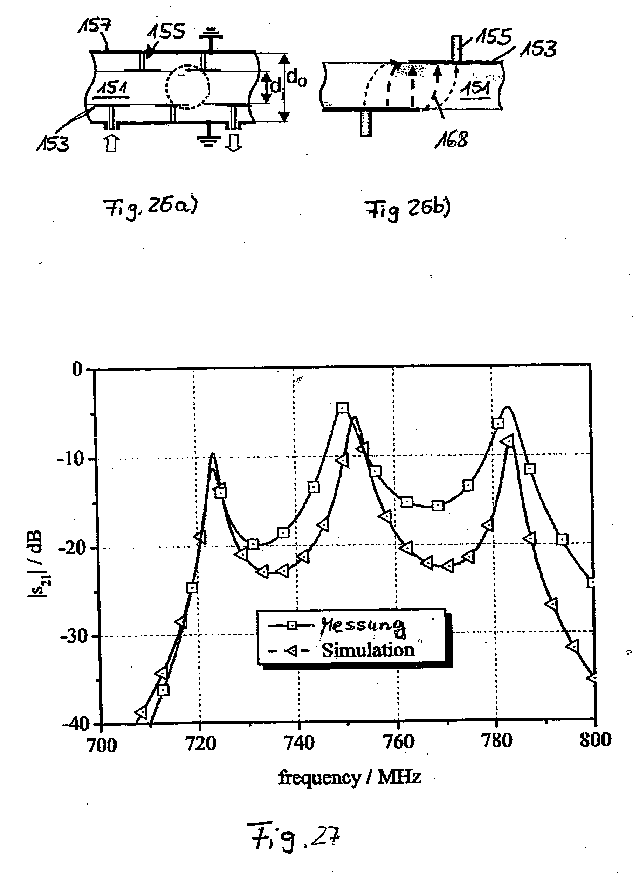

In den Figuren 26a und 26b ist eine schematische Querschnittsansicht der Vorrichtung der Figuren 24 und 25, die als Mikrostreifenresonator ausgebildet ist, dargestellt. Wie zuvor erläutert, ermöglicht, es der in den Figuren 24 bis 26b dargestellte Resonator in Form eines CRLH-Sensors, die Materialdichte eines durch das Glasrohr 151 geführten Mediums 149 zu bestimmen. Dabei besteht der CRLH-Sensor aus einem dielektrischen Förderrohr in Form des Glasrohrs 151 mit einem inneren Durchmesser $d_i$, der beispielsweise im Bereich von 32 mm liegen kann. Metall-Isolator-Metall (MIM) LH-Kolydensatoren, die die Kupferplatten 153 umfassen, sind um das Rohr 151 angeordnet und der Sensor umfaßt ferner Draht-LH-Induktivitäten in Form der Metallstifte 155 zwischen den Kondensatorplatten in Form der Kupferplatten 153 und der Masse, die durch das Metallrohr 157 repräsentiert wird. Dabei weist das Metallrohr 157 einen Durchmesser $d_0$ von ca. 60 mm auf. Streu-RH-Kapazitäten existieren zwischen den LH-Kondensatorplatten und der Masse und Streu-RH-Induktivitäten bestehen entlang der LH-Kondensatorplatten. Figur 26b zeigt einen Ausschnitt eines MIM-Kondensators, der in Figur 26a dargestellt ist. Insbesondere ist in Figur 26b der Verlauf des elektrischen Feldes 168 zwischen den Kupferplatten 153 dargestellt.

In Figur 27 ist der Betrag des Ausgangssignals $|S_{21}|$ in Abhängigkeit von einer Signalfrequenz, wie sie in einer Messung aufgenommen wurde, zusammen mit dem Ergebnis einer Simulation der Schaltung der in den Figuren 24 bis 26b dargestellten erfindungsgemäßen Vorrichtung dargestellt. Es läßt sich erkennen, daß eine sehr gute Übereinstimmung zwischen den Meßwerten und den Simulationswerten besteht.

Im Folgenden wird nun erläutert, wie aus den an einer erfindungsgemäßen Vorrichtung gemessenen Daten als Parameter eines durch die Leitungsanordnung geführten oder in diesem angeordneten Medium eine Materialdichte bestimmt werden kann. Wie zuvor beschrieben, führt eine Veränderung der Permittivität des Mediums oder der Dichte des Mediums, insbesondere eines partikelförmigen Feststoffs, der in die Meßstrecke bzw. Leitungsanordnung eingebracht wird, zu einer Veränderung der Kapazität der Leitungsanordnung und so zu einer Veränderung der Resonanzfrequenz der Leitungsanordnung. In der Nähe der Resonanzfrequenz erreicht der Phasengradient seinen Maximalwert und bleibt zunächst konstant, so daß die Veränderung der Resonanzfrequenz proportional zur Phasenverschiebung der Leitungsanordnung, also der Phasenverschiebung zwischen einem Eingangssignal und einem Ausgangssignal, ist. Eine Materialdichte $\rho$ ist eine Funktion des Mittelwerts der gemessenen Phasenverschiebung $\varphi_{meas}(t)$. Der Mittelwert kann entweder durch Integration der über die Zeit von Funktion $\varphi_{meas}(t)$ oder aus dem Nullwert der fouriertransformierten von $\varphi_{meas}(t)$ bestimmt werden. Zusammen mit der Phasenverschiebung $\varphi_0(t)$ der leeren bzw. luftgefüllten Vorrichtung und der Güte Q der leeren bzw. luftgefüllten Meßstrecke kann die effektive absolute Permittivität abgeschätzt werden durch

$$\varepsilon'_{r,\text{eff}} \approx \left(1 - \frac{\varphi_0 - \varphi_{\text{meas}}}{Q_L}\right)^{-2} \tag{14}$$

Die Konzentration $\alpha$ von Feststoffpartikeln in einem durch die Leitungsanordnung geführten Feststoff, Luft-Gemischs in der Meßstrecke kann definiert werden als

$$\alpha = \frac{V_{MUT}}{V_{Air} + V_{MUT}} , \qquad (15)$$

wobei $V_{MUT}$ das Volumen des Feststoffs und $V_{AIR}$ das Volumen der Luft des Gemischs ist.

Unter der Annahme, daß $\varepsilon_{r,\,eff}$, eine lineare Funktion der Konzentration der Feststoffkonzentration ist, ergibt sich

$$\varepsilon'_{r,eff} = \varepsilon'_{r,MUT} \cdot \alpha + \varepsilon'_{r,Air} \cdot (1 - \alpha) . \qquad (16)$$

Wenn die spezifische Dichte des Schüttguts bei Feststoffpartikel $\rho_{MUT}$ bekannt ist, kann der Integralwert der Materialdichte berechnet werden durch

$$\varrho_{eff}(t) \approx \varrho_{MUT} \cdot \frac{\varepsilon'_{r,eff} - \varepsilon'_{r,Air}}{\varepsilon'_{r,MUT} - \varepsilon'_{r,eff}} , \qquad (17)$$

wobei $\varepsilon_{r,\,MUT}$ die Permittivität des Schüttguts und $\varepsilon_{r,\,AIR}$ die Permittivität der durch die Meßstrecke geförderten Luft ist.

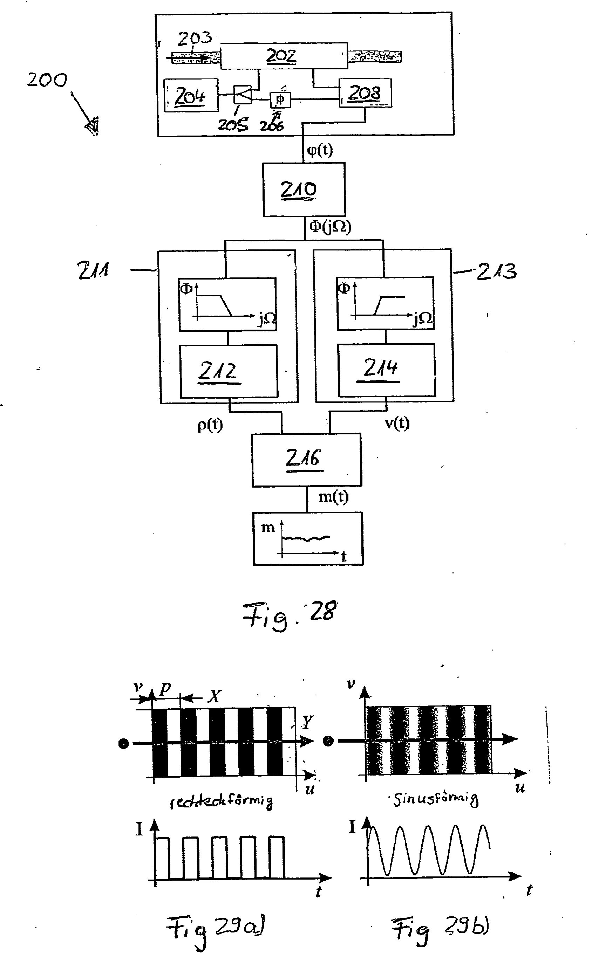

Anhand von Figur 28 wird im Folgenden der Aufbau und die Funktionsweise einer Auswerteinrichtung einer erfindungsgemäßen Vorrichtung erläutert. Diese Auswerteeinrichtung ermöglicht es insbesondere die erfindungsgemäße Vorrichtung als Massendurchflußsensor mit einer im Vergleich zu herkömmlichen Mikrowellen Massendurchflußsensoren erhöhten Empfindlichkeit zu verwenden.

Eine erfindungsgemäße Vorrichtung 200 deren Aufbau in Form eines Blockdiagramms in Figur 28 dargestellt ist, umfaßt insbesondere einen CRLH-Resonator, welcher eine Leitungsanordnung 202 umfaßt. Die Leitungsanordnung 202 wird von einem Massenstrom 203 eines Mediums durchströmt. Ein Signalerfassungsbereich der Vorrichtung 200 umfaßt ferner eine Hochfrequenzquelle 204, die ein Hochfrequenzsignal erzeugt, welches durch einen Leistungsteiler 205 in zwei Signale aufgespalten wird, wobei ein Signal an die Leitungsanordnung 202 angelegt wird und das andere Signal einem Phasenschieber 206 zugeführt wird. Das Hochfrequenzsignal, das am Ausgang der Leitungsanordnung 202 abgegriffen wird, wird an einen Eingang eines Phasendetektors 208 geleitet. Ferner wird an den Phasendetektor 208 das Ausgangssignal des Phasenschiebers 206 angelegt. Der Phasenschieber 206 kann insbesondere so kalibriert werden, daß wenn die Leitungsanordnung 202 leer bzw. luftgefüllt ist, eine Phasendifferenz von Null zwischen dem an den Phasendetektor 208 angelegten Signalen besteht. Bei einem Fluß von Partikeln durch die Leitungsanordnung 202 wird eine von Null unterschiedliche Phasenverschiebung detektiert. Der Phasendetektor 208 liefert eine Phasendifferenz in Abhängigkeit von der Zeit φ (t). Während der Mittelwert der Funktion φ (t) die Materialdichteinformation enthält, enthält die Funktion φ (t) ferner Geschwindigkeitsinformationen des Massenstroms 203. Um diese Werte zu ermitteln, wird das Ausgangssignal des Phasendetektors 208 an eine Transformationseinheif 210, mittels der insbesondere eine Fourier-transformation der Funktion φ (t) durchgeführt wird, angelegt.

Die Ausgangssignale der Transfennaiionseinheit 210 werden an zwei Auswerteeinlieten 211, 213 angelegt. In einer ersten Auswertungseinheit 211 wird mittels einer Durchschnittsbestimmungseinheit 212, eine Dichte in Form der Funktion ρ (t) als erster Parameter des durch die Leitungsanordnung 202 geleiteten Mediums bestimmt. Dazu wird das aus der Transformationseinheit 210 erhaltene Signal durch einen Tiefpaßfilter an die Einheit 212 weitergeleitet. Grund hierfür ist, daß die Dichteinformationen gerade in dem Gleichstromanteil des Ausgangssignals der Leistungsanordnung enthalten sind. Mittels der zweiten Auswerteeinheit 213 wird in einer Signalverarbeitungseinheit 214 die Funktion ν (t), also die Geschwindigkeit des Massenstroms 203 durch die Leitungsanordnung 202, als zweiter Parameter des durch die Leitungsanordnung 202 geleiteten Mediums bestimmt. Hierzu durchläuft das Signal der Transformationseinheit 210 einen HochpaDfilter, da die Geschwindigkeitsinformation gerade in dem Wechselstromanteil des Ausgangssignales der Leitungsanordnung enthalten ist. Die Kenntnis der Funktionen ρ (t) und ν (t) erlaubt es mittels einer dritten Auswerteinheit in Form einer Signalnachbearbeitungseinheit 216 den Massenstrom in Abhängigkeit von der Zeit t als Funktion m (t) zu bestimmen.

In dem in Figur 28 dargestellten Beispiel einer Auswerteeinrichtung wird also mittels einer Signalerkennungseinheit, die einen Partikelfluß in einer Leitungsanordnung detektiert, ein Massenfluß bestimmt, wobei mittels einer ersten Auswerteeinheit eine Bestimmung einer zeitabhängigen Dichte des Mediums, das mittels des Massenstroms 203 durch die Leitungsanordnung 202, hindurchgeht, erfolgt, während über eine zweite Auswerteeinheit eine Bestimmung der Geschwindigkeit des Massenstroms 203 erfolgt.

Nachdem zuvor bereits die Vorgehensweise zur Bestimmung der Materialdichte $\rho$ (t) beschrieben wurde, wird im Nachfolgenden nun eine Möglichkeit zur Bestimmung der Geschwindigkeitsinformation $\nu$(t), die mittels der Auswerteeinheit 213 durchgeführt wird, beschrieben.

Um die Geschwindigkeit eines Objekts oder eines Partikelflusses mittels der erfindungsgemäßen Vorrichtung zu bestimmen, kann die Verschiebung der komplexen Übertragungsfunktion $S_{21}$ bei einer Resonanzmode durch-Verwendung eines monofrequenten Signals untersucht werden. Beispielsweise kann hierzu die dritte Resonanzmode eines erfindungsgemäßen Resonators verwendet werden. Jedes mal, wenn ein Objekt einen Kondensator des Resonators bzw. der Leitungsanordnung 202 erreicht, beschreibt das übertragene Hochfrequenzsignal bzw. das Ausgangssignal der Leitungsanordnung 202, annährend einen Sinus-Verlauf, welcher bei 0° beginnt, wenn das Objekt in den Kondensator eintritt, und bei 180° endet, wenn das Objekt den Kondensator verläßt. Eine Raumfilterungsgeschwindigkeitsmessung verwendet die fundamentale Frequenz dieser Beeinflussung der Leitungsanordnung. Sie hängt von physikalischen Parametern der Leitungsanordnung 202 ab und ist proportional zu der Geschwindigkeit des durch die Leitungsanordnung tretenden Objekts.

Eine weitere Möglichkeit der Geschwindigkeitsbestimmung besteht in der Verwendung der Autokorrelation.

Das in oder Vorrichtung' 200 verwendete Verfahren ist an die Idee der Laser-Doppler-Geschwindigkeits-Messungstechnik angelehnt, aber der Meßaufbau ist bedeutend einfacher. So ist für eine Laser-Doppler-Geschwindigkeits-Messung ein umfangreicher Meßaufbau notwendig und es werden 2 kohärente Laser benötigt, um gute Ergebnisse zu erzielen. Bei der Raumfiltergeschwindigkeitsmessung wird ein optisches System verwendet, welches eine Lichtquelle umfaßt, wobei ein zu messendes Objekt durch einen Lichtstrahl der Lichtquelle hindurchtritt. Der Lichtstrahl fällt, insbesondere über eine Linse, auf einen Raumfilter und nach Durchtritt durch den Raumfilter auf einen Fotodetektor. Bei Hindurchtreten des Objekts durch den Lichtstrahl entsteht aufgrund der räumlichen, periodischen Durchlässigkeit des Raumfilters durch den Objektschatten ein periodisches Ausgangssignal an dem Fotodetektor. Dieses Ausgangssignal, insbesondere die Frequenz des periodischen Ausgangssignals, enthält eine Information über die Geschwindigkeit des Objekts. Zwei Beispiele für beleuchtete Raumfilter, die aus Gitterlinien für die Geschwindigkeitsmessung in eine $\overline{e}_u$ -Richtung beleuchtet sind, sind in den Figuren 29a und 29b dargestellt. In den Figuren 29a und 29b ist zu erkennen, wie die Intensität, des durch den Photodetektor empfangenen Lichts zeitlich periodisch variiert. Das so erhaltene Signal hängt von der Geschwindigkeit $\upsilon = \upsilon_0 . c_u$ des sich bewegenden Objekts und den Eigenschaften des Raumfilters ab. So ergibt beispielsweise das Gitter in Figur 29a ein rechteckiges Signal während das Gitter in Figur 29b ein sinusförmiges Signal ergibt.

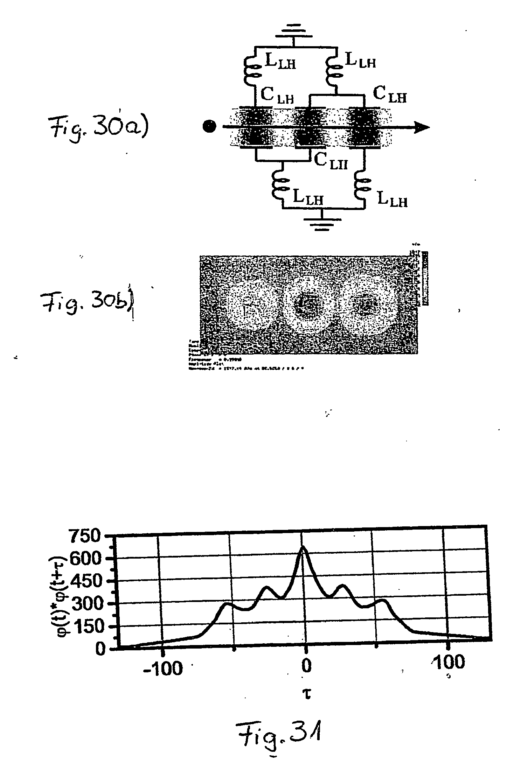

Überträgt man dieses Verfahren auf die erfindungsgemäße Vorrichtung zeigt sich, daß die Feldverteilung innerhalb der Leitungsanordnung 202 ein quasi sinusförmiges Verhalten zeigt. Figur 29 zeigt ein Äquivalenzschaltbild einer erfindungsgemäßen Leitungsanordnung und die entsprechende Feldverteilung des Hochfrequenzfeldes in einer Seitenansicht. In Figur 30b ist eine Aufsicht auf die Feldverteilung gezeigt. Aufgrund des Raumfiltereffekts ermöglicht es der Aufbau der erfindungsgemäße Vorrichtung, insbesondere der Leitungsanordnung in der nachfolgenden beschriebenen Weise die Geschwindigkeit eines sich durch die Leitungsanordnung bewegenden Objekts oder Massenstroms zu bestimmen. Hierzu wird anstelle eines Spannungssignals eines Fotodetektors ein Leistungssignal der Leitungsanordnung ausgewertet.

Der in der Erfindung verwendete Räumfiltereffekt basiert auf folgender theoretischer Grundlage:

Angenommen f(x, y) ist Feldintensitätsverteilung des sich durch die Leitungsanordnung bewegenden Objekts in der x-y Ebene und h(x, y) ist die Übertragungsfunktion der Raumfilterverteilung, dann ergibt sich das von der Leitungsanordnung abgegebene Signal g(x$_r$,y$_r$) durch ein Faltungsintegral zu

$$g(x_r, y_r) = \int\int_{-\infty}^{\infty} f(x_r - x, y_r - y)h(x,y)dx\,dy, \tag{18}$$

Hierbei wird angenommen, daß sich das Objekt mit einer Geschwindigkeit bewegt und gilt, das $= v_x t + c_1$ und $y_r = v_y t + c_2$ ist, wobei $c_1$ und $c_2$ Konstanten sind.

Unter der Annahme, daß die Feldintensitätsverteilung f(x, y) einem stationären ergodischen Prozeß in zwei Dimensionen folgt, kann die Fouriertransfonnierte der Autokorrelationsfunktion von g(x$_r$, x$_r$) geschrieben werden als

$$G_p(\mu, \nu) = F_p(\mu, \nu) H_p(\mu, \nu).$$ (19)

Aufgrund der Tatsache, daß in der erfindungsgemäßen Vorrichtung, also der Leitungsanordnung 202 ein Massenstrom 203 im wesentlichen in eine Raumrichtung, beispielsweise entlang einer x-Achse erfolgt, kann angenommen werden, daß die Partikel entlang der x-Achse mit einer Geschwindigkeit $v=v_x e_x$ bewegen, also $v_\rho=0$ gilt. Daher ist es ausreichend, wenn die Transmission h(x, y) des räumlichen Filters periodisch in x- und gleichmäßig in y-richtung ist. Daher kann die Leistungsspektraldichtefunktion Gp(f) durch Integration der Formel 19 über die Raumfrequenz v abgeleitet werden zu

$$G_p(f) = \frac{1}{|\vec{v}|} \int_{-\infty}^{\infty} F_p\left(\frac{f}{|\vec{v}|}, \nu\right) H_p\left(\frac{f}{|\vec{v}|}, \nu\right) d\nu$$ (20)

Hierbei wird die Beziehung $\mu=f/|\vec{v}|$ verwendet und f ist hierbei die Frequenz in der Zeitdomäne.

Die periodische Übertragungsfunktion der Geschwindigkeitsmessungen in einer Richtung ist gegeben als

$$h(x, y) = h(x) = h(+mp)$$ (21)

Das gesamt Leistungsspektrum der Transmissionsfunktion kann abgeleitet werden durch

$$H(\mu, \nu) = X^2 Y^2 |H_Y(\nu)|^2 |H_X(\mu)|^2 |H_c(\mu)|^2 |H_s(\mu)|^2$$ (22)

Hierbei ist $X^2 Y^2$ die Verteilung der Leistung aufgrund des Fensterbereichs des Raumfilters. $|H_Y(\nu)|^2$ und $|H_x(\mu)|^2$ sind die Fouriertransformierten der Rechteclcfunktionen, die sich aus der Dimensionen (in die x- und y-Richtung) des Raumfilters, das heißt den Fensterbereich ergeben. $|H_c(\mu)|^2$ ergibt sich aus der Periodizität in dem Intervall p der Überragungsfunktion. $|H_s(\mu)|^2$ wird aus der Fouriertransformierten von einer Periode der Transmission h(x) erhalten und stellt die Verteilung der Transmissionsfunktion innerhalb eines Schlitzes dar. Angenommen, daß eine sinusförmige Transmission vorliegt, ist h(x) gegeben durch

$$h(x) = \frac{1}{2}\left(1 + \cos\frac{2\pi}{p}x\right).$$ (23)

Das Leistungsspektrum ergibt sich damit zur

$$|H_{s1}(\mu)|^2 = \left(\frac{\sin \pi \mu p}{\pi \mu p}\right)^2 \left(\frac{1}{2(1 - \mu^2 p^2)}\right)^2$$ (24)

Die Frequenzkomponente, die bei $\mu = 1/p$ gewählt ist, stellt periodische Signale bereit, die eine temporäre Frequenz $f=\mu v = v/p$ aufweisen. Die Frequenz kann verwendet werden, um die Geschwindigkeit zu bestimmen. Dazu wird die Frequenz f bestimmt, an welcher das Leistungsspektrum einem Maximalwert aufweist. Das Leistungsspektrum enthält auch höhere Harmonische bei ungeraden Vielfachen der Frequenz f, wobei diese Maximalwerte deutlich abgeschwächt sind. Aus einer Analyse des Leistungsspektrums läßt sich also die Lage der Maximalwerte in dem Spektrum in der Frequenzdomäne bestimmen und diese Lage der Maximalwerte erlaubt gemäß der zuvor angegebenen Gleichung die Bestimmung der Geschwindigkeit v des Objekts. Bewegen sich mehrere Objekte mit unterschiedlicher Geschwindigkeit durch die Leitungsanordnung, weißt das Leistüngsspektrum in der Frequenzdomäne mehrere Maximalwerte auf, wobei jedes Maximum bei einer der jeweiligen Geschwindigkeit der Objekte entsprechenden Frequenz liegt.

Wie in Figur 28 dargestellt, kann auf Grundlage der zuvor angeführten theoretischen Zusammenhänge die Materialdichte und Materialgeschwindigkeit wie folgt bestimmt werden:

Zuerst wird das gemessene, kontinuierliche Signal $\varphi(t)$ transformiert in die Frequenzdomäne $\Phi_n$, wobei eine diskrete Fouriertransformation verwendet wird. Ein Hochpaßfilter kann den Gleichstromanteil, der die Materialdichteninformatitin enthält, unterdrücken. Hierbei ist zu beachten, daß der Hochpaßfilter eine scharfe Abschnittkante aufweisen muß, um nur die die Dichteinformation tragenden Frequenzteile im Leistungsspektrum auszublenden, hingegen die die Geschwindigkeitsinformation tragenden Frequenzanteile im Leistungsspektrum passieren zu lassen. Beispielsweise bei einer Resonatorlänge von weniger als 1 m und einer Geschwindigkeit von 10m/s liegt der Maximalwert im Leistungsspektrum gerade bei 10Hz. Alternativ zum Einsatz eines Hochpaßfilters lassen sich auch die Gleichstromanteile im Ausgangssignal der Leitungsanordnung unterdrucken. Dazu kann von dem Ausgangssignal der Leitungsanordnung vor der Durchführung der Fouriertransformation der Mittelwert des Ausgangssignals in der Zeitdomäne subtrahiert werden. Die Anwesenheit einer fundamentalen Mode $f_p$ und Harmonischen in der Frequenzdomäne $\Phi_n$ zeigt einen Fluß durch die Leitungsanordnung an. Die Geschwindigkeit kann bestimmt werden durch

$$v = \frac{f_p}{2} \cdot \frac{L_{sens}}{c}, \qquad (25)$$

wobei $L_{sens}$ die Länge der Meßstrecke, also im wesentlichen die Länge der Leitungsanordnung ist, und c die Anzahl der erhaltenen Maximalwerte ist, wenn ein einzelnes Objekt durch die Leitungsanordnung bzw. den Sensor hindurchtritt.

Wenn der Einfluß eines einzelnen Objekts während seines Durchgangs durch die Leitungsanordnung bekannt ist, zeigt die Autokorrelation der hochpaßgefilterten Phase $\Phi_h(t)$, wie bereits zuvor beschrieben, unterschiedliche Maximalwerte neben dem Hauptmaximum. In Figur 31 ist der Verlauf eine Autokorrelationsfunktion $\Phi_h(t)$ dargestellt und zwar für eine dritte Resonanzmode des Resonators, wenn ein einzelnes Objekt durch die Leitungsanordnung hindurchtritt. Wie zu erwarten ist, tritt das Hauptmaximum für $\tau = 0$ auf. Die Signalperiodizität führt zu zusätzlichen Maximalwerten, die Geschwindigkeitsinformationen beinhalten. Die Verwendung der Autokorrelationsfunktion ermöglicht es, eine große Anzahl von Objekten, die gleichzeitig durch die Leitungsanordnung hindurchtreten, zu detektieren und die jeweilige Geschwindigkeit des Objekts zu bestimmen.

Zusammenfassend liefert die vorliegende Erfindung einen Sensor bzw. eine Vorrichtung zur Bestimmung unterschiedlicher Parameter eines Mediums. Es wird ein Sensor zur Verfügung gestellt, der insbesondere die Bestimmung einer Dichte des Mediums aber auch einer Geschwindigkeit des Mediums ermöglicht und so als Massendurchflußsensor einsetzbar ist. Dabei basiert der Sensor auf einen CRLH-Resonator bzw. einem Verbundsrechtshändigen/linkhändigen Übertragsleitungs-Resonator (CRLH-TL-Resonator). Im Vergleich zu Mikrowellerisensoren, die Frequenzen nutzen, die im Bereich einer Abschnittsfrequenz einer Leitungseinrichtung liegen, kann die Leitungsanordnung der Erfindung bei geringeren Frequenzen betrieben werden. Im Gegensatz zu bekannten Sensoren weist die erfindungsgemäße Vorrichtung ferner keinen Zielkonflikt zwischen Sensorlänge bzw. Resonatorlänge und Arbeitsfrequenz auf, so daß ein kompakter, bei niedrigen Frequenzen arbeitender und eine ausreichende Meßgenauigkeit aufiweisender Sensor zur Detektion geringer Änderungen in der Permittivität bereitgestellt werden kann.

Die Raumfilterungsgeschwindigkeitsmessung ermöglicht die Detektion der Materialgeschwindigkeit bzw. der Geschwindigkeit des Mediums mit einem einzigen Sensor. Hierbei wir die Meßgenauigkeit der Geschwindigkeitsmessung im wesentlichen durch die Eigenschaften der Signalverarbeitung bzw. die Auswerteeinrichtung und die Eigenschaften des Raumfilters vorgegeben.

Die in der vorstehenden Beschreibung, in den Zeichnungen sowie in den Ansprüchen offenbarten Merkmale können sowohl einzeln als auch in beliebiger Kombination für die Verwirklichung der Erfindung wesentlich sein. Insbesondere ist zu beachten, daß die Erfindung nicht auf die in den Ausführungsbeispielen beschriebenen Ausführungsformen beschränkt ist. So können beispielsweise abweichende geometrische Formen der Elemente verwendet werden, insbesondere ist die Form der dargestellten Rohre nicht auf einen runden Querschnitt beschränkt. So können auch mehreckige, wie beispielsweise dreieckige, quadratische oder rechteckige, elliptische, ovale oder andere Querschnittsformen verwendet werden.

**Bezugszeichenliste**

| | |
|---|---|
| 1 | Meßsystem |
| 3 | Rohr |
| 5 | Medium |
| 7a, 7b | Kondensatorplatte |
| 9 | Masse |
| 11a, 11b | Leitung |
| 13 | Netzwerkanalysator |
| 15 | Elektrisches Feld |
| 17 | Materialprobe |
| 19 | Kondensatoraufbau |
| 21a, 21b | Kondensatorplatte |
| 23 | Spulenaufbau |
| 25 | Windung |
| 27 | Leitungsresonator |
| 29a, 29b | Leitung |
| 31a, 31b | Ende |
| 33a, 33b | Spule |
| 35a, 35b | Strecke |
| 37a, 37b | Anschluß |
| 39a, 39b | Anschluß |
| 41a, 41b | Kondensator |
| 43a, 43b | Masse |
| 45b | Spule |
| 47b | Kondensator |
| 49 | Widerstand |
| 51 | Widerstand |
| 53,53',53'',53''' | Leitungsanordnung |
| 55, 55', 55'', 55''' | Erdung |
| 57 | Elementarzelle |
| 59, 59', 59'', 59''' | Kondensatorplatte |
| 61, 61', 61'', 61''' | Draht |
| 63, 63', 63'' | Kapazität |
| 65, 65', 65'', 65''' | Signal-Eingang |
| 67, 67', 67'', 67''' | Signal-Ausgang |
| 69', 69'', 69''' | Material |
| 71', 71'' | elektrische Feldlinie |
| 73, 73' | Leitungsanordnung |
| 75, 75' | Substrat |
| 77, 77' | Bereich |
| 79, 79' | Spalt |
| 81 | Kontaktzunge |
| 83 | Kontakt |
| 85, 85' | Signal-Eingang |
| 87, 87' | Signal-Ausgang |
| 89, 89' | Medium |
| 95 | Leitungsanordnung |
| 97 | Signal-Eingang |
| 99 | Signal-Ausgang |
| 101 | kapazitives Element |
| 103 | Elementarzelle |
| 105 | Spule |
| 107 | Erdung |
| 109 | Medium |
| 111 | Leitungsanordnung |

| 113 | Rohr |
| 115 | Erdungsfläche |
| 117 | Medium |
| 119 | Kondensatorplatte |
| 121 | Draht |
| 123 | elektrische Feldlinie |
| 131 | Kondensatorplatte |
| 133 | Rohr |
| 135 | induktive Element |
| 137 | Masse |
| 139 | Außenrohr |
| 141 | Anschluß |
| 143 | Signal |
| 145 | Anschluß |
| 147 | Signal |
| 149 | Medium |
| 151 | Glasrohr |
| 153 | Kupferplatte |
| 155 | Metallstift |
| 157 | Metallrohr |
| 159 | Flansch |
| 161 | Gewindestange |
| 163 | Schraubmutter |
| 165 | Koaxialanschluß |
| 166 | Flußrichtung des Mediums |
| 167 | Koaxialleitung |
| 168 | Elektrisches Feld |
| 200 | Vorrichtung |
| 202 | Leitungsanordnung |
| 203 | Massenstrom |
| 204 | Hochfrequenzquelle |
| 205 | Leistungsteiler |
| 206 | Phasenschieber |
| 208 | Phasendetektor |
| 210 | Transformationseinheit |
| 211 | Auswerteeinheit |
| 212 | Durchschnittsbestimmungseinheit |
| 213 | Auswerteeinheit |
| 214 | Signalverarbeitungseinheit |
| 216 | Signalnachbearbeitungseinheit |

| A | Achse |
| B, C | Richtung |

| $f_0$ | Resonanzfrequenz |
| $\varepsilon$ | Dielektrizitätskonstante |
| $d_i$, $d_0$ | Durchmesser |

**Patentansprüche**

1. Vorrichtung (200), umfassend eine Meßstrecke, die eine Leitungsanordnung (53, 53', 53'', 53''', 73, 73', 95, 111, 202) mit zumindest zwei entlang der Meßstrecke angeordneten Elementarzellen (57, 103), die jeweils eine elektrische Strecke von einem Eingang (65, 65', 65'', 65''', 85, 85', 97, 141) zu einem Ausgang (67, 67', 67'', 67''', 87, 87', 99, 145) umfassen, aufweist, wobei die Elementarzellen (57, 103) jeweils ein kapazitives Element (59, 59', 59'', 59''', 101, 119, 131, 153) umfassen und die Vorrichtung einen Generator (204) zur Erzeugung eines elektrischen und/oder elektromagnetischen Signals (143) umfaßt, wobei das elektrische und/oder elektromagnetische Signal (143) an den Eingang (65, 65', 65'', 65''', 85, 85', 97, 141) einer ersten Elementarzelle angelegt ist und der Ausgang der ersten Elementarzelle mit dem Eingang einer zweiten Elementarzelle verbunden ist, und das kapazitive Element (59, 59', 59'', 59''', 101, 119, 131, 153) der jeweiligen Elementarzelle in der elektrischen Strecke der ersten und zweiten Elementarzelle angeordnet ist und jeweils ein induktives Element (61, 61', 61'', 61''', 83, 105, 121, 135, 155) die elektrische Strecke der ersten Elementarzelle und der zweiten Elementarzelle mit einer elektrischen Masse (55, 55', 55'', 55''', 107, 115, 137, 157) verbindet, **dadurch gekennzeichnet, daß** die Vorrichtung zur Bestimmung eines Parameters eines Mediums (69', 69'', 69''', 89, 89', 109, 117, 149) eingerichtet ist und **gekennzeichnet ist durch** Mittel zum Einbringen des Mediums in die Meßstrecke derart, dass die elektrischen Eigenschaften des kapazitiven Elements (59, 59', 59'', 59''', 101, 119, 131, 153) **durch** das Medium (69', 69'', 69''', 89, 89', 109, 117, 149) veränderbar sind und mittels der Meßstrecke durch Einleitung des elektrischen und/oder elektromagnetischen Signals (143) in die Meßstrecke bereichsweise ein elektromagnetisches Feld (71', 71'', 123, 168) in das Medium (69', 69'', 69''', 89, 89', 109, 117, 149) eingekoppelt und/oder ausgekoppelt wird, und die Vorrichtung eine Auswerteeinrichtung (205, 206, 208, 210, 211, 213, 216), die zur Analyse eines Ausgangssignals (147) der Meßstrecke und zur Bestimmung des Parameters des Mediums (69', 69'', 69''', 89, 89', 109, 117, 149) dient, aufweist, und dass eine Abmessung, insbesondere eine Abmessung entlang der Meßstrecke, zumindest einer Elementarzelle (57, 103), vorzugsweise aller Elementarzellen, zumindest bereichsweise kleiner als eine Wellenlänge des elektrischen und/oder elektromagnetischen Signals (143) und/oder des elektromagnetischen Felds (71', 71'', 123, 168) ist.

2. Vorrichtung nach Anspruch 1, **dadurch gekennzeichnet, daß** die Auswerteeinrichtung derart eingerichtet ist, daß als Parameter des Mediums (69', 69'', 69''', 89, 89', 109, 117, 149) eine relative Dielektrizitätskonstante, eine relative Permeabilitätskonstante, eine Art des Mediums (69', 69'', 69''', 89, 89', 109, 117, 149), eine Dichteverteilung und/ oder die Dichte des Mediums (69', 69'', 69''', 89, 89', 109, 117, 149), eine Verteilung des Mediums (69', 69'', 69''', 89, 89', 109, 117, 149) in der Meßstrecke, eine Geschwindigkeit des Mediums (69', 69'', 69''', 89, 89', 109, 117, 149) in der Meßstrecke, ein Mengendurchfluß und/oder Massendurchfluß des Mediums (69', 69'', 69''', 89, 89', 109, 117, 149) durch die Meßstrecke, und/oder ein Phasenzustand des Mediums (69', 69'', 69''', 89, 89', 109, 117, 149), wie flüssig, fest und/oder gasförmig, bestimmbar ist bzw. sind, die Vorrichtung derart ausgebildet ist, daß als Medium (69', 69'', 69''', 89, 89', 109, 117, 149) ein fluides, insbesondere flüssiges und/oder gasförmiges, und/oder festes, insbesondere pulverförmiges und/oder körniges, Medium (69', 69'', 69''', 89, 89', 109, 117, 149) und/oder ein Medium (69', 69'', 69''', 89, 89', 109, 117, 149) umfassend zwei Phasen, wie flüssig-gasförmig, flüssig-flüssig, flüssig-fest, gasförmig-fest, fest-fest, gasförmig-gasförmig und/oder flüssig-gasförmig-fest in die Meßstrecke einbringbar ist und/ oder das Medium (69', 69'', 69''', 89, 89', 109, 117, 149) relativ zu der Leitungsanordnung (111, 202) bewegbar ist.

3. Vorrichtung nach Anspruch 1 oder 2, **dadurch gekennzeichnet, daß** die Meßstrecke als Mittel zum Einbringen des Mediums zumindest eine Leitungseinrichtung zur Leitung des Mediums, wie ein Rohr (113, 133, 151), eine Rinne und/oder ein Förderband umfaßt, wobei die Leitungsanordnung (111) zumindest bereichsweise derartig im Bereich der Leitungseinrichtung, insbesondere zumindest einer Oberfläche derselben, anordbar ist, daß in das Medium (117, 149) zumindest bereichsweise das elektromagnetische Feld (123, 168) einkoppelbar ist, wobei vorzugsweise die Leitungseinrichtung (113, 133, 151) zumindest bereichsweise einen runden, ovalen, elliptischen, dreieckigen, quadratischen, rechteckigen und/oder mehreckigen Querschnitt und/oder Abschnitte dieser Querschnitte, wie ein Kreissegment und/oder Ellipsensegment, aufweist, vorzugsweise die Leitungseinrichtung (113, 133, 151) zumindest bereichsweise ein dielektrisches und diamagnetisches Material, insbesondere Glas, einen Kunststoff, wie Plastik, Keramik und/oder ein elastisches und/oder plastisch verformbares Material umfaßt, vorzugsweise die Vorrichtung derart ausgebildet ist, daß das Medium (109, 149) in der Leitungseinrichtung (113, 133, 151) anordbar ist und/oder durch die Leitungseinrichtung (113, 133, 151) leitbar ist, wobei insbesondere eine Fördereinrichtung, wie eine hydraulische, pneumatische, magnetische und/oder die Gravitation ausnutzende Pumpeinrichtung mittels der das Medium (109, 149) durch die Leitungseinrichtung (113, 133, 151) leitbar ist, vorgesehen ist, und/oder vorzugsweise die Leitungseinrichtung relativ zu der Leitungsanordnung bewegbar ist.

4. Vorrichtung nach einem der vorangehenden Ansprüche, **dadurch gekennzeichnet, daß** die Vorrichtung derart ausgebildet ist, daß als elektrisches und/oder elektromagnetisches Signal (143) zumindest ein Hochfrequenzsignal, insbesondere ein Mikrowellensignal und/oder Millimeterwellensignal, in die Meßstrecke einleitbar ist und/oder in das Medium hochfrequente elektromagnetische Strahlung, insbesondere Mikrowellenstrahlung und/oder Millimeterwellenstrahlung, einkoppelbar ist und/oder zumindest ein Ausgang des Generators (204) mit zumindest einem Eingang (65, 65', 65'', 65''', 85, 85', 97, 141) der elektrischen Strecke der ersten Elementarzelle verbunden ist, vorzugsweise mittels zumindest eines Koaxialkabels, wobei vorzugsweise zumindest ein Leiter des Koaxialkabels, insbesondere zumindest ein Außenleiter, mit der elektrischen Masse (55, 55', 55'', 55''', 107, 115, 137, 157), zumindest indirekt, verbunden ist.

**5.** Vorrichtung nach einem der vorangehenden Ansprüche, **dadurch gekennzeichnet, daß** die Leitungsanordnung (53, 53', 53'', 53''', 73, 73', 95, 111, 202) zumindest ein kapazitives Element umfassend zumindest ein erstes Ladungselement und zumindest ein zweites Ladungselement, wie in Form zumindest eines Kondensatorplattenpaares (59, 59', 59'', 59''', 101, 119, 131, 153), umfaßt, wobei vorzugsweise das erste und/oder das zweite Ladungselement, insbesondere zumindest eine der Kondensatorplatten (119, 131, 153), zumindest bereichsweise auf zumindest einer dem Medium (117, 149) abgewandten Seite, insbesondere auf einer, vorzugsweise zumindest bereichsweise gekrümmten und/oder nicht planaren, Oberfläche der Leitungseinrichtung (113, 133, 151) anordbar ist bzw. sind und/oder zumindest bereichsweise ein elektrisch leitendes Material, wie Kupfer, Metall, Stahl, Silber, zumindest ein Halbleitermaterial und/oder zumindest ein Polymermaterial, umfaßt bzw. umfassen, wobei vorzugsweise die Vorrichtung derart ausgebildet ist, daß das elektromagnetische Feld (71', 71'', 123, 168) zwischen dem ersten und dem zweiten Ladungselement (59', 59'', 119, 153) erzeugt wird, wobei insbesondere das elektromagnetische Feld (71', 71'', 168) zwischen Ladungselementen (59', 59'', 119, 153) unterschiedlicher Elementarzellen erzeugt wird, vorzugsweise die Vorrichtung derart ausgebildet ist, daß das Medium (117, 149) zwischen dem ersten und zweiten Ladungselement (119, 131, 153) angeordnet wird, insbesondere das erste und das zweite Ladungselement (119, 131) auf sich gegenüberliegenden Seiten der Leitungseinrichtung (113, 133, 151) angeordnet sind, vorzugsweise das erste und das zweite Ladungselement (119, 131) zumindest bereichsweise sich gegenüberliegend, insbesondere parallel und/oder planparallel, zueinander angeordnet sind, und/oder vorzugsweise das erste und zweite Ladungselement (131, 153), insbesondere entlang zumindest einer Längsachse der Leitungseinrichtung (133, 151), versetzt zueinander angeordnet sind.

**6.** Vorrichtung nach einem der vorangehenden Ansprüche, **dadurch gekennzeichnet, daß** die Leitungsanordnung zumindest eine dritte Elementarzelle umfaßt, wobei das kapazitive Element der dritten Elementarzelle in der elektrischen Strecke der dritten Elementarzelle angeordnet ist, zumindest ein induktives Element die elektrische Strecke der dritten Elementarzelle mit der elektrischen Masse verbindet und/oder zumindest ein Eingang der elektrischen Strecke der dritten Elementarzelle mit zumindest einem Ausgang der elektrischen Strecke der ersten Elementarzelle verbunden ist und/oder zumindest ein Ausgang der elektrischen Strecke der dritten Elementarzelle mit zumindest einem Eingang der elektrischen Strecke der zweiten Elementarzelle verbunden ist, wobei vorzugsweise die Vorrichtung eine Vielzahl von dritten Elementarzellen umfaßt, wobei insbesondere ein Ausgang der elektrischen Strecke einer ersten dritten Elementarzelle mit einem Eingang der elektrischen Strecke zumindest einer zweiten dritten Elementarzelle verbunden ist.

**7.** Vorrichtung nach einem der vorangehenden Ansprüche, **dadurch gekennzeichnet, daß** zumindest zwei erste, zweite und/oder dritte Elementarzellen und/oder Kombinationen dieser Elementarzellen periodisch zueinander angeordnet sind, zumindest ein Eingang der Auswerteeinrichtung (208) mit zumindest einem Ausgang (67, 67', 67'', 67''', 87', 87'', 99, 145) der elektrischen Strecke der zweiten Elementarzelle und/oder zumindest einem Ausgang des Generators (204) verbunden ist, insbesondere mittels zumindest eines Koaxialkabels, wobei vorzugsweise zumindest ein Leiter des Koaxialkabels, insbesondere zumindest ein Außenleiter, mit der elektrischen Masse (55, 55', 55'', 55''', 107, 115, 137, 157), zumindest indirekt, verbunden ist und/oder zumindest ein Eingang der Auswerteeinrichtung (208) mit dem Eingang (65, 65', 65'', 65''', 85, 85', 97, 141) der elektrischen Strecke der ersten Elementarzelle verbunden ist, insbesondere mittels zumindest eines Koaxialkabels, wobei vorzugsweise zumindest ein Leiter des Koaxialkabels, insbesondere zumindest ein Außenleiter, mit der elektrischen Masse (55, 55', 55'', 55''', 107, 115,137, 157), zumindest indirekt, verbunden ist, und/oder der Ausgang der elektrischen Strecke der zweiten Elementarzelle mit der elektrischen Masse (55, 55', 55'', 55''', 107, 115, 137, 157) verbunden ist.

**8.** Vorrichtung nach einem der vorangehenden Ansprüche, **dadurch gekennzeichnet, daß** die Auswerteeinrichtung (208) ein an zumindest einem Ausgang des Generators (204) und/oder an einem Eingang und/oder einem Ausgang der elektrischen Strecke einer Elementarzelle, insbesondere dem Eingang (141) der elektrischen Strecke der ersten Elementarzelle, anliegendes elektrisches und/oder elektromagnetisches Eingangssignal (143) mit einem nach einem zumindest teilweise Durchlaufen der Leitungsanordnung (202) an einem Ausgang (145) und/oder an einem Eingang zumindest einer Elementarzelle, insbesondere dem Ausgang der elektrischen Strecke der zweiten Elementarzelle und/oder dem Eingang (141) der elektrischen Strecke der ersten Elementarzelle, anliegenden elektrischen und/oder elektromagnetischen Ausgangssignal (147) vergleicht, wobei vorzugsweise die Auswerteeinrichtung (208) derart eingerichtet ist, daß zumindest eine Amplitude, insbesondere ein Betrag, zumindest eine Phase und/oder zumindest ein Phasenwinkel des zumindest einen elektrischen und/oder elektromagnetischen Eingangssignals (143) und/oder des zumindest einen elektrischen und/oder elektromagnetischen Ausgangssignals (147) erfaßbar ist bzw. sind.

**9.** Vorrichtung nach einem der vorangehenden Ansprüche, **dadurch gekennzeichnet, daß** die Auswerteeinrichtung (205, 206, 208) derart eingerichtet ist, daß zumindest eine Phasenänderung, insbesondere Phasenwinkeländerung, vorzugsweise zwischen Spannung und Strom, zwischen dem zumindest einen elektrischen und/oder elektromagnetischen Eingangssignal (143) und/oder dem zumindest einen elektrischen und/oder elektromagnetischen Ausgangssignal (147) erfaßbar ist bzw. sind, die Auswerteinrichtung zumindest eine Prozessoreinrichtung, wie einen Mikroprozessor, und/oder zumindest eine visuelle und/oder akustische Ausgabeeinrichtung, insbesondere zur Ausgabe des bestimmten Parameters des Mediums (69', 69'', 69''', 89, 89', 109, 117, 149) umfaßt, und/oder die Auswerteeinrichtung zumindest eine erste Auswerteeinheit (211) zur Bestimmung eines ersten Parameters des Mediums (69', 69'', 69''', 89, 89', 109, 117, 149), wie der Dichte des Mediums (69', 69'', 69''', 89, 89', 109, 117, 149), und zumindest eine zweite Auswerteeinheit (213) zur Bestimmung eines zweiten Parameters des Mediums (69', 69'', 69''', 89, 89', 109, 117, 149), wie einer Geschwindigkeit des Mediums (69', 69'', 69''', 89, 89', 109, 117, 149), umfaßt, wobei vorzugsweise zumindest eine von der Auswerteeinrichtung umfaßte dritte Auswerteeinheit (216) zur Bestimmung eines dritten Parameters des Mediums (69', 69'', 69''', 89, 89', 109, 117, 149), wie dem Mengendurchfluß und/oder Massendurchfluß des Mediums (69', 69'', 69''', 89, 89', 109, 117, 149) durch die Meßstrecke, insbesondere basierend auf dem ersten und dem zweiten Parameter des Mediums (69', 69'', 69''', 89, 89', 109, 117, 149), vorgesehen ist und/oder vorzugsweise zumindest eine von der Auswerteeinrichtung umfaßte Transformationseinheit (210) vorgesehen ist, wobei mittels der Transformationseinheit (210) das elektrische und/oder elektromagnetische Ausgangssignal (147) der Meßstrecke und/oder zumindest ein durch einen Vergleich des, insbesondere angepaßten, wie phasenverschobenen, elektrischen und/oder elektromagnetischen Eingangssignals (143) der Meßstrecke mit dem elektrischen und/oder elektromagnetischen Ausgangssignal (147) der Meßstrecke bestimmtes Vergleichssignal transformierbar, insbesondere fouriertransformierbar, ist, wobei insbesondere die erste Auswerteeinheit (211) und/oder die zweite Auswerteeinheit (213) mit der Transformationseinheit (210) in Wirkverbindung steht bzw. stehen, vorzugsweise die erste Auswerteeinheit (211) und/oder die zweite Auswerteeinheit (213) über die Transformationseinheit (210) mit der Meßstrecke verbindbar ist bzw. sind.

10. Vorrichtung nach einem der vorangehenden Ansprüche, **dadurch gekennzeichnet, daß** zumindest ein Eingang einer Elementarzelle und zumindest ein Ausgang zumindest einer weiteren Elementarzelle direkt miteinander verbunden sind, das Eingangssignal mittels zumindest einem Eingang (65''') und/oder zumindest einem Ausgang (67''') zumindest einer Elementarzelle einkoppelbar ist und das Ausgangssignal an dem gleichen Eingang (65''') und/oder Ausgang (67''') auskoppelbar ist, zumindest ein induktives Element zumindest einer ersten, zumindest einer zweiten und/oder zumindest einer dritten Elementarzelle zumindest einen Leiter, wie einen Draht (61, 61', 61'', 61''', 135, 155) und/oder zumindest eine Spule (105), umfaßt, und/oder die Elementarzellen entlang zumindest einer Längsrichtung und/oder zumindest entlang einer radialen Richtung der Leitungseinrichtung (133, 151) angeordnet sind.

11. Verfahren zur Bestimmung zumindest eines Parameters eines Mediums (69', 69'', 69''', 89, 89', 109, 117, 149), wobei der Parameter basierend auf zumindest einer Veränderung zumindest einer elektrischen Eigenschaft eines mit dem Medium (69', 69'', 69''', 89, 89', 109, 117, 149) wechselwirkenden kapazitiven Elementes (59, 59', 59'', 59''', 101, 119, 131, 153) zumindest einer Meßstrecke bestimmt wird, **dadurch gekennzeichnet, daß**
innerhalb der Meßstrecke zumindest eine harmonische elektromagnetische Schwingung nullter Ordnung und/oder mit negativer Ordnung selektiert bzw. erzeugt wird indem der Meßstrecke ein hochfrequentes Eingangssignal (143) zugeführt wird und zumindest eine Amplitude, zumindest eine Phasenwinkeländerung, und/oder zumindest ein Phasenwinkel, der Schwingung nach Durchlaufen der Meßstrecke bestimmt wird, wobei basierend auf der Amplitude und/oder dem Phasenwinkel der Parameter des Mediums (69', 69'', 69''', 89, 89', 109, 117, 149) bestimmt wird und das Eingangssignal (143) einer Leitungsanordnung umfassend zumindest eine Reihenschaltung von zumindest zwei Elementarzellen (57, 103) jeweils umfassend zumindest ein kapazitives Element (63, 101) und zumindest ein induktives Element (61, 105), wobei die kapazitiven Elemente (63, 101) in Reihe geschaltet sind und die induktiven Elemente (61, 105) die kapazitiven Elemente (63, 101) mit einer elektrischen Masse (55, 107) verbinden, zugeführt wird.

12. Verfahren nach Anspruch 11, **dadurch gekennzeichnet, daß** ein Betrag einer Amplitude und/oder ein Phasenwinkel zwischen Strom und Spannung der Schwingung bestimmt wird und/oder der Parameter des Mediums durch Vergleich, insbesondere zeitabhängigen Vergleich, eines, insbesondere angepaßten, wie phasenverschobenen, Eingangssignals (143) und eines Ausgangssignals (147) der Meßstrecke und/oder durch einen Vergleich, insbesondere zeitabhängigen Vergleich, zumindest einer elektromagnetischen Schwingung ohne Einfluß des Mediums (69', 69'', 69''', 89, 89', 109, 117, 149) auf die Meßstrecke und zumindest einer elektromagnetischen Schwingung mit dem Einfluß des Mediums (69', 69'', 69''', 89, 89', 109, 117, 149) auf die Meßstrecke, bestimmt wird, als Medium Stäube, insbesondere pneumatisch gefördert, vorzugsweise umfassend zumindest ein organisches Material, wie Kohlenstoff, zumindest ein anorganisches Material, wie Glas, Kunststoff und/oder Keramik, Flüssigkeiten, wie Öl, Wasser und/oder Körperflüssigkeiten, wie Blut, Speichel und/oder Schüttgut eingesetzt wird, das Ausgangssignal (147) der Meßstrecke und/oder ein durch den Vergleich des Eingangssignals (143) und des Ausgangssignals (147) der Meßstrecke gewonnenes Vergleichssignal, insbesondere ein eine Phasendifferenz repräsentierendes Signal, in zumindest ein transformiertes Signal transformiert, insbesondere fouriertransformiert, wird, basierend auf dem Ausgangssignal (147) der Meßstrecke, dem Eingangssignal (143) der Meßstrecke, dem Vergleichssignal und/oder dem transformierten Signal mittels zumindest einer ersten Auswerteeinheit (211) zumindest ein erster Parameter des Mediums (69', 69", 69"', 89, 89', 109, 117, 149) bestimmt wird, und/oder basierend auf dem Ausgangssignal (147) der Meßstrecke, dem Eingangssignal (143) der Meßstrecke, dem Vergleichssignal und/oder dem transformierten Signal mittels zumindest einer zweiten Auswerteeinheit (213) zumindest ein zweiter Parameter des Mediums (69', 69", 69"', 89, 89', 109, 117, 149) bestimmt wird.

13. Verfahren nach Anspruch 12, **dadurch gekennzeichnet, daß** mittels der ersten Auswerteeinheit (211) und/oder der zweiten Auswerteeinheit (213) das Ausgangssignal (147) der Meßstrecke, das Eingangssignal (143) der Meßstrecke, das Vergleichssignal und/oder das transformierte Signal, vorzugsweise mittels zumindest einer von der ersten Auswerteeinheit (211) umfaßten ersten Filtereinheit, wie einer Tiefpaßfiltereinheit, und/oder mittels zumindest einer von der zweiten Auswerteeinheit (213) umfaßten Filtereinheit, wie einer Hochpaßfiltereinheit, gefiltert wird, wobei vorzugsweise der erste Parameter durch Bestimmung zumindest eines Durchschnittswertes des Ausgangssignals der Meßstrecke, des Eingangssignals der Meßstrecke, des Vergleichssignals, des transformierten Signals, des gefilterten Ausgangssignals der Meßstrecke, des gefilterten Eingangssignals der Meßstrecke, des gefilterten Vergleichssignals und/oder des gefilterten transformierten Signals bestimmt wird und/oder der zweite Parameter durch Bestimmung zumindest eines Maximalwerts, insbesondere einer Maximalstelle einer Funktion und/oder einer Höhe eines Maximalwerts, und/oder einer Anzahl von Maximalwerten, insbesondere durch zumindest eine zeitliche Ableitung und/oder eine Ableitung nach einer Frequenz, des Ausgangssignals der Meßstrecke, des Eingangssignals der Meßstrecke, des Vergleichssignals, des transformierten Signals, des gefilterten Ausgangssignals der Meßstrekke, des gefilterten Eingangssignals der Meßstrecke, des gefilterten Vergleichssignals und/oder des gefilterten transformierten Signals bestimmt wird.

14. Verfahren nach Anspruch 12 oder 13, **dadurch gekennzeichnet, daß** basierend auf dem ersten Parameter und dem zweiten Parameter mittels zumindest einer dritten Auswerteeinheit (216) zumindest ein dritter Parameter des Mediums (69', 69", 69"', 89, 89', 109, 117, 149) bestimmt wird, wobei der dritte Parameter vorzugsweise durch Multiplikation und/oder Summation des ersten und des zweiten Parameters bestimmt wird.

15. Verfahren nach einem der Ansprüche 11 oder 12, **dadurch gekennzeichnet, daß** als Parameter des Mediums (69', 69", 69"', 89, 89', 109, 117, 149), insbesondere als erster Parameter, als zweiter Parameter und/oder als dritter Parameter, eine relative Dielektrizitätskonstante, eine relative Permeabilitätskonstante, eine Art des Mediums (69', 69", 69"', 89, 89', 109, 117, 149), eine Dichteverteilung und/oder die Dichte des Mediums (69', 69", 69"', 89, 89', 109, 117, 149), eine Verteilung des Mediums (69', 69", 69"', 89, 89', 109, 117, 149) in der Meßstrecke, eine Geschwindigkeit des Mediums (69', 69", 69"', 89, 89', 109, 117, 149) in der Meßstrecke, ein Mengendurchfluß und/oder Massendurchfluß des Mediums (69', 69", 69"', 89, 89', 109, 117, 149) durch die Meßstrecke und/oder ein Phasenzustand des Mediums (69', 69", 69"', 89, 89', 109, 117, 149), wie flüssig, fest und/oder gasförmig, bestimmt wird.

**Claims**

1. Device (200) comprising a measuring path having a line system (53, 53', 53", 53"', 73, 73', 95, 111, 202) which has at least two elementary cells (57, 103) situated along the measuring path, each elementary cell comprising an electrical path from an input (65, 65', 65", 65"', 85, 85', 97, 141) to an output (67, 67', 67", 67"', 87', 87", 99, 145), wherein the elementary cells (57, 103) each comprise a capacitive element (59, 59', 59", 59"', 101, 119, 131, 153), and the device includes a generator (204) for generating an electrical and/or electromagnetic signal (143), the electrical and/or electromagnetic signal (143) being supplied to the input (65, 65', 65", 65"', 85, 85', 97, 141) of a first elementary cell, and the output of the first elementary cell being connected to the input of a second elementary cell, and the capacitive element (59, 59', 59", 59"', 101, 119, 131, 153) of the respective elementary cell being situated in the electrical path of the first and second elementary cells, and in each case an inductive element (61, 61', 61", 61 "', 83, 105, 121, 135, 155) connects the electrical path of the first elementary cell and of the second elementary cell to an electrical ground (55, 55', 55", 55"', 107, 115, 137, 157), **characterized in that** the device is provided for determining a parameter of a medium (69', 69", 69"', 89, 89', 109, 117, 149), and is **characterized by** means for introducing the medium into the measuring path in such a way that the electrical properties of the capacitive element (59, 59', 59", 59"', 101, 119, 131, 153) may be modified by the medium (69', 69", 69"', 89, 89', 109, 117, 149), and by using the measuring path an electromagnetic field (71', 71", 123, 168) may be coupled into and/or coupled out of the medium (69', 69", 69"', 89, 89', 109, 117, 149) in places by introducing the electrical and/or electromagnetic signal (143) into the measuring path, and the device has an evaluation device (205, 206, 208, 210, 211, 213, 216) for analyzing an output signal (147) of the measuring path, and for determining the parameter of the medium (69', 69", 69"', 89, 89', 109, 117, 149) and in that a dimension, in particular a dimension along the measuring path, of at least one elementary cell (57, 103), preferably of all elementary cells, at least in places is smaller than a wavelength of the electrical and/or electromagnetic signal (143) and/or of the electromagnetic field (71', 71", 123, 168).

2. Device according to Claim 1, **characterized in that**
   the evaluation device is designed in such a way that as a parameter of the medium (69', 69", 69"', 89, 89', 109, 117, 149), a relative dielectric constant, a relative permeability constant, a type of medium (69', 69", 69"', 89, 89', 109, 117, 149), a density distribution and/or the density of the medium (69', 69", 69"', 89, 89', 109, 117, 149), a distribution of the medium (69', 69", 69"', 89, 89', 109, 117, 149) in the measuring path, a velocity of the medium (69', 69", 69"', 89, 89', 109, 117, 149) in the measuring path, a quantity flow and/or mass flow of the medium (69', 69", 69"', 89, 89', 109, 117, 149) through the measuring path, and/or a phase state of the medium (69', 69", 69"', 89, 89', 109, 117, 149), such as liquid, solid, and/or gaseous, may be determined, the device is designed in such a way that as the medium (69', 69", 69"', 89, 89', 109, 117, 149), a fluid, in particular a liquid and/or gas, and/or solid, in particular powdered and/or granular, medium (69', 69", 69"', 89, 89', 109, 117, 149), and/or a medium (69', 69", 69"', 89, 89', 109, 117, 149) comprising two phases, such as liquid-gaseous, liquid-liquid, liquid-solid, gaseous-solid, solid-solid, gaseous-gaseous, and/or liquid-gaseous-solid, may be introduced into the measuring path, and/or
   the medium (69', 69", 69"', 89, 89', 109, 117, 149) is movable relative to the line system (111, 202).

3. Device according to claims 1 or 2, **characterized in that**
   the measuring path as a means for introducing a medium includes at least one conducting unit for conducting the medium, such as a tube (113, 133, 151), channel, and/or conveyor belt, whereby the line system (111) may be situated, at least in places, in the region of the conducting unit, in particular on at least one surface thereof, in such a way that the electromagnetic field (123, 168) may be injected into the medium (117, 149), at least in places, wherein the conducting unit (113, 133, 151) preferably has, at least in places, a circular, oval, elliptical, triangular, square, rectangular, and/or polygonal cross section and/or segments of these cross sections, such as a circular segment and/or ellipsoidal segment, the conducting unit (113, 133, 151), at least in places, preferably includes a dielectric and diamagnetic material, in particular glass, a synthetic material such as plastic, ceramic, and/or an elastically and/or plastically deformable material,
   the device is preferably designed in such a way that the medium (109, 149) may be provided in the conducting unit (113, 133, 151) and/or may be conducted by the conducting unit (113, 133, 151), wherein in particular
   a conveying unit, such as a pump unit which operates by hydraulic, pneumatic, magnetic, and/or gravitational means is provided, via which the medium (109, 149) may be conducted through the conducting unit (113, 133, 151), and/or the conducting unit is preferably movable relative to the line system.

4. Device according to one of the preceding claims, **characterized in that** the device is designed in such a way that as an electrical and/or electromagnetic signal (143), at least one high-frequency signal, in particular a microwave signal and/or millimeter-wave signal, may be introduced into the measuring path, and/or high-frequency electromagnetic radiation, in particular microwave radiation and/or millimeter-wave radiation, may be coupled into the medium, and/or.
   at least one output of the generator (204) is connected to at least one input (65, 65', 65", 65"', 85, 85', 97, 141) of the electrical path of the first elementary cell, preferably by means of at least one coaxial cable, wherein preferably at least one conductor for the coaxial cable, in particular at least one external conductor, is connected, at least indirectly, to the electrical ground (55, 55', 55", 55"', 107, 115, 137, 157).

5. Device according to one of the preceding claims, **characterized in that** the line system (53, 53', 53", 53"', 73, 73', 95, 111, 202) includes at least one capacitive element comprising at least one first charging element and at least one second charging element, such as in the form of at least one pair of capacitor plates (59, 59', 59", 59"', 101, 119, 131, 153), wherein preferably the first and/or the second charging element, in particular at least one of the capacitor plates (119, 131, 153), may be situated, at least in places, on at least one side facing away from the medium (117, 149), in particular on a surface of the conducting unit (113, 133, 151), which preferably is curved and/or nonplanar, at least in places, and/or include(s), at least in places, an electrically conductive material such as copper, metal, steel, silver, at least one semiconductor material, and/or at least one polymeric material, wherein the device is preferably designed in such a way that the electromagnetic field (71', 71", 123, 168) is generated between the first and the second charging element (59', 59", 119, 153), wherein in particular the electromagnetic field (71', 71", 168) is generated between charging elements (59', 59", 119, 153) of different elementary cells, the device is preferably designed in such a way that the medium (117, 149) is situated between the first and the second charging element (119, 131, 153), and in particular the first and second charging elements (119, 131) are situated on opposite sides of the conveying unit (113, 133, 151), the first and second charging elements (119, 131) are preferably situated, at least in places, opposite from one another, in particular in a parallel and/or plane-parallel manner, and/or the first and second charging elements (131, 153) are preferably offset relative to another, in particular along at least one longitudinal axis of the conducting unit (133, 151).

6. Device according to one of the preceding claims, **characterized in that** the line system includes at least one third elementary cell, wherein the capacitive element of the third elementary cell is situated in the electrical path of the third elementary cell, at least one inductive element connects the electrical path of the third elementary cell to the electrical ground, and/or at least one input of the electrical path of the third elementary cell is connected to at least one output of the electrical path of the first elementary cell, and/or at least one output of the electrical path of the third elementary cell is connected to at least one input of the electrical path of the second elementary cell, wherein the device preferably includes a plurality of third elementary cells, wherein in particular an output of the electrical path of a first third elementary cell is connected to an input of the electrical path of at least one second third elementary cell.

7. Device according to one of the preceding claims, **characterized in that** at least two first, second, and/or third elementary cells and/or combinations of these elementary cells are periodically oriented toward one another, at least one input of the evaluation device (208) is connected to at least one output (67, 67', 67", 67''', 87', 87", 99, 145) of the electrical path of the second elementary cell, and/or to at least one output of the generator (204), in particular by means of at least one coaxial cable, wherein preferably at least one conductor for the coaxial cable, in particular at least one external conductor, is connected, at least indirectly, to the electrical ground (55, 55', 55", 55''', 107, 115, 137, 157), and/or at least one input of the evaluation device (208) is connected to the input (65, 65', 65", 65''', 85, 85', 97, 141) of the electrical path of the first elementary cell, in particular by means of at least one coaxial cable, wherein preferably at least one conductor for the coaxial cable, in particular at least one external conductor, is connected, at least indirectly, to the electrical ground (55, 55', 55", 55''', 107, 115, 137, 157), and/or the output of the electrical path of the second elementary cell is connected to the electrical ground (55, 55', 55", 55''', 107, 115, 137, 157).

8. Device according to one of the preceding claims, **characterized in that** the evaluation device (208) compares an electrical and/or electromagnetic input signal (143) which is present at at least one output of the generator (204) and/or at at least one input and/or one output of the electrical path of an elementary cell, in particular the input (141) of the electrical path of the first elementary cell, with an electrical and/or electromagnetic output signal (147) which is present at an output (145) and/or at an input of at least one elementary cell, in particular the output of the electrical path of the second elementary cell and/or the input (141) of the electrical path of the first elementary cell, after passing at least partially through the line system (202), wherein the evaluation device (208) is preferably designed in such a way that at least one amplitude, in particular an absolute value, at least one phase, and/or at least one phase angle, of the at least one electrical and/or electromagnetic input signal (143) and/or of the at least one electrical and/or electromagnetic output signal (147) may be detected.

9. Device according to one of the preceding claims, **characterized in that** the evaluation device (205, 206, 208) is designed in such a way that at least one phase change, in particular at least one phase angle change, preferably between the voltage and current, between the at least one electrical and/or electromagnetic input signal (143) and/or the at least one electrical and/or electromagnetic output signal (147) may be detected, the evaluation device includes at least one processor unit, such as a microprocessor, and/or at least one visual and/or acoustic output device, in particular for outputting the given parameter of the medium (69', 69", 69''', 89, 89', 109, 117, 149), and/or the evaluation device includes at least one first evaluation unit (211) for determining a first parameter of the medium (69', 69", 69''', 89, 89', 109, 117, 149), such as the density of the medium (69', 69", 69''', 89, 89', 109, 117, 149), and at least one second evaluation unit (213) for determining a second parameter of the medium (69', 69", 69''', 89, 89', 109, 117, 149), such as a velocity of the medium (69', 69", 69''', 89, 89', 109, 117, 149), wherein preferably at least one third evaluation unit (216) included in the evaluation device for determining a third parameter of the medium (69', 69", 69''', 89, 89', 109, 117, 149), such as the quantity flow and/or mass flow of the medium (69', 69", 69''', 89, 89', 109, 117, 149) through the measuring path, in particular based on the first and the second parameter of the medium (69', 69", 69"', 89, 89', 109, 117, 149) is provided and/or

preferably at least one transformation unit (210) included in the evaluation device is provided, wherein by means of the transformation unit (210) the electrical and/or electromagnetic output signal (147) of the measuring path and/or at least one comparative signal determined by a comparison of the electrical and/or electromagnetic input signal (143) of the measuring path which in particular is adjusted, for example phase-shifted, with the electrical and/or electromagnetic output signal (147) of the measuring path, may be transformed, in particular by Fourier transformation, wherein in particular the first evaluation unit (211) and/or the second evaluation unit (213) is/are operatively connected to the transformation unit (210), and preferably the first evaluation unit (211) and/or the second evaluation unit (213) may be connected to the measuring path via the transformation unit (210).

10. Device according to one of the preceding claims, **characterized in that** at least one input of an elementary cell and at least one output of at least one additional elementary cell are directly connected to one another,

the input signal may be injected via at least one input (65"') and/or at least one output (67"') of at least one elementary cell, and the output signal may be extracted at the same input (65"') and/or output (67"'),

at least one inductive element of at least one first, at least one second, and/or at least one third elementary cell includes at least one conductor, such as a wire (61, 61', 61", 61"', 135, 155), and/or at least one coil (105), and/or the elementary cells are associated with the conducting unit (133, 151) along at least one longitudinal direction and/or at least along one radial direction.

11. Method for determining at least one parameter of a medium (69', 69", 69"', 89, 89', 109, 117, 149), wherein the parameter is determined on the basis of at least one change in at least one electrical property of a capacitive element (59, 59', 59", 59"', 101, 119, 131, 153) of at least one measuring path which interacts with the medium (69', 69", 69"', 89, 89', 109, 117, 149), **characterized in that**

within the measuring path at least one zeroth-order and/or negative-order harmonic electromagnetic oscillation is selected or generated by supplying a high-frequency input signal (143) to the measuring path, and at least one amplitude, at least one phase angle change, and/or at least one phase angle of the oscillation after passing through the measuring path is determined, and the parameter of the medium (69', 69", 69"', 89, 89', 109, 117, 149) is determined based on the amplitude and/or the phase angle and

the input signal (143) is supplied to a line system comprising at least one series connection of at least two elementary cells (57, 103), each having at least one capacitive element (63, 101) and at least one inductive element (61, 105), wherein the capacitive elements (63, 101) are connected in series, and the inductive elements (61, 105) connect the capacitive elements (63, 101) to an electrical ground (55, 107).

12. Method according to Claim 11, **characterized in that**

an absolute value of an amplitude and/or a phase angle between the current and voltage of the oscillation is determined, and/or the parameter of the medium is determined by comparison, in particular time-based comparison, of an input signal (143) and an output signal (147) of the measuring path which in particular are adjusted, for example phase-shifted, and/or by comparison, in particular time-based comparison, of at least one electromagnetic oscillation without influence of the medium (69', 69", 69"', 89, 89', 109, 117, 149) on the measuring path, and at least one electromagnetic oscillation with the influence of the medium (69', 69", 69"', 89, 89', 109, 117, 149) on the measuring path,

dust-like materials, in particular pneumatically conveyed, preferably comprising at least one organic material such as carbon, at least one inorganic material such as glass, plastic, and/or ceramic, liquids such as oil, water, and/or bodily fluids such as blood and/or saliva, and/or a bulk material are used as medium,

the output signal (147) of the measuring path and/or a comparative signal obtained by comparing the input signal (143) and the output signal (147) of the measuring path, in particular a signal which represents a phase difference, is transformed into at least one transformed signal, in particular by Fourier transformation,

by use of at least one first evaluation unit (211), at least one first parameter of the medium (69', 69", 69"', 89, 89', 109, 117, 149) is determined on the basis of the output signal (147) of the measuring path, the input signal (143) of the measuring path, the comparative signal, and/or the transformed signal, and/or

by use of at least one second evaluation unit (213), at least one second parameter of the medium (69', 69", 69"', 89, 89', 109, 117, 149) is determined on the basis of the output signal (147) of the measuring path, the input signal (143) of the measuring path, the comparative signal, and/or the transformed signal.

13. Method according to Claim 12, **characterized in that**

by use of the first evaluation unit (211) and/or the second evaluation unit (213) the output signal (147) of the measuring path, the input signal (143) of the measuring path, the comparative signal, and/or the transformed signal is filtered, preferably using at least one first filter unit, such as a low-pass filter unit, included in the first evaluation unit (211), and/or using at least one filter unit, such as a high-pass filter unit, included in the second evaluation unit (213), wherein the first parameter is preferably ascertained by determining at least one average value of the output signal of the measuring path, the input signal of the measuring path, the comparative signal, the transformed signal, the filtered output signal of the measuring path, the filtered input signal of the measuring path, the filtered comparative signal, and/or the filtered transformed signal, and/or the second parameter is ascertained by determining at least one maximum value, in particular a maximum point of a function and/or a magnitude of a maximum value, and/or a number of maximum values, in particular by means of at least one time-based derivation and/or a derivation according to a frequency, of the output signal of the measuring path, the input signal of the measuring path, the comparative signal, the transformed signal, the filtered output signal of the measuring path, the filtered input signal of the measuring path, the filtered comparative signal, and/or the filtered transformed signal.

14. Method according to claim 12 or 13, **characterized in that** by use of at least one third evaluation unit (216) at least one third parameter of the medium (69', 69", 69''', 89, 89', 109, 117, 149) is determined on the basis of the first parameter and the second parameter, wherein the third parameter is preferably determined by multiplying and/or adding the first and second parameters.

15. Method according to one of Claims 11 or 12, **characterized in that** as a parameter of the medium (69', 69", 69''', 89, 89', 109, 117, 149), in particular as a first parameter, second parameter, and/or third parameter, a relative dielectric constant, a relative permeability constant, a type of medium (69', 69", 69''', 89, 89', 109, 117, 149), a density distribution and/or the density of the medium (69', 69", 69''', 89, 89', 109, 117, 149), a distribution of the medium (69', 69", 69''', 89, 89', 109, 117, 149) in the measuring path, a velocity of the medium (69', 69", 69''', 89, 89', 109, 117, 149) in the measuring path, a quantity flow and/or mass flow of the medium (69', 69", 69''', 89, 89', 109, 117, 149) through the measuring path, and/or a phase state of the medium (69', 69", 69''', 89, 89', 109, 117, 149), such as liquid, solid, and/or gaseous, is determined.

**Revendications**

1. Dispositif (200) comprenant un trajet de mesure qui présente un arrangement de conduite (53, 53', 53", 53''', 73, 73', 95, 111, 202) comprenant au moins deux cellules élémentaires (57, 103) disposées le long du trajet de mesure qui comportent chacune un trajet électrique d'une entrée (65, 65', 65", 65''', 85, 85', 97, 141) à une sortie (67, 67', 67", 67''', 87', 87", 99, 145), les cellules élémentaires (57, 103) comportant chacune un élément capacitif (59, 59', 59", 59''', 101, 119, 131, 153) et le dispositif comportant un générateur (204) pour produire un signal (143) électrique et/ou électromagnétique, le signal (143) électrique et/ou électromagnétique étant appliqué à l'entrée (65, 65', 65", 65''', 85, 85', 97, 141) d'une première cellule élémentaire et la sortie de la première cellule élémentaire étant reliée à l'entrée d'une seconde cellule élémentaire, et l'élément capacitif (59, 59', 59", 59''', 101, 119, 131, 153) de chaque cellule élémentaire étant disposé dans le trajet électrique de la première et seconde cellule élémentaire et à chaque fois un élément inductif (61, 61', 61", 61''', 83, 105, 121, 135, 155) reliant le trajet électrique de la première cellule élémentaire et de la seconde cellule élémentaire à une masse électrique (55, 55', 55", 55''', 107, 115, 137, 157), **caractérisé en ce que** le dispositif pour déterminer un paramètre d'un milieu (69', 69", 69''', 89, 89', 109, 117, 149) est équipé de et **caractérisé par** des moyens d'apport du milieu dans le trajet de mesure de telle manière que les propriétés électriques de l'élément capacitif (59, 59', 59", 59''', 101, 119, 131, 153) soient modifiables par le milieu (69', 69", 69''', 89, 89', 109, 117, 149) et un champ électromagnétique (71', 71", 123, 168) soit injecté et/ou sorti par endroits dans le milieu (69', 69", 69''', 89, 89', 109, 117, 149) à l'aide du trajet de mesure par introduction du signal électrique et/ou électromagnétique (143) dans le trajet de mesure, et le dispositif présente un dispositif d'évaluation (205, 206, 208, 210, 211, 213, 216) qui sert à l'analyse d'un signal de sortie (147) du trajet de mesure et à la détermination du paramètre du milieu (69', 69", 69''', 89, 89', 109, 117, 149), et en ce qu'une dimension, en particulier une dimension le long du trajet de mesure, d'une cellule élémentaire (57, 103) au moins, de préférence de toutes les cellules élémentaires, est par endroits au moins plus petite qu'une longueur d'onde du signal électrique et/ou électromagnétique (143) et/ou du champ électromagnétique (71', 71", 123, 168).

2. Dispositif selon la revendication 1, **caractérisé en ce que** le dispositif d'évaluation est aménagé de telle manière qu'une constante diélectrique relative, une constante de perméabilité relative, un type de milieu (69', 69", 69''', 89, 89', 109, 117, 149), une répartition de densité et/ou la densité du milieu (69', 69", 69''', 89, 89', 109, 117, 149), une distribution du milieu (69', 69", 69''', 89, 89', 109, 117, 149) dans le trajet de mesure, une vitesse du milieu (69', 69", 69''', 89, 89', 109, 117, 149) dans le trajet de mesure, un débit de prélèvement et/ou un débit de masse du milieu (69', 69", 69''', 89, 89', 109, 117, 149), à travers le trajet de mesure et/ou un état de phase du milieu (69', 69", 69''', 89, 89', 109, 117, 149) tel que liquide, solide et/ou gazeux, peut ou peuvent être déterminés en tant que paramètre du milieu (69', 69", 69"', 89, 89', 109, 117, 149), le dispositif est réalisé de telle manière qu'un milieu (69', 69", 69"', 89, 89', 109, 117, 149) fluide, en particulier liquide et/ou gazeux, et/ou solide, en particulier poudreux et/ou granulé, et/ou un milieu (69', 69", 69"', 89, 89', 109, 117, 149) comprenant deux phases telles que liquide-gazeuse, liquide-liquide, liquide-solide, gazeuse-solide, solide-solide, gazeuse-gazeuse et/ou liquide-gazeuse-solide dans le trajet de mesure puisse être apporté en tant que milieu (69', 69", 69"', 89, 89', 109, 117, 149) et/ou le milieu (69', 69", 69"', 89, 89', 109, 117, 149) peut être déplacé par rapport à l'arrangement de conduite (111, 202).

3. Dispositif selon la revendication 1 ou 2, **caractérisé en ce que** le trajet de mesure comporte, en tant que moyen pour l'apport du milieu, au moins un dispositif de conduite pour diriger le milieu tel qu'un tube (113, 133, 151), une rigole et/ou une bande transporteuse, l'arrangement de conduite (111) pouvant être disposé par endroits au moins dans la zone du dispositif de conduite, en particulier au moins une surface de celui-ci, de telle manière que par endroits au moins le champ électromagnétique (123, 168) puisse être injecté dans le milieu (117, 149), le dispositif de conduite (113, 133, 151) présentant de préférence, par endroits au moins, une section transversale ronde, ovale, elliptique, triangulaire, carrée, rectangulaire et/ou polygonale et/ou des parties de ces sections transversales telles qu'un segment de cercle et/ou un segment elliptique,
De préférence, le dispositif de conduite (113, 133, 151) comporte par endroits au moins un matériau diélectrique et diamagnétique, en particulier du verre, une matière synthétique telle que du plastique, de la céramique et/ou un matériau élastique et/ou déformable plastiquement, le dispositif est réalisé de préférence de telle manière que le milieu (109, 149) puisse être disposé dans le dispositif de conduite (113, 133, 151) et/ou puisse être guidé à travers le dispositif de conduite (113, 133, 151), en particulier un dispositif de transport étant prévu tel qu'un dispositif de pompage hydraulique, pneumatique, magnétique et/ou utilisant la gravitation, à l'aide duquel le milieu (109, 149) peut être guidé à travers le dispositif de conduite (113, 133, 151), et/ou le dispositif de conduite étant de préférence mobile par rapport à l'arrangement de conduite.

4. Dispositif selon l'une quelconque des revendications précédentes, **caractérisé en ce que** le dispositif est réalisé de telle manière qu'en tant que signal électrique et/ou électromagnétique (143), au moins un signal haute fréquence, en particulier un signal à microondes et/ou un signal à ondes millimétriques, puisse être introduit dans le trajet de mesure et/ou un rayonnement électromagnétique à haute fréquence, en particulier un rayonnement à microondes et/ou à ondes millimétriques, puisse être injecté dans le milieu et/ou au moins une sortie du générateur (204) est reliée à au moins une entrée (65, 65', 65", 65"', 85, 85', 97, 141) du trajet électrique de la première cellule élémentaire, de préférence à l'aide d'au moins un câble coaxial, au moins un conducteur du câble coaxial, en particulier au moins un conducteur extérieur, étant de préférence relié au moins indirectement à la masse électrique (55, 55', 55", 55"', 107, 115, 137, 157).

5. Dispositif selon l'une quelconque des revendications précédentes, **caractérisé en ce que** l'arrangement de conduite (53, 53', 53", 53"', 73, 73', 95, 111, 202) comporte au moins un élément capacitif comprenant au moins un premier élément de charge et au moins un second élément de charge, tels que sous la forme d'au moins une paire de plaques de condensateur (59, 59', 59", 59"', 101, 119, 131, 153), de préférence, le premier et/ou le second élément de charge, en particulier l'une au moins des plaques de condensateur, (119, 131, 153) pouvant être disposés au moins par endroits d'un côté éloigné du milieu (117, 149) au moins, en particulier sur une surface du dispositif de conduite (113, 133, 151), de préférence courbée et/ou non plane, au moins par endroits, et/ou comportent par endroits au moins un matériau électroconducteur, tel que du cuivre, du métal, de l'acier, de l'argent, au moins un matériau semiconducteur et/ou au moins un matériau polymère, le dispositif étant de préférence réalisé de telle manière que le champ électromagnétique (71', 71", 123, 168) soit généré entre le premier et le second élément de charge (59', 59", 119, 153), le champ électromagnétique (71', 71", 168) étant en particulier généré entre des éléments de charge (59', 59", 119, 153) de cellules élémentaires différentes, le dispositif étant de préférence réalisé de telle manière que le milieu (117, 149) soit disposé entre le premier et le second élément de charge (119, 131, 153), le premier et le second élément de charge (119, 131) étant en particulier disposés sur des côtés opposés l'un à l'autre du dispositif de conduite (113, 133, 151), le premier et le second élément de charge (119, 131) étant de préférence disposés par endroits au moins de manière opposée l'un à l'autre, en particulier parallèle et/ou plane et parallèle, et/ou le premier et le second élément de charge (131, 153) étant de préférence disposés en déport mutuel, en particulier le long d'au moins un axe longitudinal du dispositif de conduite (133, 151).

6. Dispositif selon l'une quelconque des revendications précédentes, **caractérisé en ce que** l'arrangement de conduite comporte au moins une troisième cellule élémentaire, l'élément capacitif de la troisième cellule élémentaire étant disposé dans le trajet électrique de la troisième cellule élémentaire, au moins un élément inductif reliant le trajet électrique de la troisième cellule élémentaire à la masse électrique et/ou au moins une entrée du trajet électrique de la troisième cellule élémentaire étant reliée à au moins une sortie du trajet électrique de la première cellule élémentaire et/ou au moins une sortie du trajet électrique de la troisième cellule élémentaire étant reliée à au moins une entrée du trajet électrique de la seconde cellule élémentaire, le dispositif comportant de préférence une pluralité de troisièmes cellules élémentaires, en particulier une sortie du trajet électrique d'une première troisième cellule élémentaire étant reliée à une entrée du trajet électrique d'au moins une seconde troisième cellule élémentaire.

7. Dispositif selon l'une quelconque des revendications précédentes, **caractérisé en ce qu'**au moins deux premières, deuxièmes et/ou troisièmes cellules élémentaires et/ou combinaisons de ces cellules élémentaires sont disposées périodiquement les unes par rapport aux autres, au moins une entrée du dispositif d'évaluation (208) est reliée à au moins une sortie (67, 67', 67", 67''', 87', 87", 99, 145) du trajet électrique de la seconde cellule élémentaire et/ou à au moins une sortie du générateur (204), en particulier à l'aide d'au moins un câble coaxial, au moins un conducteur du câble coaxial, en particulier au moins un conducteur extérieur, étant de préférence relié au moins indirectement à la masse électrique (55, 55', 55", 55''', 107, 115, 137, 157) et/ou au moins une entrée du dispositif d'évaluation (208) étant reliée à l'entrée (65, 65', 65", 65''', 85, 85', 97, 141) du trajet électrique de la première cellule élémentaire, en particulier à l'aide d'au moins un câble coaxial, au moins un conducteur du câble coaxial, en particulier au moins un conducteur extérieur, étant de préférence relié au moins indirectement à la masse électrique (55, 55', 55", 55''', 107, 115, 137, 157) et/ou la sortie du trajet électrique de la seconde cellule élémentaire étant reliée à la masse électrique (55, 55', 55", 55''', 107, 115, 137, 157).

8. Dispositif selon l'une quelconque des revendications précédentes, **caractérisé en ce que** le dispositif d'évaluation (208) compare un signal d'entrée (143) électrique et/ou électromagnétique appliqué à au moins une sortie du générateur (204) et/ou à une entrée et/ou à une sortie du trajet électrique d'une cellule élémentaire, en particulier l'entrée (141) du trajet électrique de la première cellule élémentaire, à un signal de sortie (147) électrique et/ou électromagnétique appliqué après un passage au moins partiel de l'arrangement de conduite (202) à une sortie (145) et/ou à une entrée d'au moins une cellule élémentaire, en particulier la sortie du trajet électrique de la seconde cellule élémentaire et/ou l'entrée (141) du trajet électrique de la première cellule élémentaire, le dispositif d'évaluation (208) étant de préférence aménagé de telle manière qu'au moins une amplitude, en particulier une grandeur, au moins une phase et/ou au moins un angle de phase d'au moins un signal d'entrée électrique et/ou électromagnétique (143) et/ou d'au moins un signal de sortie (147) électrique et/ou électromagnétique puisse être détecté.

9. Dispositif selon l'une quelconque des revendications précédentes, **caractérisé en ce que** le dispositif d'évaluation (205, 206, 208) est aménagé de telle manière qu'au moins une modification de phase, en particulier une modification d'angle de phase, de préférence entre la tension et le courant, puisse être détectée entre l'au moins un signal d'entrée (143) électrique et/ou électromagnétique et/ou le signal de sortie (147) électrique et/ou électromagnétique, le dispositif d'évaluation comporte au moins un dispositif processeur tel qu'un microprocesseur et/ou au moins un dispositif de sortie visuel et/ou acoustique, en particulier pour la sortie du paramètre déterminé du milieu (69', 69", 69''', 89, 89', 109, 117, 149), et/ou le dispositif d'évaluation comporte au moins une première unité d'évaluation (211) pour la détermination d'un premier paramètre du milieu (69', 69", 69''', 89, 89', 109, 117, 149) tel que la densité du milieu (69', 69", 69''', 89, 89', 109, 117, 149) et au moins une seconde unité d'évaluation (213) pour déterminer un deuxième paramètre du milieu (69', 69", 69''', 89, 89', 109, 117, 149) tel qu'une vitesse du milieu (69', 69", 69''', 89, 89', 109, 117, 149), au moins une troisième unité d'évaluation (216) contenue dans le dispositif d'évaluation étant de préférence prévue pour déterminer un troisième paramètre du milieu (69', 69", 69''', 89, 89', 109, 117, 149) tel que le débit de prélèvement et/ou le débit de masse du milieu (69', 69", 69''', 89, 89', 109, 117, 149) à travers le trajet de mesure, en particulier sur la base du premier et du deuxième paramètre du milieu (69', 69", 69''', 89, 89', 109, 117, 149) et/ou de préférence au moins une unité de transformation (210) contenue dans le dispositif d'évaluation est prévue, le signal de sortie (147) électrique et/ou électromagnétique du trajet de mesure et/ou au moins un signal de comparaison déterminé par une comparaison du signal d'entrée (143) électrique et/ou électromagnétique, en particulier adapté, tel que déphasé, du trajet de mesure au signal de sortie électrique et/ou électromagnétique (147) du trajet de mesure pouvant être transformé, en particulier pouvant subir une transformation de Fourier, à l'aide de l'unité de transformation (210), en particulier la première unité d'évaluation (211) et/ou la seconde unité d'évaluation (213) étant en liaison active avec l'unité de transformation (210), de préférence la première unité d'évaluation (211) et/ou la seconde unité d'évaluation (213) pouvant être reliées par l'intermédiaire de l'unité de transformation (210) au trajet de mesure.

10. Dispositif selon l'une quelconque des revendications précédentes, **caractérisé en ce qu'**au moins une entrée d'une cellule élémentaire et au moins une sortie d'au moins une autre cellule élémentaire sont reliées directement l'une à l'autre, le signal d'entrée peut être couplé à l'aide d'au moins une entrée (65''') et/ou au moins une sortie (67''') d'au moins d'une cellule élémentaire et le signal de sortie peut être découplé à la même entrée (65''') et/ou sortie (67'''), au moins un élément inductif d'au moins une première, au moins une deuxième et/ou au moins une troisième cellule élémentaire comporte au moins un conducteur, tel qu'un fil (61, 61', 61", 61"', 135, 155) et/ou au moins une bobine (105), et/ou les cellules élémentaires sont disposées le long d'au moins une direction longitudinale et/ou au moins le long d'une direction radiale du dispositif de conduite (133, 151).

11. Procédé de détermination d'au moins un paramètre d'un milieu (69', 69", 69"', 89, 89', 109, 117, 149), le paramètre étant déterminé sur la base d'au moins une modification d'au moins une propriété électrique d'un élément (59, 59', 59", 59"', 101, 119, 131, 153) capacitif interagissant avec le milieu (69', 69", 69"', 89, 89', 109, 117, 149) d'au moins un trajet de mesure, **caractérisé en ce qu'**au moins une oscillation électromagnétique harmonique d'ordre zéro et/ou avec un ordre négatif est sélectionnée ou générée à l'intérieur du trajet de mesure, en transmettant un signal d'entrée à haute fréquence (143) au trajet de mesure et au moins une amplitude, au moins une modification d'angle de phase, et/ou au moins un angle de phase, de l'oscillation est déterminé après le passage du trajet de mesure, le paramètre du milieu (69', 69", 69"', 89, 89', 109, 117, 149) étant déterminé sur la base de l'amplitude et/ou de l'angle de phase et le signal d'entrée (143) étant transmis à un arrangement de conduite comprenant au moins un montage en série d'au moins deux cellules élémentaires (57, 103) comportant chacune au moins un élément capacitif (63, 101) et au moins un élément inductif (61, 105), les éléments capacitifs (63, 101) étant montés en série et les éléments inductifs (61, 105) reliant les éléments capacitifs (63, 101) à une masse électrique (55, 107).

12. Procédé selon la revendication 11, **caractérisé en ce qu'**une grandeur d'une amplitude et/ou un angle de phase est déterminé entre le courant et la tension de l'oscillation et/ou le paramètre du milieu est déterminé par comparaison, en particulier comparaison dépendante du temps d'un signal d'entrée (143), en particulier adapté, tel que déphasé et d'un signal de sortie (147) du trajet de mesure et/ou par comparaison, en particulier comparaison dépendante du temps, d'au moins une oscillation électromagnétique sans influence du milieu (69', 69", 69"', 89, 89', 109, 117, 149) sur le trajet de mesure et au moins une oscillation électromagnétique avec l'influence du milieu (69', 69", 69"', 89, 89', 109, 117, 149) sur le trajet de mesure, de la poudre est utilisée en tant que milieu, en particulier transportée pneumatiquement, comportant de préférence au moins un matériau organique tel que du carbone, au moins un matériau anorganique tel que du verre, du plastique et/ou de la céramique, des liquides tels que de l'huile, de l'eau et/ou des liquides corporels tels que du sang, de la salive et/ou des matières en vrac, le signal de sortie (147) du trajet de mesure et/ou un signal de comparaison obtenu par la comparaison du signal d'entrée (143) et du signal de sortie (147) du trajet de mesure, en particulier un signal représentant une différence de phase est transformé en au moins un signal transformé, en particulier subit une transformation de Fourier, au moins un premier paramètre du milieu (69', 69", 69"', 89, 89', 109, 117, 149) est déterminé sur la base du signal de sortie (147) du trajet de mesure, du signal d'entrée (143) du trajet de mesure, du signal de comparaison et/ou du signal transformé à l'aide d'au moins une première unité d'évaluation (211), et/ou au moins un deuxième paramètre du milieu (69', 69", 69"', 89, 89', 109, 117, 149) est déterminé sur la base du signal de sortie (147) du trajet de mesure, du signal d'entrée (143) du trajet de mesure, du signal de comparaison et/ou du signal transformé à l'aide d'au moins une seconde unité d'évaluation (213).

13. Procédé selon la revendication 12, **caractérisé en ce qu'**à l'aide de la première unité d'évaluation (211) et/ou de la seconde unité d'évaluation (213), le signal de sortie (147) du trajet de mesure, le signal d'entrée (143) du trajet de mesure, le signal de comparaison et/ou le signal transformé est filtré, de préférence à l'aide d'au moins une première unité de filtre contenue dans la première unité d'évaluation, (211) telle qu'une unité de filtre passe-bas, et/ou à l'aide d'au moins une unité de filtre contenue dans la seconde unité d'évaluation (213), telle qu'une unité de filtre passe-haut, le premier paramètre étant de préférence déterminé par détermination d'au moins une valeur moyenne du signal de sortie du trajet de mesure, du signal d'entrée du trajet de mesure, du signal de comparaison, du signal transformé, du signal de sortie filtré du trajet de mesure, du signal d'entrée filtré du trajet de mesure, du signal de comparaison filtré et/ou du signal transformé filtré et/ou le deuxième paramètre est déterminé par détermination d'au moins une valeur maximale, en particulier d'un point maximal d'une fonction et/ou d'une hauteur d'une valeur maximale, et/ou d'un nombre de valeurs maximales, en particulier par au moins une dérivation temporelle et/ou une dérivation selon une fréquence, du signal de sortie du trajet de mesure, du signal d'entrée du trajet de mesure, du signal de comparaison, du signal transformé, du signal de sortie filtré du trajet de mesure, du signal d'entrée filtré du trajet de mesure, du signal de comparaison filtré et/ou du signal transformé filtré.

14. Procédé selon la revendication 12 ou 13, **caractérisé en ce que** sur la base du premier paramètre et du deuxième paramètre, au moins un troisième paramètre du milieu (69', 69", 69"', 89, 89', 109, 117, 149) est déterminé à l'aide d'au moins une troisième unité d'évaluation (216), le troisième paramètre étant de préférence déterminé par multiplication et/ou addition du premier et du deuxième paramètre.

15. Procédé selon l'une quelconque des revendications 11 ou 12, **caractérisé en ce qu'**une constante diélectrique relative, une constante de perméabilité relative, un type de milieu (69', 69", 69''', 89, 89', 109, 117, 149), une répartition de densité et/ou la densité du milieu (69', 69", 69''', 89, 89', 109, 117, 149), une distribution du milieu (69', 69", 69''', 89, 89', 109, 117, 149) dans le trajet de mesure, une vitesse du milieu (69', 69", 69''', 89, 89', 109, 117, 149) dans le trajet de mesure, un débit de prélèvement et/ou débit de masse du milieu (69', 69" , 69''', 89, 89', 109, 117, 149) à travers le trajet de mesure et/ou un état de phase du milieu (69', 69", 69''', 89, 89', 109, 117, 149) tel que liquide, solide et/ou gazeux est déterminé en tant que paramètre du milieu (69', 69", 69''', 89, 89', 109, 117, 149), en particulier en tant que premier paramètre, en tant que deuxième paramètre et/ou en tant que troisième paramètre.

Fig. 1 a)

Fig. 1 b)

Fig. 2

Fig. 3

Fig. 4

Fig. 5

Fig. 6

Fig. 7

Fig. 8

Fig. 9 a)

Figur 9 b)

Fig. 10a

Fig. 10b

35b

37b    41b    45b    49    39b

51

47b    33b

43b

Fig. 11

57    53

65    67

55    61    63    59

Fig. 12

53'    53"

59'    55"

59"

61"

65'    69'    55'    67'    65"    69"    55"    67"

71'    59'    59"

63'    61'    61"    63"    71"

Fig. 13a)    Fig. 13 b)

Fig. 14

Fig. 15 a)

Fig. 15 b)

97    103    101    99    95
109
107 →    105

Fig. 16

**Transmission Amplitude/ dB**

-3  -2  -1  h =0   1   2   3

inverse
Leitung

**Frequenz / Ghz**

Fig. 17

Fig. 18 a)

Fig. 18 b)

131

149

3

137 →

135

139

133

131

135

131

137

141

139

137

143 → Eingespeistes HF Signal

145

147

Transmittiertes HF Signal

137

Fig. 19

Fig. 20

Fig. 21

Fig. 22

Fig. 23

161 163

157

151 153 153 153

155 155 155

165

159 159

Fig. 24

143 167 157 151 147 167

149

166

Fig. 25

Fig. 26a)   Fig 26b)

Fig. 27

200

203

202

204  205 206  208

φ(t)

210

Φ(jΩ)

211  213

Φ

jΩ

Φ

jΩ

212  214

ρ(t)  v(t)

216

m(t)

m

t

Fig. 28

v  p  X

Y

u

rechteckförmig

I

t

v

u

Sinusförmig

I

t

Fig 29a)  Fig 29b)

Fig. 30a)

Fig. 30b)

Fig. 31

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4444248 A1
- EP 0717269 A2
- US 20060066422 A1
- GB 2214640 A

### In der Beschreibung aufgeführte Nicht-Patentliteratur

- Applictaions of Infinite Wavelenghts Phenomenon. *Proceedings of the 36th European Conference,* September 2006
- Composite Right/Left-Handed Transmission Lines Based on Conductor-Baded Coplanar Strips. *IEICE Trans. Electron.,* September 2006, vol. E89-C (9